(19) Europäisches Patentamt
European Patent Office
Office européen des brevets

(11) EP 2 815 649 A1

(12) # EUROPEAN PATENT APPLICATION

(43) Date of publication:
**24.12.2014 Bulletin 2014/52**

(21) Application number: **13172462.7**

(22) Date of filing: **18.06.2013**

(51) Int Cl.:
***A01N 37/50*** *(2006.01)* ***A01N 43/56*** *(2006.01)*
***A01P 3/00*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **BASF SE**
**67056 Ludwigshafen (DE)**

(72) Inventors:
- **Rohrer, Sebastian Georgios**
  **68775 Ketsch (DE)**
- **Grammenos, Wassilios**
  **67071 Ludwigshafen (DE)**

(54) **Fungicidal mixtures II comprising strobilurin-type fungicides**

(57) The present invention relates to binary and ternary fungicidal mixtures, comprising at least one fungicidally active compound I and at least one active compound or biopesticide II and optionally a further active compound or biopesticide III as defined in the description, and to compositions comprising these mixtures.

EP 2 815 649 A1

## Description

The present invention relates to mixtures comprising, as active components

1) at least one compound of formula I

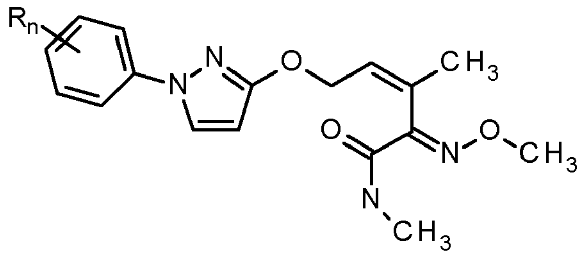

I,

wherein
n is an integer and is 0, 1, 2, 3, 4 or 5; and
R , which may be the same or different to any other R, is halogen, hydroxyl, carboxyl, $C_1$-$C_4$-alkyl, $C_2$-$C_4$-alkenyl, $C_2$-$C_8$-alkynyl, $C_1$-$C_4$-haloalkyl, $C_1$-$C_4$-alkoxy, $C_1$-$C_4$-halo-alkoxy, $C_1$-$C_4$-alkylsulfanyl, $C_1$-$C_4$-haloalkylsulfanyl, $C_1$-$C_6$-alkoxyimino-$C_1$-$C_4$-alkyl, $C_2$-$C_6$-alkenyloxyimino-$C_1$-$C_4$-alkyl , $C_2$-$C_6$-alkynyloxyimino-$C_1$-$C_4$-alkyl, $C_1$-$C_4$-alkoxyimino-$C_1$-$C_4$-alkyl, $C_1$-$C_6$-alkoxyimino-, $C_2$-$C_6$-alkenyloxyimino-, $C_2$-$C_6$-alkynyloxyimino-, $C_2$-$C_6$-haloalkenyloxyimino-, $C_3$-$C_6$-cycloalkyl, $C_3$-$C_6$-cycloalkenyl, phenyl or a 5-membered saturated, partially unsaturated or aromatic heterocyclyl which, in addition to carbon atoms, contains one to three heteroatoms from the group consisting of N, O and S as ring members; wherein the aforementioned cyclic groups R are attached via a direct bond, an oxygen or sulfur atom and where the aliphatic or cyclic groups $R^c$ for their part may carry 1, 2, 3 or up to the maximum possible number of identical or different groups $R^a$:
$R^a$ , which may be the same or different to any other $R^a$, is halogen, $C_1$-$C_4$-alkyl or $C_1$-$C_4$-haloalkyl;
and
2) at least one active compound or biopesticide II selected from groups A) to O):

A) Respiration inhibitors selected from

- Inhibitors of complex III at $Q_o$ site: azoxystrobin (II-1), coumethoxystrobin, coumoxystrobin, dimoxystrobin (11-2), enestroburin, fenaminstrobin, fenoxy-strobin/flufenoxystrobin, fluoxastrobin (II-3), kresoxim-methyl (II-4), metominostrobin, orysastrobin (II-5), picoxystrobin (11-6), pyraclostrobin (II-7), pyrametostrobin, pyraoxystrobin, trifloxystrobin (II-8), 2-[2-(2,5-dimethyl-phenoxymethyl)-phenyl]-3-methoxy-acrylic acid methyl ester and 2-(2-(3-(2,6-dichlorophenyl)-1-methyl-allylidene-aminooxymethyl)-phenyl)-2-methoxyimino-N-methyl-acetamide, pyribencarb, triclopyricarb/chlorodincarb, famoxadone, fenamidone;
- inhibitors of complex III at $Q_i$ site: cyazofamid, amisulbrom, [(3S,6S,7R,8R)-8-benzyl-3-[(3-acetoxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(acetoxymethoxy)-4-methoxy-pyridine-2-carbonyl]amino]-6-methyl-4,9-dioxo-1,5-dioxonan-7-yl] 2-methylpropanoate, [(3S,6S,7R,8R)-8-benzyl-3-[(3-isobutoxycarbonyloxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(1,3-benzodioxol-5-ylmethoxy)-4-methoxy-pyridine-2-carbonyl]amino]-6-methyl-4,9-dioxo-1,5-dioxonan-7-yl] 2-methylpropanoate; (3S,6S,7R,8R)-3-[[(3-hydroxy-4-methoxy-2-pyridinyl)carbonyl]amino]-6-methyl-4,9-dioxo-8-(phenylmethyl)-1,5-dioxonan-7-yl 2-methylpropanoate
- inhibitors of complex II: benodanil, benzovindiflupyr (11-9), bixafen (II-10), boscalid (II-11), carboxin, fenfuram, fluopyram (II-12), flutolanil, fluxapyroxad (II-13), furametpyr, isofetamid, isopyrazam (II-14), mepronil, oxycarboxin, penflufen (II-15), penthiopyrad (II-16), sedaxane (II-17), tecloftalam, thifluzamide, N-(4'-trifluoromethylthiobiphenyl-2-yl)-3-difluoromethyl-1-methyl-1 H-pyrazole-4-carboxamide, N-(2-(1,3,3-trimethyl-butyl)-phenyl)-1,3-dimethyl-5-fluoro-1 H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethyl-indan-4-yl)pyrazole-4-carboxamide, 3-(trifluoromethyl)-1,5-dimethyl-N-(1,1,3-trimethylindan-4-yl)pyrazole-4-carboxamide, 1,3,5-trimethyl-N-(1,1,3-trimethylindan-4-yl)pyrazole-4-carboxamide, N-(7-fluoro-1,1,3-trimethyl-indan-4-yl)-1,3-dimethyl-pyrazole-4-carboxamide, N-[2-(2,4-dichlorophenyl)-2-methoxy-1-methyl-ethyl]-3-(difluoromethyl)-1-methyl-pyrazole-4-carboxamide;

- other respiration inhibitors: diflumetorim, (5,8-difluoroquinazolin-4-yl)-{2-[2-fluoro-4-(4-trifluoromethylpyridin-2-yloxy)-phenyl]-ethyl}-amine; binapacryl, dinobuton, dinocap, fluazinam (I-18); ferimzone; fentin salts such as fentin-acetate, fentin chloride or fentin hydroxide; ametoctradin (I-19); and silthiofam;

B) Sterol biosynthesis inhibitors (SBI fungicides) selected from

- C14 demethylase inhibitors (DMI fungicides): azaconazole, bitertanol, bromuconazole, cyproconazole (I-20), difenoconazole (I-21), diniconazole, diniconazole-M, epoxiconazole (I-22), fenbuconazole, fluquinconazole (I-23), flusilazole, flutriafol, hexaconazole, imibenconazole, ipconazole, metconazole (I-24), myclobutanil, oxpoconazole, paclobutrazole, penconazole, propiconazole (I-25), prothioconazole (I-26), simeconazole, tebuconazole (I-27), tetraconazole, triadimefon, triadimenol, triticonazole, uniconazole, 1-[*rel*-(2*S*;3*R*)-3-(2-chlorophenyl)-2-(2,4-difluorophenyl)-oxiranylmethyl]-5-thiocyanato-1 H-[1,2,4]triazolo (I-28), 2-[*rel*-(2*S*;3*R*)-3-(2-chlorophenyl)-2-(2,4-di-fluorophenyl)-oxiranylmethyl]-2H-[1,2,4]triazole-3-thiol (I-29), 2-[2-chloro-4-(4-chlorophenoxy)phenyl]-1-(1,2,4-triazol-1-yl)pentan-2-ol, 1-[4-(4-chlorophenoxy)-2-(trifluoromethyl)phenyl]-1-cyclopropyl-2-(1,2,4-triazol-1-yl)ethanol (I-30), 2-[4-(4-chlorophenoxy)-2-(trifluoromethyl)phenyl]-1-(1,2,4-triazol-1-yl)butan-2-ol (I-31), 2-[2-chloro-4-(4-chlorophenoxy)phenyl]-1-(1,2,4-triazol-1-yl)butan-2-ol (I-32), 2-[4-(4-chlorophenoxy)-2-(trifluoromethyl)phenyl]-3-methyl-1-(1,2,4-triazol-1-yl)butan-2-ol (I-33), 2-[4-(4-chlorophenoxy)-2-(trifluoromethyl)phenyl]-1 -(1,2,4-triazol-1-yl)propan-2-ol (I-34), 2-[2-chloro-4-(4-chlorophenoxy)phenyl]-3-methyl-1-(1,2,4-triazol-1-yl)butan-2-ol (I-35), 2-[4-(4-chlorophenoxy)-2-(trifluoromethyl)phenyl]-1-(1,2,4-triazol-1-yl)pentan-2-ol (I-36), 2-[4-(4-fluorophenoxy)-2-(trifluoromethyl)phenyl]-1-(1,2,4-triazol-1-yl)propan-2-ol (I-37); imazalil, pefurazoate, prochloraz, triflumizol; fenarimol, nuarimol, pyrifenox, triforine, [3-(4-chloro-2-fluoro-phenyl)-5-(2,4-difluorophenyl)isoxazol-4-yl]-(3-pyridyl)methanol;
- Delta14-reductase inhibitors: aldimorph, dodemorph, dodemorph-acetate, fenpropimorph, tridemorph, fenpropidin, piperalin, spiroxamine;
- Inhibitors of 3-keto reductase: fenhexamid;

C) Nucleic acid synthesis inhibitors selected from

- phenylamides or acyl amino acid fungicides: benalaxyl, benalaxyl-M, kiralaxyl, metalaxyl, metalaxyl-M (mefenoxam) (I-38), ofurace, oxadixyl;
- others: hymexazole, octhilinone, oxolinic acid, bupirimate, 5-fluorocytosine, 5-fluoro-2-(p-tolylmethoxy)pyrimidin-4-amine, 5-fluoro-2-(4-fluorophenylmethoxy)pyrimidin-4-amine;

D) Inhibitors of cell division and cytoskeleton selected from

- tubulin inhibitors: benomyl, carbendazim, fuberidazole, thiabendazole, thiophanate-methyl (I-39); 5-chloro-7-(4-methylpiperidin-1-yl)-6-(2,4,6-trifluorophenyl)-[1,2,4]triazolo[1,5-a]pyrimidine
- other cell division inhibitors: diethofencarb, ethaboxam, pencycuron, fluopicolide, zoxamide, metrafenone (I-40), pyriofenone;

E) Inhibitors of amino acid and protein synthesis selected from

- methionine synthesis inhibitors (anilino-pyrimidines): cyprodinil, mepanipyrim, Pyrimethanil (I-41);
- protein synthesis inhibitors: blasticidin-S, kasugamycin, kasugamycin hydrochloride-hydrate, mildiomycin, streptomycin, oxytetracyclin, polyoxine, validamycin A;

F) Signal transduction inhibitors selected from

- MAP / histidine kinase inhibitors: fluoroimid, iprodione, procymidone, vinclozolin, fenpiclonil, fludioxonil;
- G protein inhibitors: quinoxyfen;

G) Lipid and membrane synthesis inhibitors selected from

- Phospholipid biosynthesis inhibitors: edifenphos, iprobenfos, pyrazophos, isoprothiolane;
- lipid peroxidation: dicloran, quintozene, tecnazene, tolclofos-methyl, biphenyl, chloroneb, etridiazole;
- phospholipid biosynthesis and cell wall deposition: dimethomorph (I-42), flumorph, mandipropamid (I-43), pyrimorph, benthiavalicarb, iprovalicarb, valifenalate, N-(1-(1-(4-cyano-phenyl)ethanesulfonyl)-but-2-yl)

carbamic acid-(4-fluorophenyl) ester;

- compounds affecting cell membrane permeability and fatty acides: propamocarb, propamocarb-hydrochlorid;
- fatty acid amide hydrolase inhibitors: oxathiapiprolin;

H) Inhibitors with Multi Site Action selected from

- inorganic active substances: Bordeaux mixture, copper acetate, copper hydroxide, copper oxychloride (I-44), basic copper sulfate, sulfur;
- thio- and dithiocarbamates: ferbam, mancozeb (I-45), maneb, metam, metiram (I-46), propineb, thiram, zineb, ziram;
- organochlorine compounds: anilazine, Chlorothalonil (I-47), captafol, captan, folpet, dichlofluanid, dichlorophen, hexachlorobenzene, pentachlorophenole and its salts, phthalide, tolylfluanid, N-(4-chloro-2-nitrophenyl)-N-ethyl-4-methyl-benzenesulfonamide;
- guanidines and others: guanidine, dodine, dodine free base, guazatine, guazatine-acetate, iminoctadine, iminoctadine-triacetate, iminoctadine-tris(albesilate), dithianon, 2,6-dimethyl-1 H,5H-[1,4]dithiino[2,3-c:5,6-c']dipyrrole-1,3,5,7(2H,6H)-tetraone (I-48);

I) Cell wall synthesis inhibitors selected from

- inhibitors of glucan synthesis: validamycin, polyoxin B;
- melanin synthesis inhibitors: pyroquilon, tricyclazole, carpropamid, dicyclomet, fenoxanil;

J) Plant defence inducers selected from

- acibenzolar-S-methyl, probenazole, isotianil, tiadinil, prohexadione-calcium; fosetyl, fosetyl-aluminum, phosphorous acid and its salts (I-49);

K) Unknown mode of action selected from
bronopol, chinomethionat, cyflufenamid, cymoxanil, dazomet, debacarb, diclomezine, difenzoquat, difenzoquat-methylsulfate, diphenylamin, fenpyrazamine, flumetover, flusulfamide, flutianil, methasulfocarb, nitrapyrin, nitrothal-isopropyl, oxathiapiprolin, tolprocarb, 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, oxin-copper, proquinazid, tebufloquin, tecloftalam, triazoxide, 2-butoxy-6-iodo-3-propylchromen-4-one, N-(cyclopropylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine,
N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, methoxy-acetic acid 6-tert-butyl-8-fluoro-2,3-dimethyl-quinolin-4-yl ester, 3-[5-(4-methylphenyl)-2,3-dimethyl-isoxazolidin-3-yl]-pyridine, 3-[5-(4-chloro-phenyl)-2,3-dimethyl-isoxazolidin-3-yl]-pyridine (pyrisoxazole), N-(6-methoxy-pyridin-3-yl) cyclopropanecarboxylic acid amide, 5-chloro-1-(4,6-dimethoxy-pyrimidin-2-yl)-2-methyl-1 H-benzoimidazole, 2-(4-chloro-phenyl)-N-[4-(3,4-dimethoxy-phenyl)-isoxazol-5-yl]-2-prop-2-ynyloxy-acetamide,ethyl (Z)-3-amino-2-cyano-3-phenyl-prop-2-enoate, tert-butyl N-[6-[[(Z)-[(1-methyltetrazol-5-yl)-phenyl-methylene]amino]oxymethyl]-2-pyridyl]carbamate, pentyl N-[6-[[(Z)-[(1-methyltetrazol-5-yl)-phenyl-methylene]amino]oxymethyl]-2-pyridyl]carbamate, 2-[2-[(7,8-difluoro-2-methyl-3-quinolyl)oxy]-6-fluoro-phenyl]propan-2-ol, 2-[2-fluoro-6-[(8-fluoro-2-methyl-3-quinolyl)oxy]phenyl]propan-2-ol, 3-(5-fluoro-3,3,4,4-tetramethyl-3,4-dihydroisoquinolin-1-yl)quinoline, 3-(4,4-difluoro-3,3-dimethyl-3,4-dihydroisoquinolin-1-yl)quinoline, 3-(4,4,5-trifluoro-3,3-dimethyl-3,4-dihydroisoquinolin-1-yl)quinoline;
L) antifungal biopesticides selected from

*Ampelomyces quisqualis, Aspergillus flavus, Aureobasidium pullulans, Bacillus pumilus* (I-50), *Bacillus subtilis* (I-51), *Bacillus subtilis* var. *amyloliquefaciens* (I-52), *Candida oleophila* I-82, *Candida saitoana,* Chitosan, *Clonostachys rosea f. catenulata,* also named *Gliocladium catenulatum, Coniothyrium minitans, Cryphonectria parasitica, Cryptococcus albidus, Fusarium oxysporum* (I-53), *Metschnikowia fructicola, Microdochium dimerum,*

*Phlebiopsis gigantea, Pseudozyma flocculosa, Pythium oligandrum* DV74, *Reynoutria sachlinensis, Talaromyces flavus* V117b, *Trichoderma asperellum* SKT-1, *T. atroviride* LC52, *T. harzianum* T-22, *T. harzianum* TH 35, *T. harzianum* T-39; *T. harzianum* and *T. viride, T. harzianum* ICC012 and *T. viride* ICC080; *T. polysporum* and *T. harzianum; T. stromaticum, T. virens* GL-21, *T. viride, T. viride* TV1, *Ulocladium oudemansii* HRU3;

M) Growth regulators selected from

abscisic acid, amidochlor, ancymidol, 6-benzylaminopurine, brassinolide, butralin, chlormequat (chlormequat chloride), choline chloride, cyclanilide, daminozide, dike-gulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (mepiquat chloride) (I-54), naphthaleneacetic acid, N-6-benzyladenine, paclobutrazol, prohexadione (prohexadione-calcium, I-55), prohydrojasmon, thidiazuron, triapenthenol, tributyl phosphorotrithioate, 2,3,5-tri-iodobenzoic acid , trinexapac-ethyl and uniconazole;

N) Herbicides selected from

- acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
- amino acid derivatives: bilanafos, glyphosate, glufosinate, sulfosate;
- aryloxyphenoxypropionates: clodinafop, cyhalofop-butyl, fenoxaprop, fluazifop, haloxyfop, metamifop, propaquizafop, quizalofop, quizalofop-P-tefuryl;
- Bipyridyls: diquat, paraquat;
- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
- cyclohexanediones: butroxydim, clethodim, cycloxydim, profoxydim, sethoxydim, tepraloxydim, tralkoxydim;
- dinitroanilines: benfluralin, ethalfluralin, oryzalin, pendimethalin, prodiamine, trifluralin;
- diphenyl ethers: acifluorfen, aclonifen, bifenox, diclofop, ethoxyfen, fomesafen, lactofen, oxyfluorfen;
- hydroxybenzonitriles: bomoxynil, dichlobenil, ioxynil;
- imidazolinones: imazamethabenz, imazamox, imazapic, imazapyr, imazaquin, imazethapyr;
- phenoxy acetic acids: clomeprop, 2,4-dichlorophenoxyacetic acid (2,4-D), 2,4-DB, dichlorprop, MCPA, MCPA-thioethyl, MCPB, Mecoprop;
- pyrazines: chloridazon, flufenpyr-ethyl, fluthiacet, norflurazon, pyridate;
- pyridines: aminopyralid, clopyralid, diflufenican, dithiopyr, fluridone, fluroxypyr, picloram, picolinafen, thiazopyr;
- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea;
- triazines: ametryn, atrazine, cyanazine, dimethametryn, ethiozin, hexazinone, metamitron, metribuzin, prometryn, simazine, terbuthylazine, terbutryn, triaziflam;
- ureas: chlorotoluron, daimuron, diuron, fluometuron, isoproturon, linuron, methabenzthiazuron,tebuthiuron;
- other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
- others: amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidonethyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chloro-phenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester;

O) Insecticides selected from

- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
- pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;
- insect growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;
- nicotinic receptor agonists/antagonists compounds: clothianidin, dinotefuran, flupyradifurone, imidacloprid, thiamethoxam, nitenpyram, acetamiprid, thiacloprid, 1-2-chloro-thiazol-5-ylmethyl)-2-nitrimino-3,5-dimethyl-[1,3,5]triazinane;
- GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1H-pyrazole-3-carbothioic acid amide;
- macrocyclic lactone insecticides: abamectin, emamectin, milbemectin, lepimectin, spinosad, spinetoram;
- mitochondrial electron transport inhibitor (METI) I acaricides: fenazaquin, pyridaben, tebufenpyrad, tolfenpyrad, flufenerim;
- METI II and III compounds: acequinocyl, fluacyprim, hydramethylnon;
- Uncouplers: chlorfenapyr;
- oxidative phosphorylation inhibitors: cyhexatin, diafenthiuron, fenbutatin oxide, propargite;
- moulting disruptor compounds: cryomazine;
- mixed function oxidase inhibitors: piperonyl butoxide;
- sodium channel blockers: indoxacarb, metaflumizone;
- ryanodine receptor inhibitors: chlorantraniliprole, cyantraniliprole, flubendiamide, N-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; N-[4-chloro-2-[(diethyl-lambda-4-sulfanylidene)carbamoyl]-6-methyl-phenyl]-2-(3-chloro-2-pyridyl)-5-(triflu-oromethyl)pyrazole-3-carboxamide; N-[4-chloro-2-[(di-2-propyl-lambda-4-sulfanylidene)carbamoyl]-6-methyl-phenyl]-2-(3-chloro-2-pyridyl)-5-(trifluoromethyl)pyrazole-3-carboxamide; N-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide;N-[4,6-di-chloro-2-[(diethyl-lambda-4-sulfanylidene)carbamoyl]-phenyl]-2-(3-chloro-2-pyridyl)-5-(difluoromethyl)pyrazole-3-carboxamide; N-[4,6-dibromo-2-[(di-2-propyl-lambda-4-sulfanylidene)carbamoyl]-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-cyanophenyl]-2-(3-chloro-2-pyridyl)-5-(trifluoromethyl)pyrazole-3-carboxamide;N-[4,6-dibromo-2-[(diethyl-lambda-4-sulfanylidene)carbamoyl]-phenyl]-2-(3-chloro-2-pyridyl)-5-(trifluoromethyl)pyrazole-3-carboxamide;
- others: benclothiaz, bifenazate, cartap, flonicamid, pyridalyl, pymetrozine, sulfur, thiocyclam, cyenopyrafen, flupyrazofos, cyflumetofen, amidoflumet, imicyafos, bistrifluron, pyrifluquinazon and 1,1'-[(3S,4R,4aR,6S,6aS,12R,12aS,12bS)-4-[[(2-cyclopropylacetyl)oxy]methyl]-1,3,4,4a,5,6,6a,12,12a,12b-decahydro-12-hydroxy-4,6a, 12b-trimethyl-11-oxo-9-(3-pyridinyl)-2H, 11H-naphtho[2,1 -b]pyrano[3,4-e]pyran-3,6-diyl] cyclopropaneacetic acid ester;

in a weight ratio of from 20:1 to 1:20.

Compounds I and their preparation and their use as fungicidally active compounds have been described in the unpublished International application PCT/EP2012/074586.

The invention also relates to a method for controlling phytopathogenic harmful fungi using mixtures of at least one compound I and and at least one compound II and to the use of compounds I and compounds II for preparing such mixtures, and to compositions comprising these mixtures and seed comprising these mixtures or coated with this this mixture.

Practical agricultural experience has shown that the repeated and exclusive application of an individual active

compound in the control of harmful fungi leads in many cases to a rapid selection of those fungus strains which have developed natural or adapted resistance against the active compound in question. Effective control of these fungi with the active compound in question is then no longer possible.

To reduce the risk of the selection of resistant fungus strains, mixtures of different active compounds are nowadays conventionally employed for controlling harmful fungi. By combining active compounds having different mechanisms of action, it is possible to ensure successful control over a relatively long period of time.

It is an object of the present invention to provide, with a view to effective resistance management and effective control of phytopathogenic harmful fungi, at application rates which are as low as possible, compositions which, at a reduced total amount of active compounds applied, have improved activity against the harmful fungi (synergistic mixtures) and a broadened activty spectrum, in particular for certain indications.

We have accordingly found that this object is achieved by the compositions, defined herein, comprising at least one compound I and at least one compound II.

Moreover, we have found that simultaneous, that is joint or separate, application of a compound I and a compound II or successive application of a compound I and of compound II allows better control of harmful fungi than is possible with the individual compounds alone (synergistic mixtures). Compounds I and/or the compounds II can be present in different crystal modifications, which may differ in biological activity.

Agriculturally acceptable salts of the compounds I encompass especially the salts of those cations or the acid addition salts of those acids whose cations and anions, respectively, have no adverse effect on the fungicidal action of the compounds I. Suitable cations are thus in particular the ions of the alkali metals, preferably sodium and potassium, of the alkaline earth metals, preferably calcium, magnesium and barium, of the transition metals, preferably manganese, copper, zinc and iron, and also the ammonium ion which, if desired, may carry 1 to 4 $C_1$-$C_4$-alkyl substituents and/or one phenyl or benzyl substituent, preferably diisopropylammonium, tetramethylammonium, tetrabutylammonium, trimethylbenzylammonium, furthermore phosphonium ions, sulfonium ions, preferably tri($C_1$-$C_4$-alkyl)sulfonium, and sulfoxonium ions, preferably tri($C_1$-$C_4$-alkyl)sulfoxonium. Anions of useful acid addition salts are primarily chloride, bromide, fluoride, hydrogensulfate, sulfate, dihydrogenphosphate, hydrogenphosphate, phosphate, nitrate, bicarbonate, carbonate, hexafluorosilicate, hexafluorophosphate, benzoate, and the anions of $C_1$-$C_4$-alkanoic acids, preferably formate, acetate, propionate and butyrate. They can be formed by reacting a compound I with an acid of the corresponding anion, preferably of hydrochloric acid, hydrobromic acid, sulfuric acid, phosphoric acid or nitric acid.

The scope of the present invention includes mixtures of the (R)- and (S)-isomers and the racemates of compounds I and/or II having one or more chiral centers. As a result of hindered rotation of asymmetrically substituted groups, atrope isomers of compounds I and/or II may be present. They also form part of the subject matter of the invention.

The fungicidally active compounds II described by common names and the antifungal biocontrol agents and plant bioactivators, their preparation and their activity against harmful fungi is known (cf.: http://www.alanwood.net/pesticides/); these substances and biocontrol agets are commercially available.

The compounds described by IUPAC nomenclature, their preparation and their fungicidal activity are also known (cf. Can. J. Plant Sci. 48(6), 587-94, 1968; EP-A 141 317; EP-A 152 031; EP-A 226 917; EP-A 243 970; EP-A 256 503; EP-A 428 941; EP-A 532 022; EP-A 1 028 125; EP-A 1 035 122; EP-A 1 201 648; EP-A 1 122 244, JP 2002316902; DE 19650197; DE 10021412; DE 102005009458; US 3,296,272; US 3,325,503; WO 98/46608; WO 99/14187; WO 99/24413; WO 99/27783; WO 00/29404; WO 00/46148; WO 00/65913; WO 01/54501; WO 01/56358; WO 02/22583; WO 02/40431; WO 03/10149; WO 03/11853; WO 03/14103; WO 03/16286; WO 03/53145; WO 03/61388; WO 03/66609; WO 03/74491; WO 04/49804; WO 04/83193; WO 05/120234; WO 05/123689; WO 05/123690; WO 05/63721; WO 05/87772; WO 05/87773; WO 06/15866; WO 06/87325; WO 06/87343; WO 07/82098; WO 07/90624, WO 11/028657, WO2012/168188, WO 2007/006670, WO 11/77514; WO13/047749, WO 10/069882, WO 13/047441, WO 03/16303, WO 09/90181, WO 13/007767, WO 13/010862, WO 13/024009 and WO 13/024010).

Biopesticides have been defined as a form of pesticides based on micro-organisms (bacteria, fungi, viruses, nematodes, etc.) or natural products (compounds or ectracts from biological sources). Biopesticides are typically created by growing and concentrating naturally occurring organisms and/or their metabolites including bacteria and other microbes, fungi, viruses, nematodes, proteins, etc. They are often considered to be important components of integrated pest management (IPM) programmes, and have received much practical attention as substitutes to synthetic chemical plant protection products (PPPs).

Biopesticides fall into two major classes, microbial and biochemical pesticides:

(1) Microbial pesticides consist of bacteria, fungi or viruses (and often include the metabolites that bacteria and fungi produce). Entomopathogenic nematodes are also classed as microbial pesticides, even though they are multicellular.

(2) Biochemical pesticides are naturally occurring substances that control pests or provide other crop protection uses as defined below, but are relatively non-toxic to mammals.

The biopesticides II from group L) may also have insecticidal, acaricidal, molluscidal, pheromone, nematicidal, plant stress reducing, plant growth regulator, plant growth promoting and/or yield enhancing activity.

The biopesticides II, their preparation and their biological activity e.g. against harmful fungi, pests is known (e-Pesticide Manual V 5.2 (ISBN 978 1 901396 85 0) (2008-2011); http://www.epa.gov/opp00001/biopesticides/, see product lists therein; http://www.omri.org/omrilists, see lists therein; Bio-Pesticides Database BPDB http://sitem.herts.ac.uk/aeru/bpdb/, see A to Z link therein). Many of these biopesticides are registered and/or are commercially available: aluminium silicate (SCREEN™ DUO from Certis LLC, USA), Ampelomyces quisqualis M-10 (e.g. AQ 10® from Intrachem Bio GmbH & Co. KG, Germany), Ascophyllum nodosum (Norwegian kelp, Brown kelp) extract (e.g. ORKA GOLD from Becker Underwood, South Africa), Aspergillus flavus NRRL 21882 (e.g. AFLA-GUARD® from Syngenta, CH), Aureobasidium pullulans (e.g. BOTECTOR® from bio-ferm GmbH, Germany), Azospirillum brasilense XOH (e.g. AZOS from Xtreme Gardening, USA USA or RTI Reforestation Technologies International; USA), Bacillus amyloliquefaciens IT-45 (CNCM I-3800, NCBI 1091041) (e.g. RHIZOCELL C from ITHEC, France), B. amyloliquefaciens subsp. plantarum MBI600 (NRRL B-50595, deposited at United States Department of Agriculture) (e.g. INTEGRAL®, CLARITY, SUBTILEX NG from Becker Underwood, USA), B. pumilus QST 2808 (NRRL Accession No. B-30087) (e.g. SONATA® and BALLAD® Plus from AgraQuest Inc., USA), B. subtilis GB03 (e.g. KODIAK from Gustafson, Inc., USA), B. subtilis GB07 (EPIC from Gustafson, Inc., USA), B. subtilis QST-713 (NRRL-Nr. B-21661 in RHAPSODY®, SERENADE® MAX and SERENADE® ASO from Agra-Quest Inc., USA), B. subtilis var. amyloliquefaciens FZB24 (e.g. TAEGRO® from Novozyme Biologicals, Inc., USA), B. subtilis var. amyloliquefaciens D747 (e.g. Double Nickel 55 from Certis LLC, USA), Bacillus thuringiensis ssp. kurstaki SB4 (e.g. BETA PRO® from Becker Underwood, South Africa), Beauveria bassiana GHA (BOTANIGARD® 22WGP from Laverlam Int. Corp., USA), B. bassiana 12256 (e.g. BIOEXPERT® SC from Live Sytems Technology S.A., Colombia), B. bassiana PRPI 5339 (ARSEF number 5339 in the USDA ARS collection of entomopathogenic fungal cultures) (e.g. BROADBAND® from Becker Underwood, South Africa), Bradyrhizobium sp. (e.g. VAULT® from Becker Underwood, USA), B. japonicum (e.g. VAULT® from Becker Underwood, USA), Candida oleophila I-82 (e.g. ASPIRE® from Ecogen Inc., USA), Candida saitoana (e.g. BIOCURE® (in mixture with lysozyme) and BIOCOAT® from Micro Flo Company, USA (BASF SE) and Arysta), Chitosan (e.g. ARMOUR-ZEN from BotriZen Ltd., NZ), Clonostachys rosea f. catenulata, also named Gliocladium catenulatum (e.g. isolate J1446: PRESTOP® from Verdera, Finland), Coniothyrium minitans CON/M/91-08 (e.g. Contans® WG from Prophyta, Germany), Cryphonectria parasitica (e.g. Endothia parasitica from CNICM, France), Cryptococcus albidus (e.g. YIELD PLUS® from Anchor Bio-Technologies, South Africa), Ecklonia maxima (kelp) extract (e.g. KELPAK SL from Kelp Products Ltd, South Africa), Fusarium oxysporum (e.g. BIOFOX® from S.I.A.P.A., Italy, FUSACLEAN® from Natural Plant Protection, France), Glomus intraradices (e.g. MYC 4000 from ITHEC, France), Glomus intraradices RTI-801 (e.g. MYKOS from Xtreme Gardening, USA or RTI Reforestation Technologies International; USA), grapefruit seeds and pulp extract (e.g. BC-1000 from Chemie S.A., Chile), Isaria fumosorosea Apopka-97 (ATCC 20874) (PFR-97™ from Certis LLC, USA), Lecanicillium muscarium (formerly Verticillium lecanii) (e.g. MYCOTAL from Koppert BV, Netherlands), Lecanicillium longisporum KV42 and KV71 (e.g. VERTALEC® from Koppert BV, Netherlands), Metarhizium anisopliae var. acridum IMI 330189 (deposited in European Culture Collections CABI) (e.g. GREEN MUSCLE® from Becker Underwood, South Africa), M. anisopliae FI-1045 (e.g. BIOCANE® from Becker Underwood Pty Ltd, Australia), M. anisopliae var. acridum FI-985 (e.g. GREEN GUARD@ SC from Becker Underwood Pty Ltd, Australia), M. anisopliae F52 (e.g. MET52® Novozymes Biologicals BioAg Group, Canada), M. anisopliae ICIPE 69 (e.g. METATHRIPOL from ICIPE, Kenya), Metschnikowia fructicola (e.g. SHEMER® from Agrogreen, Israel), Microdochium dimerum (e.g. ANTIBOT® from Agrauxine, France), Neem oil (e.g. TRILOGY®, TRIACT® 70 EC from Certis LLC, USA), Paecilomyces fumosoroseus strain FE 9901 (e.g. NO FLY™ from Natural Industries, Inc., USA), P. lilacinus DSM 15169 (e.g. NEMATA® SC from Live Systems Technology S.A., Colombia), P. lilacinus BCP2 (e.g. PL GOLD from Becker Underwood BioAg SA Ltd, South Africa), mixture of Paenibacillus alvei NAS6G6 and Bacillus pumilis (e.g. BAC-UP from Becker Underwood South Africa), Penicillium bilaiae (e.g. JUMP START® from Novozymes Biologicals BioAg Group, Canada),Phlebiopsis gigantea (e.g. ROTSTOP® from Verdera, Finland), potassium silicate (e.g. Sil-MATRI™ from Certis LLC, USA), Pseudozyma flocculosa (e.g. SPORODEX® from Plant Products Co. Ltd., Canada), Pythium oligandrum DV74 (e.g. POLYVERSUM® from Remeslo SSRO, Biopreparaty, Czech Rep.), Reynoutria sachlinensis extract (e.g. REGALIA® from Marrone BioInnovations, USA), Rhizobium leguminosarum bv. phaseolii (e.g. RHIZO-STICK from Becker Underwood, USA), R. I. trifolii (e.g. DORMAL from Becker Underwood, USA), R. I. bv. viciae (e.g. NODULATOR from Becker Underwood, USA), Sinorhizobium meliloti (e.g. DORMAL ALFALFA from Becker Underwood, USA; NITRAGIN® Gold from Novozymes Biologicals BioAg Group, Canada), Steinernema feltiae (NEMASHIELD® from BioWorks, Inc., USA), Streptomyces lydicus WYEC 108 (e.g. Actinovate® from Natural Industries, Inc., USA, US 5,403,584), S. violaceusniger YCED-9 (e.g. DT-9® from Natural Industries, Inc., USA, US 5,968,503), Talaromyces flavus V117b (e.g. PROTUS® from Prophyta, Germany), Trichoderma asperellum SKT-1 (e.g. ECO-HOPE® from Kumiai Chemical Industry Co., Ltd., Japan), T. atroviride LC52 (e.g. SENTINEL® from Agrimm Technologies Ltd, NZ), T. fertile JM41 R (e.g. RICHPLUS™ from Becker Underwood Bio Ag SA Ltd, South Africa), T. harzianum T-22 (e.g. PLANTSHIELD® der Firma BioWorks Inc., USA), T. harzianum TH 35 (e.g. ROOT PRO® from Mycontrol Ltd., Israel), T. harzianum T-39 (e.g. TRICHODEX® and TRICHODERMA 2000® from

Mycontrol Ltd., Israel and Makhteshim Ltd., Israel), T. harzianum and T. viride (e.g. TRICHOPEL from Agrimm Technologies Ltd, NZ), T. harzianum ICC012 and T. viride ICC080 (e.g. REMEDIER® WP from Isagro Ricerca, Italy), T. polysporum and T. harzianum (e.g. BINAB® from BINAB Bio-Innovation AB, Sweden), T. stromaticum (e.g. TRICOVAB® from C.E.P.L.A.C., Brazil), T. virens GL-21 (also named Gliocladium virens) (e.g. SOILGARD® from Certis LLC, USA), T. viride (e.g. TRIECO® from Ecosense Labs. (India) Pvt. Ltd., Indien, BIOCURE® F from T. Stanes & Co. Ltd., Indien), T. viride TV1 (e.g. T. viride TV1 from Agribiotec srl, Italy), Ulocladium oudemansii HRU3 (e.g. BOTRY-ZEN® from Botry-Zen Ltd, NZ), Bacillus amyloliquefaciens AP-136 (NRRL B-50614), B. amyloliquefaciens AP-188 (NRRL B-50615), B. amyloliquefaciens AP-218 (NRRL B-50618), B. amyloliquefaciens AP-219 (NRRL B-50619), B. amyloliquefaciens AP-295 (NRRL B-50620), B. mojavensis AP-209 (No. NRRL B-50616), B. solisalsi AP-217 (NRRL B-50617), B. pumilus strain INR-7 (otherwise referred to as BU-F22 (NRRL B-50153) and BU-F33 (NRRL B-50185)), B. simplex ABU 288 (NRRL B-50340) and B. amyloliquefaciens subsp. plantarum MBI600 (NRRL B-50595) have been mentioned i.a. in US patent appl. 20120149571. Beauveria bassiana DSM 12256 is known from US200020031495. Bradyrhizobium japonicum USDA is known from US patent 7,262,151. Sphaerodes mycoparasitica IDAC 301008-01 (IDAC = International Depositary Authority of Canada Collection) is known from WO 2011/022809. Bacillus subtilis strain FB17 was originally isolated from red beet roots in North America (System Appl. Microbiol 27 (2004) 372-379, incorporated herein by reference). The strain was isolated from beet root on the basis of its ability to form surface biofilm and dendritic growth. This strain is known to be recruited by Arabidopsis roots by malic acid excretion (Plant Physiol. 148 (2008) 1547-1556).

The inventive mixtures comprising as biopesticide II a microbial pesticide from group L) may be formulated as an inoculant for a plant. The term "inoculant" means a preparation that includes an isolated culture of a microbial pesticide and optionally a carrier, which may include a biologically acceptable medium.

The abovementioned microbial pesticides may be isolated or substantially purified. The terms "isolated" or "substantially purified" refers to microbial pesticides that have been removed from a natural environment and have been isolated or separated, and are at least 60% free, preferably at least 75% free, and more preferably at least 90% free, even more preferably at least 95% free, and most preferably at least 100% free from other components with which they were naturally associated. An "isolated culture" refers to a culture of the microbial pesticides that does not include significant amounts of other materials such as other materials which normally are found in natural habitat in which the microbial pesticides grows and/or from which the microbial pesticides normally may be obtained. An "isolated culture" may be a culture that does not include any other biological, microorganism, and/or bacterial species in quantities sufficient to interfere with the replication of the "isolated culture." Isolated cultures of microbial pesticides may be combined to prepare a mixed culture of microbial pesticides.

Herein, microbial pesticides may be supplied in any physiological state such as active or dormant. Dormant microbial pesticides may be supplied for example frozen, dried, or lyophilized or partly desiccated (procedures to produce these partly desiccated organisms are given in WO2008/002371) or in form of spores.

Particularly preferred are the following binary mixtures listed in Table A wherein compounds I are selected from compounds I-1 to I-18 and compounds II are selected from compounds and biopesticides II-1 to II-55 as defined above and listed:

Table A: Binary Mixtures A-1 to A-990 comprising as active ingredients one compound I as defined and numbered above as component 1) (Co. 1) and one compound or

biopesticide II as defined and numbered above as component 2) (Co. 2).

| Mixt. | Co. 1 | Co. 2 |
|---|---|---|
| A-1 | I-1 | II-1 |
| A-2 | I-1 | II-2 |
| A-3 | I-1 | II-2 |
| A-4 | I-1 | II-3 |
| A-5 | I-1 | II-4 |
| A-6 | I-1 | II-5 |
| A-7 | I-1 | II-6 |
| A-8 | I-1 | II-7 |
| A-9 | I-1 | II-8 |
| A-10 | I-1 | II-9 |
| A-11 | I-1 | II-10 |
| A-12 | I-1 | II-11 |
| A-13 | I-1 | II-12 |
| A-14 | I-1 | II-13 |
| A-15 | I-1 | II-14 |
| A-16 | I-1 | II-15 |
| A-17 | I-1 | II-16 |
| A-18 | I-1 | II-17 |
| A-19 | I-1 | II-18 |
| A-20 | I-1 | II-19 |
| A-21 | I-1 | II-20 |
| A-22 | I-1 | II-21 |
| A-23 | I-1 | II-22 |
| A-24 | I-1 | II-23 |
| A-25 | I-1 | II-24 |
| A-26 | I-1 | II-25 |
| A-27 | I-1 | II-26 |
| A-28 | I-1 | II-27 |
| A-29 | I-1 | II-28 |
| A-30 | I-1 | II-29 |
| A-31 | I-1 | II-30 |
| A-32 | I-1 | II-31 |
| A-33 | I-1 | II-32 |
| A-34 | I-1 | II-33 |
| A-35 | I-1 | II-34 |
| A-36 | I-1 | II-35 |
| A-37 | I-1 | II-36 |
| A-38 | I-1 | II-37 |
| A-39 | I-1 | II-38 |
| A-40 | I-1 | II-39 |
| A-41 | I-1 | II-40 |
| A-42 | I-1 | II-41 |
| A-43 | I-1 | II-42 |
| A-44 | I-1 | II-43 |
| A-45 | I-1 | II-44 |
| A-46 | I-1 | II-45 |
| A-47 | I-1 | II-46 |
| A-48 | I-1 | II-47 |
| A-49 | I-1 | II-48 |
| A-50 | I-1 | II-50 |
| A-51 | I-1 | II-51 |
| A-52 | I-1 | II-52 |
| A-53 | I-1 | II-53 |
| A-54 | I-1 | II-54 |
| A-55 | I-1 | II-55 |
| A-56 | I-2 | II-1 |
| A-57 | I-2 | II-2 |
| A-58 | I-2 | II-2 |
| A-59 | I-2 | II-3 |
| A-60 | I-2 | II-4 |
| A-61 | I-2 | II-5 |
| A-62 | I-2 | II-6 |
| A-63 | I-2 | II-7 |
| A-64 | I-2 | II-8 |
| A-65 | I-2 | II-9 |
| A-66 | I-2 | II-10 |
| A-67 | I-2 | II-11 |
| A-68 | I-2 | II-12 |
| A-69 | I-2 | II-13 |
| A-70 | I-2 | II-14 |
| A-71 | I-2 | II-15 |
| A-72 | I-2 | II-16 |
| A-73 | I-2 | II-17 |
| A-74 | I-2 | II-18 |
| A-75 | I-2 | II-19 |
| A-76 | I-2 | II-20 |
| A-77 | I-2 | II-21 |
| A-78 | I-2 | II-22 |
| A-79 | I-2 | II-23 |
| A-80 | I-2 | II-24 |
| A-81 | I-2 | II-25 |
| A-82 | I-2 | II-26 |
| A-83 | I-2 | II-27 |
| A-84 | I-2 | II-28 |
| A-85 | I-2 | II-29 |
| A-86 | I-2 | II-30 |
| A-87 | I-2 | II-31 |
| A-88 | I-2 | II-32 |
| A-89 | I-2 | II-33 |
| A-90 | I-2 | II-34 |
| A-91 | I-2 | II-35 |
| A-92 | I-2 | II-36 |
| A-93 | I-2 | II-37 |
| A-94 | I-2 | II-38 |
| A-95 | I-2 | II-39 |
| A-96 | I-2 | II-40 |
| A-97 | I-2 | II-41 |
| A-98 | I-2 | II-42 |
| A-99 | I-2 | II-43 |
| A-100 | I-2 | II-44 |
| A-101 | I-2 | II-45 |
| A-102 | I-2 | II-46 |
| A-103 | I-2 | II-47 |
| A-104 | I-2 | II-48 |
| A-105 | I-2 | II-50 |
| A-106 | I-2 | II-51 |
| A-107 | I-2 | II-52 |
| A-108 | I-2 | II-53 |
| A-109 | I-2 | II-54 |
| A-110 | I-2 | II-55 |
| A-111 | I-3 | II-1 |
| A-112 | I-3 | II-2 |
| A-113 | I-3 | II-2 |
| A-114 | I-3 | II-3 |
| A-115 | I-3 | II-4 |
| A-116 | I-3 | II-5 |
| A-117 | I-3 | II-6 |
| A-118 | I-3 | II-7 |
| A-119 | I-3 | II-8 |
| A-120 | I-3 | II-9 |

| Mixt. | Co. 1 | Co. 2 |
|---|---|---|
| A-121 | I-3 | II-10 |
| A-122 | I-3 | II-11 |
| A-123 | I-3 | II-12 |
| A-124 | I-3 | II-13 |
| A-125 | I-3 | II-14 |
| A-126 | I-3 | II-15 |
| A-127 | I-3 | II-16 |
| A-128 | I-3 | II-17 |
| A-129 | I-3 | II-18 |
| A-130 | I-3 | II-19 |
| A-131 | I-3 | II-20 |
| A-132 | I-3 | II-21 |
| A-133 | I-3 | II-22 |
| A-134 | I-3 | II-23 |
| A-135 | I-3 | II-24 |
| A-136 | I-3 | II-25 |
| A-137 | I-3 | II-26 |
| A-138 | I-3 | II-27 |
| A-139 | I-3 | II-28 |
| A-140 | I-3 | II-29 |
| A-141 | I-3 | II-30 |
| A-142 | I-3 | II-31 |
| A-143 | I-3 | II-32 |
| A-144 | I-3 | II-33 |
| A-145 | I-3 | II-34 |
| A-146 | I-3 | II-35 |
| A-147 | I-3 | II-36 |
| A-148 | I-3 | II-37 |
| A-149 | I-3 | II-38 |
| A-150 | I-3 | II-39 |
| A-151 | I-3 | II-40 |
| A-152 | I-3 | II-41 |
| A-153 | I-3 | II-42 |
| A-154 | I-3 | II-43 |
| A-155 | I-3 | II-44 |
| A-156 | I-3 | II-45 |
| A-157 | I-3 | II-46 |
| A-158 | I-3 | II-47 |
| A-159 | I-3 | II-48 |
| A-160 | I-3 | II-50 |
| A-161 | I-3 | II-51 |

| Mixt. | Co. 1 | Co. 2 |
|---|---|---|
| A-162 | I-3 | II-52 |
| A-163 | I-3 | II-53 |
| A-164 | I-3 | II-54 |
| A-165 | I-3 | II-55 |
| A-166 | I-4 | II-1 |
| A-167 | I-4 | II-2 |
| A-168 | I-4 | II-2 |
| A-169 | I-4 | II-3 |
| A-170 | I-4 | II-4 |
| A-171 | I-4 | II-5 |
| A-172 | I-4 | II-6 |
| A-173 | I-4 | II-7 |
| A-174 | I-4 | II-8 |
| A-175 | I-4 | II-9 |
| A-176 | I-4 | II-10 |
| A-177 | I-4 | II-11 |
| A-178 | I-4 | II-12 |
| A-179 | I-4 | II-13 |
| A-180 | I-4 | II-14 |
| A-181 | I-4 | II-15 |
| A-182 | I-4 | II-16 |
| A-183 | I-4 | II-17 |
| A-184 | I-4 | II-18 |
| A-185 | I-4 | II-19 |
| A-186 | I-4 | II-20 |
| A-187 | I-4 | II-21 |
| A-188 | I-4 | II-22 |
| A-189 | I-4 | II-23 |
| A-190 | I-4 | II-24 |
| A-191 | I-4 | II-25 |
| A-192 | I-4 | II-26 |
| A-193 | I-4 | II-27 |
| A-194 | I-4 | II-28 |
| A-195 | I-4 | II-29 |
| A-196 | I-4 | II-30 |
| A-197 | I-4 | II-31 |
| A-198 | I-4 | II-32 |
| A-199 | I-4 | II-33 |
| A-200 | I-4 | II-34 |
| A-201 | I-4 | II-35 |
| A-202 | I-4 | II-36 |

| Mixt. | Co. 1 | Co. 2 |
|---|---|---|
| A-203 | I-4 | II-37 |
| A-204 | I-4 | II-38 |
| A-205 | I-4 | II-39 |
| A-206 | I-4 | II-40 |
| A-207 | I-4 | II-41 |
| A-208 | I-4 | II-42 |
| A-209 | I-4 | II-43 |
| A-210 | I-4 | II-44 |
| A-211 | I-4 | II-45 |
| A-212 | I-4 | II-46 |
| A-213 | I-4 | II-47 |
| A-214 | I-4 | II-48 |
| A-215 | I-4 | II-50 |
| A-216 | I-4 | II-51 |
| A-217 | I-4 | II-52 |
| A-218 | I-4 | II-53 |
| A-219 | I-4 | II-54 |
| A-220 | I-4 | II-55 |
| A-221 | I-5 | II-1 |
| A-222 | I-5 | II-2 |
| A-223 | I-5 | II-2 |
| A-224 | I-5 | II-3 |
| A-225 | I-5 | II-4 |
| A-226 | I-5 | II-5 |
| A-227 | I-5 | II-6 |
| A-228 | I-5 | II-7 |
| A-229 | I-5 | II-8 |
| A-230 | I-5 | II-9 |
| A-231 | I-5 | II-10 |
| A-232 | I-5 | II-11 |
| A-233 | I-5 | II-12 |
| A-234 | I-5 | II-13 |
| A-235 | I-5 | II-14 |
| A-236 | I-5 | II-15 |
| A-237 | I-5 | II-16 |
| A-238 | I-5 | II-17 |
| A-239 | I-5 | II-18 |
| A-240 | I-5 | II-19 |
| A-241 | I-5 | II-20 |
| A-242 | I-5 | II-21 |
| A-243 | I-5 | II-22 |

| Mixt. | Co. 1 | Co. 2 | Mixt. | Co. 1 | Co. 2 | Mixt. | Co. 1 | Co. 2 |
|---|---|---|---|---|---|---|---|---|
| A-244 | I-5 | II-23 | A-285 | I-6 | II-9 | A-326 | I-6 | II-51 |
| A-245 | I-5 | II-24 | A-286 | I-6 | II-10 | A-327 | I-6 | II-52 |
| A-246 | I-5 | II-25 | A-287 | I-6 | II-11 | A-328 | I-6 | II-53 |
| A-247 | I-5 | II-26 | A-288 | I-6 | II-12 | A-329 | I-6 | II-54 |
| A-248 | I-5 | II-27 | A-289 | I-6 | II-13 | A-330 | I-6 | II-55 |
| A-249 | I-5 | II-28 | A-290 | I-6 | II-14 | A-331 | I-7 | II-1 |
| A-250 | I-5 | II-29 | A-291 | I-6 | II-15 | A-332 | I-7 | II-2 |
| A-251 | I-5 | II-30 | A-292 | I-6 | II-16 | A-333 | I-7 | II-2 |
| A-252 | I-5 | II-31 | A-293 | I-6 | II-17 | A-334 | I-7 | II-3 |
| A-253 | I-5 | II-32 | A-294 | I-6 | II-18 | A-335 | I-7 | II-4 |
| A-254 | I-5 | II-33 | A-295 | I-6 | II-19 | A-336 | I-7 | II-5 |
| A-255 | I-5 | II-34 | A-296 | I-6 | II-20 | A-337 | I-7 | II-6 |
| A-256 | I-5 | II-35 | A-297 | I-6 | II-21 | A-338 | I-7 | II-7 |
| A-257 | I-5 | II-36 | A-298 | I-6 | II-22 | A-339 | I-7 | II-8 |
| A-258 | I-5 | II-37 | A-299 | I-6 | II-23 | A-340 | I-7 | II-9 |
| A-259 | I-5 | II-38 | A-300 | I-6 | II-24 | A-341 | I-7 | II-10 |
| A-260 | I-5 | II-39 | A-301 | I-6 | II-25 | A-342 | I-7 | II-11 |
| A-261 | I-5 | II-40 | A-302 | I-6 | II-26 | A-343 | I-7 | II-12 |
| A-262 | I-5 | II-41 | A-303 | I-6 | II-27 | A-344 | I-7 | II-13 |
| A-263 | I-5 | II-42 | A-304 | I-6 | II-28 | A-345 | I-7 | II-14 |
| A-264 | I-5 | II-43 | A-305 | I-6 | II-29 | A-346 | I-7 | II-15 |
| A-265 | I-5 | II-44 | A-306 | I-6 | II-30 | A-347 | I-7 | II-16 |
| A-266 | I-5 | II-45 | A-307 | I-6 | II-31 | A-348 | I-7 | II-17 |
| A-267 | I-5 | II-46 | A-308 | I-6 | II-32 | A-349 | I-7 | II-18 |
| A-268 | I-5 | II-47 | A-309 | I-6 | II-33 | A-350 | I-7 | II-19 |
| A-269 | I-5 | II-48 | A-310 | I-6 | II-34 | A-351 | I-7 | II-20 |
| A-270 | I-5 | II-50 | A-311 | I-6 | II-35 | A-352 | I-7 | II-21 |
| A-271 | I-5 | II-51 | A-312 | I-6 | II-36 | A-353 | I-7 | II-22 |
| A-272 | I-5 | II-52 | A-313 | I-6 | II-37 | A-354 | I-7 | II-23 |
| A-273 | I-5 | II-53 | A-314 | I-6 | II-38 | A-355 | I-7 | II-24 |
| A-274 | I-5 | II-54 | A-315 | I-6 | II-39 | A-356 | I-7 | II-25 |
| A-275 | I-5 | II-55 | A-316 | I-6 | II-40 | A-357 | I-7 | II-26 |
| A-276 | I-6 | II-1 | A-317 | I-6 | II-41 | A-358 | I-7 | II-27 |
| A-277 | I-6 | II-2 | A-318 | I-6 | II-42 | A-359 | I-7 | II-28 |
| A-278 | I-6 | II-2 | A-319 | I-6 | II-43 | A-360 | I-7 | II-29 |
| A-279 | I-6 | II-3 | A-320 | I-6 | II-44 | A-361 | I-7 | II-30 |
| A-280 | I-6 | II-4 | A-321 | I-6 | II-45 | A-362 | I-7 | II-31 |
| A-281 | I-6 | II-5 | A-322 | I-6 | II-46 | A-363 | I-7 | II-32 |
| A-282 | I-6 | II-6 | A-323 | I-6 | II-47 | A-364 | I-7 | II-33 |
| A-283 | I-6 | II-7 | A-324 | I-6 | II-48 | A-365 | I-7 | II-34 |
| A-284 | I-6 | II-8 | A-325 | I-6 | II-50 | A-366 | I-7 | II-35 |

| Mixt. | Co. 1 | Co. 2 |
|---|---|---|
| A-367 | I-7 | II-36 |
| A-368 | I-7 | II-37 |
| A-369 | I-7 | II-38 |
| A-370 | I-7 | II-39 |
| A-371 | I-7 | II-40 |
| A-372 | I-7 | II-41 |
| A-373 | I-7 | II-42 |
| A-374 | I-7 | II-43 |
| A-375 | I-7 | II-44 |
| A-376 | I-7 | II-45 |
| A-377 | I-7 | II-46 |
| A-378 | I-7 | II-47 |
| A-379 | I-7 | II-48 |
| A-380 | I-7 | II-50 |
| A-381 | I-7 | II-51 |
| A-382 | I-7 | II-52 |
| A-383 | I-7 | II-53 |
| A-384 | I-7 | II-54 |
| A-385 | I-7 | II-55 |
| A-386 | I-8 | II-1 |
| A-387 | I-8 | II-2 |
| A-388 | I-8 | II-2 |
| A-389 | I-8 | II-3 |
| A-390 | I-8 | II-4 |
| A-391 | I-8 | II-5 |
| A-392 | I-8 | II-6 |
| A-393 | I-8 | II-7 |
| A-394 | I-8 | II-8 |
| A-395 | I-8 | II-9 |
| A-396 | I-8 | II-10 |
| A-397 | I-8 | II-11 |
| A-398 | I-8 | II-12 |
| A-399 | I-8 | II-13 |
| A-400 | I-8 | II-14 |
| A-401 | I-8 | II-15 |
| A-402 | I-8 | II-16 |
| A-403 | I-8 | II-17 |
| A-404 | I-8 | II-18 |
| A-405 | I-8 | II-19 |
| A-406 | I-8 | II-20 |
| A-407 | I-8 | II-21 |

| Mixt. | Co. 1 | Co. 2 |
|---|---|---|
| A-408 | I-8 | II-22 |
| A-409 | I-8 | II-23 |
| A-410 | I-8 | II-24 |
| A-411 | I-8 | II-25 |
| A-412 | I-8 | II-26 |
| A-413 | I-8 | II-27 |
| A-414 | I-8 | II-28 |
| A-415 | I-8 | II-29 |
| A-416 | I-8 | II-30 |
| A-417 | I-8 | II-31 |
| A-418 | I-8 | II-32 |
| A-419 | I-8 | II-33 |
| A-420 | I-8 | II-34 |
| A-421 | I-8 | II-35 |
| A-422 | I-8 | II-36 |
| A-423 | I-8 | II-37 |
| A-424 | I-8 | II-38 |
| A-425 | I-8 | II-39 |
| A-426 | I-8 | II-40 |
| A-427 | I-8 | II-41 |
| A-428 | I-8 | II-42 |
| A-429 | I-8 | II-43 |
| A-430 | I-8 | II-44 |
| A-431 | I-8 | II-45 |
| A-432 | I-8 | II-46 |
| A-433 | I-8 | II-47 |
| A-434 | I-8 | II-48 |
| A-435 | I-8 | II-50 |
| A-436 | I-8 | II-51 |
| A-437 | I-8 | II-52 |
| A-438 | I-8 | II-53 |
| A-439 | I-8 | II-54 |
| A-440 | I-8 | II-55 |
| A-441 | I-9 | II-1 |
| A-442 | I-9 | II-2 |
| A-443 | I-9 | II-2 |
| A-444 | I-9 | II-3 |
| A-445 | I-9 | II-4 |
| A-446 | I-9 | II-5 |
| A-447 | I-9 | II-6 |
| A-448 | I-9 | II-7 |

| Mixt. | Co. 1 | Co. 2 |
|---|---|---|
| A-449 | I-9 | II-8 |
| A-450 | I-9 | II-9 |
| A-451 | I-9 | II-10 |
| A-452 | I-9 | II-11 |
| A-453 | I-9 | II-12 |
| A-454 | I-9 | II-13 |
| A-455 | I-9 | II-14 |
| A-456 | I-9 | II-15 |
| A-457 | I-9 | II-16 |
| A-458 | I-9 | II-17 |
| A-459 | I-9 | II-18 |
| A-460 | I-9 | II-19 |
| A-461 | I-9 | II-20 |
| A-462 | I-9 | II-21 |
| A-463 | I-9 | II-22 |
| A-464 | I-9 | II-23 |
| A-465 | I-9 | II-24 |
| A-466 | I-9 | II-25 |
| A-467 | I-9 | II-26 |
| A-468 | I-9 | II-27 |
| A-469 | I-9 | II-28 |
| A-470 | I-9 | II-29 |
| A-471 | I-9 | II-30 |
| A-472 | I-9 | II-31 |
| A-473 | I-9 | II-32 |
| A-474 | I-9 | II-33 |
| A-475 | I-9 | II-34 |
| A-476 | I-9 | II-35 |
| A-477 | I-9 | II-36 |
| A-478 | I-9 | II-37 |
| A-479 | I-9 | II-38 |
| A-480 | I-9 | II-39 |
| A-481 | I-9 | II-40 |
| A-482 | I-9 | II-41 |
| A-483 | I-9 | II-42 |
| A-484 | I-9 | II-43 |
| A-485 | I-9 | II-44 |
| A-486 | I-9 | II-45 |
| A-487 | I-9 | II-46 |
| A-488 | I-9 | II-47 |
| A-489 | I-9 | II-48 |

| Mixt. | Co. 1 | Co. 2 |
|---|---|---|
| A-490 | I-9 | II-50 |
| A-491 | I-9 | II-51 |
| A-492 | I-9 | II-52 |
| A-493 | I-9 | II-53 |
| A-494 | I-9 | II-54 |
| A-495 | I-9 | II-55 |
| A-496 | I-10 | II-1 |
| A-497 | I-10 | II-2 |
| A-498 | I-10 | II-2 |
| A-499 | I-10 | II-3 |
| A-500 | I-10 | II-4 |
| A-501 | I-10 | II-5 |
| A-502 | I-10 | II-6 |
| A-503 | I-10 | II-7 |
| A-504 | I-10 | II-8 |
| A-505 | I-10 | II-9 |
| A-506 | I-10 | II-10 |
| A-507 | I-10 | II-11 |
| A-508 | I-10 | II-12 |
| A-509 | I-10 | II-13 |
| A-510 | I-10 | II-14 |
| A-511 | I-10 | II-15 |
| A-512 | I-10 | II-16 |
| A-513 | I-10 | II-17 |
| A-514 | I-10 | II-18 |
| A-515 | I-10 | II-19 |
| A-516 | I-10 | II-20 |
| A-517 | I-10 | II-21 |
| A-518 | I-10 | II-22 |
| A-519 | I-10 | II-23 |
| A-520 | I-10 | II-24 |
| A-521 | I-10 | II-25 |
| A-522 | I-10 | II-26 |
| A-523 | I-10 | II-27 |
| A-524 | I-10 | II-28 |
| A-525 | I-10 | II-29 |
| A-526 | I-10 | II-30 |
| A-527 | I-10 | II-31 |
| A-528 | I-10 | II-32 |
| A-529 | I-10 | II-33 |
| A-530 | I-10 | II-34 |

| Mixt. | Co. 1 | Co. 2 |
|---|---|---|
| A-531 | I-10 | II-35 |
| A-532 | I-10 | II-36 |
| A-533 | I-10 | II-37 |
| A-534 | I-10 | II-38 |
| A-535 | I-10 | II-39 |
| A-536 | I-10 | II-40 |
| A-537 | I-10 | II-41 |
| A-538 | I-10 | II-42 |
| A-539 | I-10 | II-43 |
| A-540 | I-10 | II-44 |
| A-541 | I-10 | II-45 |
| A-542 | I-10 | II-46 |
| A-543 | I-10 | II-47 |
| A-544 | I-10 | II-48 |
| A-545 | I-10 | II-50 |
| A-546 | I-10 | II-51 |
| A-547 | I-10 | II-52 |
| A-548 | I-10 | II-53 |
| A-549 | I-10 | II-54 |
| A-550 | I-10 | II-55 |
| A-551 | I-11 | II-1 |
| A-552 | I-11 | II-2 |
| A-553 | I-11 | II-2 |
| A-554 | I-11 | II-3 |
| A-555 | I-11 | II-4 |
| A-556 | I-11 | II-5 |
| A-557 | I-11 | II-6 |
| A-558 | I-11 | II-7 |
| A-559 | I-11 | II-8 |
| A-560 | I-11 | II-9 |
| A-561 | I-11 | II-10 |
| A-562 | I-11 | II-11 |
| A-563 | I-11 | II-12 |
| A-564 | I-11 | II-13 |
| A-565 | I-11 | II-14 |
| A-566 | I-11 | II-15 |
| A-567 | I-11 | II-16 |
| A-568 | I-11 | II-17 |
| A-569 | I-11 | II-18 |
| A-570 | I-11 | II-19 |
| A-571 | I-11 | II-20 |

| Mixt. | Co. 1 | Co. 2 |
|---|---|---|
| A-572 | I-11 | II-21 |
| A-573 | I-11 | II-22 |
| A-574 | I-11 | II-23 |
| A-575 | I-11 | II-24 |
| A-576 | I-11 | II-25 |
| A-577 | I-11 | II-26 |
| A-578 | I-11 | II-27 |
| A-579 | I-11 | II-28 |
| A-580 | I-11 | II-29 |
| A-581 | I-11 | II-30 |
| A-582 | I-11 | II-31 |
| A-583 | I-11 | II-32 |
| A-584 | I-11 | II-33 |
| A-585 | I-11 | II-34 |
| A-586 | I-11 | II-35 |
| A-587 | I-11 | II-36 |
| A-588 | I-11 | II-37 |
| A-589 | I-11 | II-38 |
| A-590 | I-11 | II-39 |
| A-591 | I-11 | II-40 |
| A-592 | I-11 | II-41 |
| A-593 | I-11 | II-42 |
| A-594 | I-11 | II-43 |
| A-595 | I-11 | II-44 |
| A-596 | I-11 | II-45 |
| A-597 | I-11 | II-46 |
| A-598 | I-11 | II-47 |
| A-599 | I-11 | II-48 |
| A-600 | I-11 | II-50 |
| A-601 | I-11 | II-51 |
| A-602 | I-11 | II-52 |
| A-603 | I-11 | II-53 |
| A-604 | I-11 | II-54 |
| A-605 | I-11 | II-55 |
| A-606 | I-12 | II-1 |
| A-607 | I-12 | II-2 |
| A-608 | I-12 | II-2 |
| A-609 | I-12 | II-3 |
| A-610 | I-12 | II-4 |
| A-611 | I-12 | II-5 |
| A-612 | I-12 | II-6 |

| Mixt. | Co. 1 | Co. 2 |
|---|---|---|
| A-613 | I-12 | II-7 |
| A-614 | I-12 | II-8 |
| A-615 | I-12 | II-9 |
| A-616 | I-12 | II-10 |
| A-617 | I-12 | II-11 |
| A-618 | I-12 | II-12 |
| A-619 | I-12 | II-13 |
| A-620 | I-12 | II-14 |
| A-621 | I-12 | II-15 |
| A-622 | I-12 | II-16 |
| A-623 | I-12 | II-17 |
| A-624 | I-12 | II-18 |
| A-625 | I-12 | II-19 |
| A-626 | I-12 | II-20 |
| A-627 | I-12 | II-21 |
| A-628 | I-12 | II-22 |
| A-629 | I-12 | II-23 |
| A-630 | I-12 | II-24 |
| A-631 | I-12 | II-25 |
| A-632 | I-12 | II-26 |
| A-633 | I-12 | II-27 |
| A-634 | I-12 | II-28 |
| A-635 | I-12 | II-29 |
| A-636 | I-12 | II-30 |
| A-637 | I-12 | II-31 |
| A-638 | I-12 | II-32 |
| A-639 | I-12 | II-33 |
| A-640 | I-12 | II-34 |
| A-641 | I-12 | II-35 |
| A-642 | I-12 | II-36 |
| A-643 | I-12 | II-37 |
| A-644 | I-12 | II-38 |
| A-645 | I-12 | II-39 |
| A-646 | I-12 | II-40 |
| A-647 | I-12 | II-41 |
| A-648 | I-12 | II-42 |
| A-649 | I-12 | II-43 |
| A-650 | I-12 | II-44 |
| A-651 | I-12 | II-45 |
| A-652 | I-12 | II-46 |
| A-653 | I-12 | II-47 |

| Mixt. | Co. 1 | Co. 2 |
|---|---|---|
| A-654 | I-12 | II-48 |
| A-655 | I-12 | II-50 |
| A-656 | I-12 | II-51 |
| A-657 | I-12 | II-52 |
| A-658 | I-12 | II-53 |
| A-659 | I-12 | II-54 |
| A-660 | I-12 | II-55 |
| A-661 | I-13 | II-1 |
| A-662 | I-13 | II-2 |
| A-663 | I-13 | II-2 |
| A-664 | I-13 | II-3 |
| A-665 | I-13 | II-4 |
| A-666 | I-13 | II-5 |
| A-667 | I-13 | II-6 |
| A-668 | I-13 | II-7 |
| A-669 | I-13 | II-8 |
| A-670 | I-13 | II-9 |
| A-671 | I-13 | II-10 |
| A-672 | I-13 | II-11 |
| A-673 | I-13 | II-12 |
| A-674 | I-13 | II-13 |
| A-675 | I-13 | II-14 |
| A-676 | I-13 | II-15 |
| A-677 | I-13 | II-16 |
| A-678 | I-13 | II-17 |
| A-679 | I-13 | II-18 |
| A-680 | I-13 | II-19 |
| A-681 | I-13 | II-20 |
| A-682 | I-13 | II-21 |
| A-683 | I-13 | II-22 |
| A-684 | I-13 | II-23 |
| A-685 | I-13 | II-24 |
| A-686 | I-13 | II-25 |
| A-687 | I-13 | II-26 |
| A-688 | I-13 | II-27 |
| A-689 | I-13 | II-28 |
| A-690 | I-13 | II-29 |
| A-691 | I-13 | II-30 |
| A-692 | I-13 | II-31 |
| A-693 | I-13 | II-32 |
| A-694 | I-13 | II-33 |

| Mixt. | Co. 1 | Co. 2 |
|---|---|---|
| A-695 | I-13 | II-34 |
| A-696 | I-13 | II-35 |
| A-697 | I-13 | II-36 |
| A-698 | I-13 | II-37 |
| A-699 | I-13 | II-38 |
| A-700 | I-13 | II-39 |
| A-701 | I-13 | II-40 |
| A-702 | I-13 | II-41 |
| A-703 | I-13 | II-42 |
| A-704 | I-13 | II-43 |
| A-705 | I-13 | II-44 |
| A-706 | I-13 | II-45 |
| A-707 | I-13 | II-46 |
| A-708 | I-13 | II-47 |
| A-709 | I-13 | II-48 |
| A-710 | I-13 | II-50 |
| A-711 | I-13 | II-51 |
| A-712 | I-13 | II-52 |
| A-713 | I-13 | II-53 |
| A-714 | I-13 | II-54 |
| A-715 | I-13 | II-55 |
| A-716 | I-14 | II-1 |
| A-717 | I-14 | II-2 |
| A-718 | I-14 | II-2 |
| A-719 | I-14 | II-3 |
| A-720 | I-14 | II-4 |
| A-721 | I-14 | II-5 |
| A-722 | I-14 | II-6 |
| A-723 | I-14 | II-7 |
| A-724 | I-14 | II-8 |
| A-725 | I-14 | II-9 |
| A-726 | I-14 | II-10 |
| A-727 | I-14 | II-11 |
| A-728 | I-14 | II-12 |
| A-729 | I-14 | II-13 |
| A-730 | I-14 | II-14 |
| A-731 | I-14 | II-15 |
| A-732 | I-14 | II-16 |
| A-733 | I-14 | II-17 |
| A-734 | I-14 | II-18 |
| A-735 | I-14 | II-19 |

| Mixt. | Co. 1 | Co. 2 |
|---|---|---|
| A-736 | I-14 | II-20 |
| A-737 | I-14 | II-21 |
| A-738 | I-14 | II-22 |
| A-739 | I-14 | II-23 |
| A-740 | I-14 | II-24 |
| A-741 | I-14 | II-25 |
| A-742 | I-14 | II-26 |
| A-743 | I-14 | II-27 |
| A-744 | I-14 | II-28 |
| A-745 | I-14 | II-29 |
| A-746 | I-14 | II-30 |
| A-747 | I-14 | II-31 |
| A-748 | I-14 | II-32 |
| A-749 | I-14 | II-33 |
| A-750 | I-14 | II-34 |
| A-751 | I-14 | II-35 |
| A-752 | I-14 | II-36 |
| A-753 | I-14 | II-37 |
| A-754 | I-14 | II-38 |
| A-755 | I-14 | II-39 |
| A-756 | I-14 | II-40 |
| A-757 | I-14 | II-41 |
| A-758 | I-14 | II-42 |
| A-759 | I-14 | II-43 |
| A-760 | I-14 | II-44 |
| A-761 | I-14 | II-45 |
| A-762 | I-14 | II-46 |
| A-763 | I-14 | II-47 |
| A-764 | I-14 | II-48 |
| A-765 | I-14 | II-50 |
| A-766 | I-14 | II-51 |
| A-767 | I-14 | II-52 |
| A-768 | I-14 | II-53 |
| A-769 | I-14 | II-54 |
| A-770 | I-14 | II-55 |
| A-771 | I-15 | II-1 |
| A-772 | I-15 | II-2 |
| A-773 | I-15 | II-2 |
| A-774 | I-15 | II-3 |
| A-775 | I-15 | II-4 |
| A-776 | I-15 | II-5 |

| Mixt. | Co. 1 | Co. 2 |
|---|---|---|
| A-777 | I-15 | II-6 |
| A-778 | I-15 | II-7 |
| A-779 | I-15 | II-8 |
| A-780 | I-15 | II-9 |
| A-781 | I-15 | II-10 |
| A-782 | I-15 | II-11 |
| A-783 | I-15 | II-12 |
| A-784 | I-15 | II-13 |
| A-785 | I-15 | II-14 |
| A-786 | I-15 | II-15 |
| A-787 | I-15 | II-16 |
| A-788 | I-15 | II-17 |
| A-789 | I-15 | II-18 |
| A-790 | I-15 | II-19 |
| A-791 | I-15 | II-20 |
| A-792 | I-15 | II-21 |
| A-793 | I-15 | II-22 |
| A-794 | I-15 | II-23 |
| A-795 | I-15 | II-24 |
| A-796 | I-15 | II-25 |
| A-797 | I-15 | II-26 |
| A-798 | I-15 | II-27 |
| A-799 | I-15 | II-28 |
| A-800 | I-15 | II-29 |
| A-801 | I-15 | II-30 |
| A-802 | I-15 | II-31 |
| A-803 | I-15 | II-32 |
| A-804 | I-15 | II-33 |
| A-805 | I-15 | II-34 |
| A-806 | I-15 | II-35 |
| A-807 | I-15 | II-36 |
| A-808 | I-15 | II-37 |
| A-809 | I-15 | II-38 |
| A-810 | I-15 | II-39 |
| A-811 | I-15 | II-40 |
| A-812 | I-15 | II-41 |
| A-813 | I-15 | II-42 |
| A-814 | I-15 | II-43 |
| A-815 | I-15 | II-44 |
| A-816 | I-15 | II-45 |
| A-817 | I-15 | II-46 |

| Mixt. | Co. 1 | Co. 2 |
|---|---|---|
| A-818 | I-15 | II-47 |
| A-819 | I-15 | II-48 |
| A-820 | I-15 | II-50 |
| A-821 | I-15 | II-51 |
| A-822 | I-15 | II-52 |
| A-823 | I-15 | II-53 |
| A-824 | I-15 | II-54 |
| A-825 | I-15 | II-55 |
| A-826 | I-16 | II-1 |
| A-827 | I-16 | II-2 |
| A-828 | I-16 | II-2 |
| A-829 | I-16 | II-3 |
| A-830 | I-16 | II-4 |
| A-831 | I-16 | II-5 |
| A-832 | I-16 | II-6 |
| A-833 | I-16 | II-7 |
| A-834 | I-16 | II-8 |
| A-835 | I-16 | II-9 |
| A-836 | I-16 | II-10 |
| A-837 | I-16 | II-11 |
| A-838 | I-16 | II-12 |
| A-839 | I-16 | II-13 |
| A-840 | I-16 | II-14 |
| A-841 | I-16 | II-15 |
| A-842 | I-16 | II-16 |
| A-843 | I-16 | II-17 |
| A-844 | I-16 | II-18 |
| A-845 | I-16 | II-19 |
| A-846 | I-16 | II-20 |
| A-847 | I-16 | II-21 |
| A-848 | I-16 | II-22 |
| A-849 | I-16 | II-23 |
| A-850 | I-16 | II-24 |
| A-851 | I-16 | II-25 |
| A-852 | I-16 | II-26 |
| A-853 | I-16 | II-27 |
| A-854 | I-16 | II-28 |
| A-855 | I-16 | II-29 |
| A-856 | I-16 | II-30 |
| A-857 | I-16 | II-31 |
| A-858 | I-16 | II-32 |

| Mixt. | Co. 1 | Co. 2 | Mixt. | Co. 1 | Co. 2 | Mixt. | Co. 1 | Co. 2 |
|---|---|---|---|---|---|---|---|---|
| A-859 | I-16 | II-33 | A-900 | I-17 | II-19 | A-941 | I-18 | II-5 |
| A-860 | I-16 | II-34 | A-901 | I-17 | II-20 | A-942 | I-18 | II-6 |
| A-861 | I-16 | II-35 | A-902 | I-17 | II-21 | A-943 | I-18 | II-7 |
| A-862 | I-16 | II-36 | A-903 | I-17 | II-22 | A-944 | I-18 | II-8 |
| A-863 | I-16 | II-37 | A-904 | I-17 | II-23 | A-945 | I-18 | II-9 |
| A-864 | I-16 | II-38 | A-905 | I-17 | II-24 | A-946 | I-18 | II-10 |
| A-865 | I-16 | II-39 | A-906 | I-17 | II-25 | A-947 | I-18 | II-11 |
| A-866 | I-16 | II-40 | A-907 | I-17 | II-26 | A-948 | I-18 | II-12 |
| A-867 | I-16 | II-41 | A-908 | I-17 | II-27 | A-949 | I-18 | II-13 |
| A-868 | I-16 | II-42 | A-909 | I-17 | II-28 | A-950 | I-18 | II-14 |
| A-869 | I-16 | II-43 | A-910 | I-17 | II-29 | A-951 | I-18 | II-15 |
| A-870 | I-16 | II-44 | A-911 | I-17 | II-30 | A-952 | I-18 | II-16 |
| A-871 | I-16 | II-45 | A-912 | I-17 | II-31 | A-953 | I-18 | II-17 |
| A-872 | I-16 | II-46 | A-913 | I-17 | II-32 | A-954 | I-18 | II-18 |
| A-873 | I-16 | II-47 | A-914 | I-17 | II-33 | A-955 | I-18 | II-19 |
| A-874 | I-16 | II-48 | A-915 | I-17 | II-34 | A-956 | I-18 | II-20 |
| A-875 | I-16 | II-50 | A-916 | I-17 | II-35 | A-957 | I-18 | II-21 |
| A-876 | I-16 | II-51 | A-917 | I-17 | II-36 | A-958 | I-18 | II-22 |
| A-877 | I-16 | II-52 | A-918 | I-17 | II-37 | A-959 | I-18 | II-23 |
| A-878 | I-16 | II-53 | A-919 | I-17 | II-38 | A-960 | I-18 | II-24 |
| A-879 | I-16 | II-54 | A-920 | I-17 | II-39 | A-961 | I-18 | II-25 |
| A-880 | I-16 | II-55 | A-921 | I-17 | II-40 | A-962 | I-18 | II-26 |
| A-881 | I-17 | II-1 | A-922 | I-17 | II-41 | A-963 | I-18 | II-27 |
| A-882 | I-17 | II-2 | A-923 | I-17 | II-42 | A-964 | I-18 | II-28 |
| A-883 | I-17 | II-2 | A-924 | I-17 | II-43 | A-965 | I-18 | II-29 |
| A-884 | I-17 | II-3 | A-925 | I-17 | II-44 | A-966 | I-18 | II-30 |
| A-885 | I-17 | II-4 | A-926 | I-17 | II-45 | A-967 | I-18 | II-31 |
| A-886 | I-17 | II-5 | A-927 | I-17 | II-46 | A-968 | I-18 | II-32 |
| A-887 | I-17 | II-6 | A-928 | I-17 | II-47 | A-969 | I-18 | II-33 |
| A-888 | I-17 | II-7 | A-929 | I-17 | II-48 | A-970 | I-18 | II-34 |
| A-889 | I-17 | II-8 | A-930 | I-17 | II-50 | A-971 | I-18 | II-35 |
| A-890 | I-17 | II-9 | A-931 | I-17 | II-51 | A-972 | I-18 | II-36 |
| A-891 | I-17 | II-10 | A-932 | I-17 | II-52 | A-973 | I-18 | II-37 |
| A-892 | I-17 | II-11 | A-933 | I-17 | II-53 | A-974 | I-18 | II-38 |
| A-893 | I-17 | II-12 | A-934 | I-17 | II-54 | A-975 | I-18 | II-39 |
| A-894 | I-17 | II-13 | A-935 | I-17 | II-55 | A-976 | I-18 | II-40 |
| A-895 | I-17 | II-14 | A-936 | I-18 | II-1 | A-977 | I-18 | II-41 |
| A-896 | I-17 | II-15 | A-937 | I-18 | II-2 | A-978 | I-18 | II-42 |
| A-897 | I-17 | II-16 | A-938 | I-18 | II-2 | A-979 | I-18 | II-43 |
| A-898 | I-17 | II-17 | A-939 | I-18 | II-3 | A-980 | I-18 | II-44 |
| A-899 | I-17 | II-18 | A-940 | I-18 | II-4 | A-981 | I-18 | II-45 |

| Mixt. | Co. 1 | Co. 2 |
|---|---|---|
| A-982 | I-18 | II-46 |
| A-983 | I-18 | II-47 |
| A-984 | I-18 | II-48 |

| Mixt. | Co. 1 | Co. 2 |
|---|---|---|
| A-985 | I-18 | II-50 |
| A-986 | I-18 | II-51 |
| A-987 | I-18 | II-52 |

| Mixt. | Co. 1 | Co. 2 |
|---|---|---|
| A-988 | I-18 | II-53 |
| A-989 | I-18 | II-54 |
| A-990 | I-18 | II-55 |

The mixtures and compositions thereof according to the invention can, in the use form as fungicides, also be present together with other active substances, e. g. with herbicides, insecticides, growth regulators, fungicides or else with fertilizers, as pre-mix or, if appropriate, not until immeadiately prior to use (tank mix).

Mixing the compounds I and compounds II and the compositions comprising them, respectively, in the use form as fungicides with other fungicides results in many cases in an expansion of the fungicidal spectrum of activity being obtained or in a prevention of fungicide resistance development. Furthermore, in many cases, synergistic effects are obtained.

According to the present invention, it may be preferred that the mixtures comprise besides one compound I and one compound II as component 3) a further active compound or biopesticide III (resulting ion ternary mixtures), preferably in a synergistically effective amount.

Another embodiment relates to ternary mixtures comprising, as active components

1) at least one compound of formula I

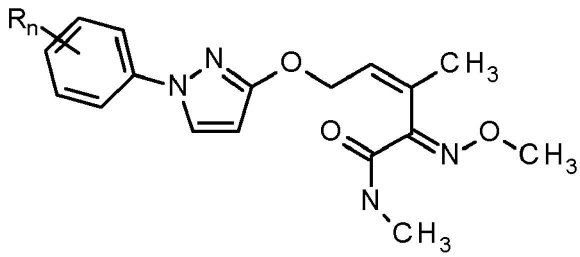

I,

wherein

n is an integer and is 0, 1, 2, 3, 4 or 5; and

R , which may be the same or different to any other R, is halogen, hydroxyl, carboxyl, $C_1$-$C_4$-alkyl, $C_2$-$C_4$-alkenyl, $C_2$-$C_8$-alkynyl, $C_1$-$C_4$-haloalkyl, $C_1$-$C_4$-alkoxy, $C_1$-$C_4$-halo-alkoxy, $C_1$-$C_4$-alkylsulfanyl, $C_1$-$C_4$-haloalkylsulfanyl, $C_1$-$C_6$-alkoxyimino-$C_1$-$C_4$-alkyl, $C_2$-$C_6$-alkenyloxyimino-$C_1$-$C_4$-alkyl, $C_2$-$C_6$-alkynyloxyimino-$C_1$-$C_4$-alkyl, $C_1$-$C_4$-alkoxyimino-$C_1$-$C_4$-alkyl, $C_1$-$C_6$-alkoxyimino-,$C_2$-$C_6$-alkenyloxyimino-,$C_2$-$C_6$-alkynyloxyimino-, $C_2$-$C_6$-haloalkenyloxyimino-,$C_3$-$C_6$-cycloalkyl, $C_3$-$C_6$-cycloalkenyl, phenyl or a 5-membered saturated, partially unsaturated or aromatic heterocyclyl which, in addition to carbon atoms, contains one to three heteroatoms from the group consisting of N, O and S as ring members; wherein the aforementioned cyclic groups R are attached via a direct bond, an oxygen or sulfur atom and where the aliphatic or cyclic groups $R^c$ for their part may carry 1, 2, 3 or up to the maximum possible number of identical or different groups $R^a$:

$R^a$, which may be the same or different to any other $R^a$, is halogen, $C_1$-$C_4$-alkyl or $C_1$-$C_4$-haloalkyl; and

2) at least one active compound or biopesticide II selected from groups A) to O):

A) Respiration inhibitors selected from

- Inhibitors of complex III at $Q_o$ site: azoxystrobin (II-1), coumethoxystrobin, coumoxystrobin, dimoxystrobin (II-2), enestroburin, fenaminstrobin, fenoxy-strobin/flufenoxystrobin, fluoxastrobin (II-3), kresoxim-methyl (II-4), metominostrobin, orysastrobin (II-5), picoxystrobin (II-6), pyraclostrobin (II-7), pyrametostrobin, pyraoxystrobin, trifloxystrobin (II-8), 2-[2-(2,5-dimethyl-phenoxymethyl)-phenyl]-3-methoxy-acrylic acid methyl ester and 2-(2-(3-(2,6-dichlorophenyl)-1-methyl-allylidene-aminooxymethyl)-phenyl)-2-methoxyimino-N-methyl-acetamide, pyribencarb, triclopyricarb/chlorodincarb, famoxadone, fenamidone;
- inhibitors of complex III at $Q_i$ site: cyazofamid, amisulbrom, [(3S,6S,7R,8R)-8-benzyl-3-[(3-acetoxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(acetoxymethoxy)-4-methoxy-pyridine-2-carbonyl]amino]-6-methyl-4,9-dioxo-1,5-dioxonan-7-yl] 2-methylpropanoate, [(3S,6S,7R,8R)-8-benzyl-3-[(3-isobutoxycarbonyloxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(1,3-benzodioxol-5-ylmethoxy)-4-methoxy-pyridine-2-carbonyl]amino]-6-methyl-4,9-dioxo-1,5-dioxonan-7-yl] 2-methylpropanoate; (3S,6S,7R,8R)-3-[[(3-hydroxy-4-methoxy-2-pyridinyl)carbonyl]amino]-6-methyl-4,9-dioxo-8-(phenylmethyl)-1,5-dioxonan-7-yl2-methylpropanoate

- inhibitors of complex II: benodanil, benzovindiflupyr (II-9), bixafen (II-10), boscalid (II-11), carboxin, fenfuram, fluopyram (II-12), flutolanil, fluxapyroxad (II-13), furametpyr, isofetamid, isopyrazam (II-14), mepronil, oxycarboxin, penflufen (II-15), penthiopyrad (II-16), sedaxane (II-17), tecloftalam, thifluzamide, N-(4'-trifluoromethylthiobiphenyl-2-yl)-3-difluoromethyl-1-methyl-1 H-pyrazole-4-carboxamide, N-(2-(1,3,3-trimethylbutyl)-phenyl)-1,3-dimethyl-5-fluoro-1H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethyl-indan-4-yl)pyrazole-4-carboxamide, 3-(trifluoromethyl)-1,5-dimethyl-N-(1,1,3-trimethylindan-4-yl)pyrazole-4-carboxamide, 1,3,5-trimethyl-N-(1,1,3-trimethylindan-4yl)pyrazole-4-carboxamide, N-(7-fluoro-1,1,3-trimethyl-indan-4-yl)-1,3-dimethyl-pyrazole-4-carboxamide, N-[2-(2,4-dichlorophenyl)-2-methoxy-1-methyl-ethyl]-3-(difluoromethyl)-1-methyl-pyrazole-4-carboxamide;
- other respiration inhibitors: diflumetorim, (5,8-difluoroquinazolin-4-yl)-{2-[2-fluoro-4-(4-trifluoromethylpyridin-2-yloxy)-phenyl]-ethyl}-amine; binapacryl, dinobuton, dinocap, fluazinam (I-18); ferimzone; fentin salts such as fentin-acetate, fentin chloride or fentin hydroxide; ametoctradin (I-19); and silthiofam;

B) Sterol biosynthesis inhibitors (SBI fungicides) selected from

- C14 demethylase inhibitors (DMI fungicides): azaconazole, bitertanol, bromuconazole, cyproconazole (I-20), difenoconazole (I-21), diniconazole, diniconazole-M, epoxiconazole (I-22), fenbuconazole, fluquinconazole (I-23), flusilazole, flutriafol, hexaconazole, imibenconazole, ipconazole, metconazole (I-24), myclobutanil, oxpoconazole, paclobutrazole, penconazole, propiconazole (I-25), prothioconazole (I-26), simeconazole, tebuconazole (I-27), tetraconazole, triadimefon, triadimenol, triticonazole, uniconazole, 1-[*rel*-(2*S*;3*R*)-3-(2-chlorophenyl)-2-(2,4-difluorophenyl)-oxiranylmethyl]-5-thiocyanato-1H-[1,2,4]triazolo (I-28), 2-[*rel*-(2*S*;3*R*)-3-(2-chlorophenyl)-2-(2,4-di-fluorophenyl)-oxiranylmethyl]-2H-[1,2,4]triazole-3-thiol (I-29), 2-[2-chloro-4-(4-chlorophenoxy)phenyl]-1-(1,2,4-triazol-1-yl)pentan-2-ol, 1-[4-(4-chlorophenoxy)-2-(trifluoromethyl)phenyl]-1-cyclopropyl-2-(1,2,4-triazol-1-yl)ethanol (I-30), 2-[4-(4-chlorophenoxy)-2-(trifluoromethyl)phenyl]-1-(1,2,4-triazol-1-yl)butan-2-ol (I-31), 2-[2-chloro-4-(4-chlorophenoxy)phenyl]-1-(1,2,4-triazol-1-yl)butan-2-ol (I-32), 2-[4-(4-chlorophenoxy)-2-(trifluoromethyl)phenyl]-3-methyl-1-(1,2,4-triazol-1-yl)butan-2-ol (I-33), 2-[4-(4-chlorophenoxy)-2-(thfluoromethyl)phenyl]-1-(1,2,4-triazol-1-yl)propan-2-ol (I-34), 2-[2-chloro-4-(4-chlorophenoxy)phenyl]-3-methyl-1-(1,2,4-triazol-1-yl)butan-2-ol (I-35), 2-[4-(4-chlorophenoxy)-2-(trifluoromethyl)phenyl]-1-(1,2,4-triazol-1-yl)pentan-2-ol (I-36), 2-[4-(4-fluorophenoxy)-2-(trifluoromethyl)phenyl]-1-(1,2,4-triazol-1-yl)propan-2-ol (I-37); imazalil, pefurazoate, prochloraz, triflumizol; fenarimol, nuarimol, pyrifenox, triforine, [3-(4-chloro-2-fluoro-phenyl)-5-(2,4-difluorophenyl)isoxazol-4-yl]-(3-pyridyl)methanol;
- Delta14-reductase inhibitors: aldimorph, dodemorph, dodemorph-acetate, fenpropimorph, tridemorph, fenpropidin, piperalin, spiroxamine;
- Inhibitors of 3-keto reductase: fenhexamid;

C) Nucleic acid synthesis inhibitors selected from

- phenylamides or acyl amino acid fungicides: benalaxyl, benalaxyl-M, kiralaxyl, metalaxyl, metalaxyl-M (mefenoxam) (I-38), ofurace, oxadixyl;
- others: hymexazole, octhilinone, oxolinic acid, bupirimate, 5-fluorocytosine, 5-fluoro-2-(p-tolylmethoxy)pyrimidin-4-amine, 5-fluoro-2-(4-fluorophenylmethoxy)pyrimidin-4-amine;

D) Inhibitors of cell division and cytoskeleton selected from

- tubulin inhibitors: benomyl, carbendazim, fuberidazole, thiabendazole, thiophanate-methyl (I-39); 5-chloro-7-(4-methylpiperidin-1-yl)-6-(2,4,6-trifluorophenyl)-[1,2,4]triazolo[1,5-a]pyrimidine
- other cell division inhibitors: diethofencarb, ethaboxam, pencycuron, fluopicolide, zoxamide, metrafenone (I-40), pyriofenone;

E) Inhibitors of amino acid and protein synthesis selected from

- methionine synthesis inhibitors (anilino-pyrimidines): cyprodinil, mepanipyrim, Pyrimethanil (I-41);
- protein synthesis inhibitors: blasticidin-S, kasugamycin, kasugamycin hydrochloride-hydrate, mildiomycin, streptomycin, oxytetracyclin, polyoxine, validamycin A;

F) Signal transduction inhibitors selected from

- MAP / histidine kinase inhibitors: fluoroimid, iprodione, procymidone, vinclozolin, fenpiclonil, fludioxonil;
- G protein inhibitors: quinoxyfen;

G) Lipid and membrane synthesis inhibitors selected from

- Phospholipid biosynthesis inhibitors: edifenphos, iprobenfos, pyrazophos, isoprothiolane;
- lipid peroxidation: dicloran, quintozene, tecnazene, tolclofos-methyl, biphenyl, chloroneb, etridiazole;
- phospholipid biosynthesis and cell wall deposition: dimethomorph (I-42), flumorph, mandipropamid (I-43), pyrimorph, benthiavalicarb, iprovalicarb, valifenalate, N-(1-(1-(4-cyano-phenyl)ethanesulfonyl)-but-2-yl) carbamic acid-(4-fluorophenyl) ester;
- compounds affecting cell membrane permeability and fatty acides: propamocarb, propamocarb-hydrochlorid;
- fatty acid amide hydrolase inhibitors: oxathiapiprolin;

H) Inhibitors with Multi Site Action selected from

- inorganic active substances: Bordeaux mixture, copper acetate, copper hydroxide, copper oxychloride (I-44), basic copper sulfate, sulfur;
- thio- and dithiocarbamates: ferbam, mancozeb (I-45), maneb, metam, metiram (I-46), propineb, thiram, zineb, ziram;
- organochlorine compounds: anilazine, Chlorothalonil (I-47), captafol, captan, folpet, dichlofluanid, dichlorophen, hexachlorobenzene, pentachlorophenole and its salts, phthalide, tolylfluanid, N-(4-chloro-2-nitrophenyl)-N-ethyl-4-methyl-benzenesulfonamide;
- guanidines and others: guanidine, dodine, dodine free base, guazatine, guazatine-acetate, iminoctadine, iminoctadine-triacetate, iminoctadine-tris(albesilate), dithianon, 2,6-dimethyl-1 H,5H-[1,4]dithiino[2,3-c:5,6-c']dipyrrole-1,3,5,7(2H,6H)-tetraone (I-48);

I) Cell wall synthesis inhibitors selected from

- inhibitors of glucan synthesis: validamycin, polyoxin B;
- melanin synthesis inhibitors: pyroquilon, tricyclazole, carpropamid, dicyclomet, fenoxanil;

J) Plant defence inducers selected from

- acibenzolar-S-methyl, probenazole, isotianil, tiadinil, prohexadione-calcium; fosetyl, fosetyl-aluminum, phosphorous acid and its salts (I-49);

K) Unknown mode of action selected from
bronopol, chinomethionat, cyflufenamid, cymoxanil, dazomet, debacarb, diclomezine, difenzoquat, difenzoquat-methylsulfate, diphenylamin, fenpyrazamine, flumetover, flusulfamide, flutianil, methasulfocarb, nitrapyrin, nitrothal-isopropyl, oxathiapiprolin, tolprocarb, 2-[3,5-bis(difluoromethyl)-1H-pyrazol-1-yl]-1-[4-(4-(5-[2-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-fluoro-6-(prop-2-yn-1-yl-oxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, oxin-copper, proquinazid, tebufloquin, tecloftalam, triazoxide, 2-butoxy-6-iodo-3-propylchromen-4-one, N-(cyclopropylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine,
N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, methoxy-acetic acid 6-tert-butyl-8-fluoro-2,3-dimethyl-quinolin-4-yl ester, 3-[5-(4-methylphenyl)-2,3-dimethyl-isoxazolidin-3-yl]-pyridine, 3-[5-(4-chloro-phenyl)-2,3-dimethyl-isoxazolidin-3-yl]-pyridine (pyrisoxazole), N-(6-methoxy-pyridin-3-yl) cyclopropanecarboxylic acid amide, 5-chloro-1-(4,6-dimethoxy-pyrimidin-2-yl)-2-methyl-1 H-benzoimidazole, 2-(4-chloro-phenyl)-N-[4-(3,4-dimethoxy-phenyl)-isoxazol-5-yl]-2-prop-2-ynyloxy-acetamide, ethyl (Z)-3-amino-2-cyano-3-phenyl-prop-2-enoate, tert-butyl N-[6-[[(Z)-[(1-methyltetrazol-5-yl)-phenyl-methylene]amino]oxymethyl]-2-pyridyl]carbamate, pentyl N-[6-[[(Z)-[(1-methyltetrazol-5-yl)-phenyl-methylene]amino]oxymethyl]-2-pyridyl]carbamate, 2-[2-[(7,8-difluoro-2-methyl-3-quinolyl)oxy]-6-fluoro-phenyl]propan-2-ol, 2-[2-fluoro-6-[(8-fluoro-2-methyl-3-quinolyl)oxy]phenyl]propan-2-ol, 3-(5-fluoro-3,3,4,4-tetramethyl-3,4-dihydroisoquinolin-1-yl)quinoline, 3-(4,4-difluoro-3,3-dimethyl-3,4-dihydroisoquinolin-1-yl)quinoline, 3-(4,4,5-trifluoro-3,3-dimethyl-3,4-dihydroisoquinolin-1-yl)quinoline;

L) antifungal biopesticides selected from

*Ampelomyces quisqualis, Aspergillus flavus, Aureobasidium pullulans, Bacillus pumilus* (I-50), *Bacillus subtilis* (I-51), *Bacillus subtilis* var. *amyloliquefaciens* (I-52), *Candida oleophila* I-82, *Candida saitoana,* Chitosan, *Clonostachys rosea f. catenulata,* also named *Gliocladium catenulatum, Coniothyrium minitans, Cryphonectria parasitica, Cryptococcus albidus, Fusarium oxysporum* (I-53), *Metschnikowia fructicola, Microdochium dimerum, Phlebiopsis gigantea, Pseudozyma flocculosa, Pythium oligandrum* DV74, *Reynoutria sachlinensis, Talaromyces flavus* V117b, *Trichoderma asperellum* SKT-1, *T. atroviride* LC52, *T. harzianum* T-22, *T. harzianum* TH 35, *T. harzianum* T-39; *T. harzianum* and *T. viride, T. harzianum* ICC012 and *T. viride* ICC080; *T. polysporum* and *T. harzianum; T. stromaticum, T. virens* GL-21, *T. viride, T. viride* TV1, *Ulocladium oudemansii* HRU3;

M) Growth regulators selected from

abscisic acid, amidochlor, ancymidol, 6-benzylaminopurine, brassinolide, butralin, chlormequat (chlormequat chloride), choline chloride, cyclanilide, daminozide, dike-gulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (mepiquat chloride) (I-54), naphthaleneacetic acid, N-6-benzyladenine, paclobutrazol, prohexadione (prohexadione-calcium, I-55), prohydrojasmon, thidiazuron, triapenthenol, tributyl phosphorotrithioate, 2,3,5-tri-iodobenzoic acid , trinexapac-ethyl and uniconazole;

N) Herbicides selected from

- acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
- amino acid derivatives: bilanafos, glyphosate, glufosinate, sulfosate;
- aryloxyphenoxypropionates: clodinafop, cyhalofop-butyl, fenoxaprop, fluazifop, haloxyfop, metamifop, propaquizafop, quizalofop, quizalofop-P-tefuryl;
- Bipyridyls: diquat, paraquat;
- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
- cyclohexanediones: butroxydim, clethodim, cycloxydim, profoxydim, sethoxydim, tepraloxydim, tralkoxydim;
- dinitroanilines: benfluralin, ethalfluralin, oryzalin, pendimethalin, prodiamine, trifluralin;
- diphenyl ethers: acifluorfen, aclonifen, bifenox, diclofop, ethoxyfen, fomesafen, lactofen, oxyfluorfen;
- hydroxybenzonitriles: bomoxynil, dichlobenil, ioxynil;
- imidazolinones: imazamethabenz, imazamox, imazapic, imazapyr, imazaquin, imazethapyr;
- phenoxy acetic acids: clomeprop, 2,4-dichlorophenoxyacetic acid (2,4-D), 2,4-DB, dichlorprop, MCPA, MCPA-thioethyl, MCPB, Mecoprop;
- pyrazines: chloridazon, flufenpyr-ethyl, fluthiacet, norflurazon, pyridate;
- pyridines: aminopyralid, clopyralid, diflufenican, dithiopyr, fluridone, fluroxypyr, picloram, picolinafen, thiazopyr;
- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea;
- triazines: ametryn, atrazine, cyanazine, dimethametryn, ethiozin, hexazinone, metamitron, metribuzin, prometryn, simazine, terbuthylazine, terbutryn, triaziflam;
- ureas: chlorotoluron, daimuron, diuron, fluometuron, isoproturon, linuron, metha-benzthiazuron,tebuthiuron;
- other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;

- others: amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidonethyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chloro-phenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester;

O) Insecticides selected from

- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
- pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;
- insect growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;
- nicotinic receptor agonists/antagonists compounds: clothianidin, dinotefuran, flupyradifurone, imidacloprid, thiamethoxam, nitenpyram, acetamiprid, thiacloprid, 1-2-chloro-thiazol-5-ylmethyl)-2-nitrimino-3,5-dimethyl-[1,3,5]triazinane;
- GABA antagonist compounds: endosulfan, ethiprole, fipronil, vaniliprole, pyrafluprole, pyriprole, 5-amino-1 -(2,6-dichloro-4-methyl-phenyl)-4-sulfinamoyl-1 H-pyrazole-3-carbothioic acid amide;
- macrocyclic lactone insecticides: abamectin, emamectin, milbemectin, lepimectin, spinosad, spinetoram;
- mitochondrial electron transport inhibitor (METI) I acaricides: fenazaquin, pyridaben, tebufenpyrad, tolfenpyrad, flufenerim;
- METI II and III compounds: acequinocyl, fluacyprim, hydramethylnon;
- Uncouplers: chlorfenapyr;
- oxidative phosphorylation inhibitors: cyhexatin, diafenthiuron, fenbutatin oxide, propargite;
- moulting disruptor compounds: cryomazine;
- mixed function oxidase inhibitors: piperonyl butoxide;
- sodium channel blockers: indoxacarb, metaflumizone;
- ryanodine receptor inhibitors: chlorantraniliprole, cyantraniliprole, flubendiamide, N-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; N-[4-chloro-2-[(diethyl-lambda-4-sulfanylidene)carbamoyl]-6-methyl-phenyl]-2-(3-chloro-2-pyridyl)-5-(triflu-oromethyl)pyrazole-3-carboxamide; N-[4-chloro-2-[(di-2-propyl-lambda-4-sulfanylidene)carbamoyl]-6-methyl-phenyl]-2-(3-chloro-2-pyridyl)-5-(trifluoromethyl)pyrazole-3-carboxamide; N-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide;N-[4,6-dichloro-2-[(diethyl-lambda-4-sulfanylidene)carbamoyl]-phenyl]-2-(3-chloro-2-pyridyl)-5-(difluoromethyl)pyrazole-3-carboxamide; N-[4,6-dibromo-2-[(di-2-propyl-lambda-4-sulfanylidene)carbamoyl]-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-cyanophenyl]-2-(3-chloro-2-pyridyl)-5-(trifluoromethyl)pyrazole-3-carboxamide;N-[4,6-dibromo-2-[(diethyl-lambda-4-sulfanylidene)carbamoyl]-phenyl]-2-(3-chloro-2-pyridyl)-5-(trifluoromethyl)pyrazole-3-carboxamide;

- others: benclothiaz, bifenazate, cartap, flonicamid, pyridalyl, pymetrozine, sulfur, thiocyclam, cyenopyrafen, flupyrazofos, cyflumetofen, amidoflumet, imicyafos, bistrifluron, pyrifluquinazon and 1,1'-[(3S,4R,4aR,6S,6aS,12R,12aS,12bS)-4-[[(2-cyclopropylacetyl)oxy]methyl]-1,3,4,4a,5,6,6a,12,12a,12b-decahydro-12-hydroxy-4,6a,12b-trimethyl-11-oxo-9-(3-pyridinyl)-2H,11H-naphtho[2,1-b]pyrano[3,4-e]pyran-3,6-diyl] cyclopropaneacetic acid ester;

and

3) at least one further active compound or biopesticide III selected from groups A') to O'):

A') Respiration inhibitors selected from

- Inhibitors of complex III at $Q_o$ site: azoxystrobin, coumethoxystrobin, coumoxystrobin, dimoxystrobin, enestroburin, fenaminstrobin, fenoxystrobin/flufenoxystrobin, fluoxastrobin, kresoxim-methyl, metominostrobin, orysastrobin, picoxystrobin, pyraclostrobin, pyrametostrobin, pyraoxystrobin, trifloxystrobin, 2-[2-(2,5-dimethyl-phenoxymethyl)-phenyl]-3-methoxy-acrylic acid methyl ester, 2-(2-(3-(2,6-dichlorophenyl)-1-methyl-allylideneaminooxymethyl)-phenyl)-2-methoxyimino-N-methyl-acetamide, pyribencarb, triclopyricarb/chlorodincarb, famoxadone, fenamidone;
- inhibitors of complex III at $Q_i$ site: cyazofamid, amisulbrom, [(3S,6S,7R,8R)-8-benzyl-3-[(3-acetoxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(acetoxymethoxy)-4-methoxy-pyridine-2-carbonyl]amino]-6-methyl-4,9-dioxo-1,5-dioxonan-7-yl] 2-methylpropanoate, [(3S,6S,7R,8R)-8-benzyl-3-[(3-isobutoxycarbonyloxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(1,3-benzodioxol-5-ylmethoxy)-4-methoxy-pyridine-2-carbonyl]amino]-6-methyl-4,9-dioxo-1,5-dioxonan-7-yl] 2-methylpropanoate; (3S,6S,7R,8R)-3-[[(3-hydroxy-4-methoxy-2-pyridinyl)carbonyl]amino]-6-methyl-4,9-dioxo-8-(phenylmethyl)-1,5-dioxonan-7-yl 2-methylpropanoate
- inhibitors of complex II: benodanil, benzovindiflupyr, bixafen, boscalid, carboxin, fenfuram, fluopyram, flutolanil, fluxapyroxad, furametpyr, isofetamid, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1H-pyrazole-4-carboxamide, N-(2-(1,3,3-trimethyl-butyl)-phenyl)-1,3-dimethyl-5-fluoro-1H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 1,3,5-trimethyl-N-(1,1,3-trimethylindan-4-yl)pyrazole-4-carboxamide, N-(7-fluoro-1,1,3-trimethyl-indan-4-yl)-1,3-dimethyl-pyrazole-4-carboxamide, N-[2-(2,4-dichlorophenyl)-2-methoxy-1-methyl-ethyl]-3-(difluoromethyl)-1-methylpyrazole-4-carboxamide;
- other respiration inhibitors: diflumetorim, (5,8-difluoroquinazolin-4-yl)-{2-[2-fluoro-4-(4-trifluoromethylpyridin-2-yloxy)-phenyl]-ethyl}-amine; binapacryl, dinobuton, dinocap, fluazinam; ferimzone; fentin salts such as fentin-acetate, fentin chloride or fentin hydroxide; ametoctradin; and silthiofam;

B') Sterol biosynthesis inhibitors (SBI fungicides) selected from

- C14 demethylase inhibitors (DMI fungicides): azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole, 1-[*rel* (2*S*;3*R*)-3-(2-chlorophenyl)-2-(2 ,4-diffuorophenyl)-oxiranylmethyl]-5-thiocyanato-1H-[1,2,4]triazole, 2-[*rel*-(2*S*;3*R*)-3-(2-chlorophenyl)-2-(2,4-difluorophenyl)-oxiranylmethyl]-2H-[1,2,4]triazole-3-thiol, 2-[2-chloro-4-(4-chlorophenoxy)phenyl]-1-(1,2,4-triazol-1-yl)pentan-2-ol, 1-[4-(4-chlorophenoxy)-2-(trifluoromethyl)phenyl]-1-cyclopropyl-2-(1,2,4-triazol-1-yl)ethanol, 2-[4-(4-chlorophenoxy)-2-(trifluoromethyl)phenyl]-1-(1,2,4-triazol-1-yl)butan-2-ol, 2-[2-chloro-4-(4-chlorophenoxy)phenyl]-1-(1,2,4-triazol-1-yl)butan-2-ol, 2-[4-(4-chlorophenoxy)-2-(trifluoromethyl)phenyl]-3-methyl-1-(1,2,4-triazoi-l -yi)butan-2-ol, 2-[4-(4-chlorophenoxy)-2-(trifluoromethyl)phenyl]-1-(1,2,4-triazol-1-yl)propan-2-ol, 2-[2-chloro-4-(4-chlorophenoxy)phenyl]-3-methyl-1-(1,2,4-triazol-1-yl)butan-2-ol, 2-[4-(4-chlorophenoxy)-2-(trifluoromethyl)phenyl]-1-(1,2,4-triazol-1-yl)pentan-2-ol, 2-[4-(4-fluorophenoxy)-2-(trifluoromethyl)phenyl]-1-(1,2,4-triazol-1-yl)propan-2-ol; imazalil, pefurazoate, prochloraz, triflumizol; fenarimol, nuarimol, pyrifenox, triforine, [3-(4-chloro-2-fluoro-phenyl)-5-(2,4-difluorophenyl)isoxazol-4-yl]-(3-pyridyl)methanol;

- Delta14-reductase inhibitors: aldimorph, dodemorph, dodemorph-acetate, fenpropimorph, tridemorph, fenpropidin, piperalin, spiroxamine;
- Inhibitors of 3-keto reductase: fenhexamid;

C') Nucleic acid synthesis inhibitors selected from

- phenylamides or acyl amino acid fungicides: benalaxyl, benalaxyl-M, kiralaxyl, metalaxyl, metalaxyl-M (mefenoxam), ofurace, oxadixyl;
- others: hymexazole, octhilinone, oxolinic acid, bupirimate, 5-fluorocytosine, 5-fluoro-2-(p-tolylmethoxy)pyrimidin-4-amine, 5-fluoro-2-(4-fluorophenylmethoxy)pyrimidin-4-amine;

D') Inhibitors of cell division and cytoskeleton

- tubulin inhibitors: benomyl, carbendazim, fuberidazole, thiabendazole, thiophanate-methyl; 5-chloro-7-(4-methylpiperidin-1-yl)-6-(2,4,6-trifluorophenyl)-[1,2,4]tri-azolo[1,5-a]pyrimidine;
- other cell division inhibitors: diethofencarb, ethaboxam, pencycuron, fluopicolide, zoxamide, metrafenone, pyriofenone;

E') Inhibitors of amino acid and protein synthesis selected from

- methionine synthesis inhibitors (anilino-pyrimidines): cyprodinil, mepanipyrim, pyrimethanil;
- protein synthesis inhibitors: blasticidin-S, kasugamycin, kasugamycin hydrochloride-hydrate, mildiomycin, streptomycin, oxytetracyclin, polyoxine, validamycin A;

F') Signal transduction inhibitors selected from

- MAP / histidine kinase inhibitors: fluoroimid, iprodione, procymidone, vinclozolin, fenpiclonil, fludioxonil;
- G protein inhibitors: quinoxyfen;

G') Lipid and membrane synthesis inhibitors selected from

- Phospholipid biosynthesis inhibitors: edifenphos, iprobenfos, pyrazophos, isoprothiolane;
- lipid peroxidation: dicloran, quintozene, tecnazene, tolclofos-methyl, biphenyl, chloroneb, etridiazole;
- phospholipid biosynthesis and cell wall deposition: dimethomorph, flumorph, mandipropamid, pyrimorph, benthiavalicarb, iprovalicarb, valifenalate, N-(1-(1-(4-cyano-phenyl)ethanesulfonyl)-but-2-yl) carbamic acid-(4-fluorophenyl) ester;
- compounds affecting cell membrane permeability and fatty acides: propamocarb, propamocarb-hydrochlorid;
- fatty acid amide hydrolase inhibitors: oxathiapiprolin;

H') Inhibitors with Multi Site Action selected from

- inorganic active substances: Bordeaux mixture, copper acetate, copper hydroxide, copper oxychloride, basic copper sulfate, sulfur;
- thio- and dithiocarbamates: ferbam, mancozeb, maneb, metam, metiram, propineb, thiram, zineb, ziram;
- organochlorine compounds: anilazine, chlorothalonil, captafol, captan, folpet, dichlofluanid, dichlorophen, hexachlorobenzene, pentachlorphenole and its salts, phthalide, tolylfluanid, N-(4-chloro-2-nitro-phenyl)-N-ethyl-4-methyl-benzenesulfonamide;
- guanidines and others: guanidine, dodine, dodine free base, guazatine, guazatine-acetate, iminoctadine, iminoctadine-triacetate, iminoctadine-tris(albesilate), dithianon, 2,6-dimethyl-1H,5H-[1,4]dithiino[2,3-c:5,6-c']dipyrrole-1,3,5,7(2H,6H)-tetraone;

I') Cell wall synthesis inhibitors selected from

- inhibitors of glucan synthesis: validamycin, polyoxin B; melanin synthesis inhibitors: pyroquilon, tricyclazole, carpropamid, dicyclomet, fenoxanil;

J') Plant defence inducers selected from

- acibenzolar-S-methyl, probenazole, isotianil, tiadinil, prohexadione-calcium; phosphonates: fosetyl, fosetyl-aluminum, phosphorous acid and its salts;

K') Unknown mode of action selected from

- bronopol, chinomethionat, cyflufenamid, cymoxanil, dazomet, debacarb, diclomezine, difenzoquat, difenzoquat-methylsulfate, diphenylamin, fenpyrazamine, flumetover, flusulfamide, flutianil, methasulfocarb, nitrapyrin, nitrothal-isopropyl, oxathiapiprolin, tolprocarb, 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-fluoro-6-(prop-2-yn-1-yl-oxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-chloro-6-(prop-2-yn-1-yl-oxy)phenyl]-4,5-dihydro-1,2-oxazol-3-yl}-1,3-thiazol-2-yl)piperidin-1-yl]ethanone, oxin-copper, proquinazid, tebufloquin, tecloftalam, triazoxide, 2-butoxy-6-iodo-3-propylchromen-4-one, N-(cyclopropylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, methoxy-acetic acid 6-tert-butyl-8-fluoro-2,3-dimethyl-quinolin-4-yl ester, 3-[5-(4-methylphenyl)-2,3-dimethyl-isoxazolidin-3-yl]-pyridine, 3-[5-(4-chloro-phenyl)-2,3-dimethyl-isoxazolidin-3-yl]-pyridine (pyrisoxazole), N-(6-methoxy-pyridin-3-yl) cyclopropanecarboxylic acid amide, 5-chloro-1-(4,6-di-methoxy-pyrimidin-2-yl)-2-methyl-1 H-benzoimidazole, 2-(4-chloro-phenyl)-N-[4-(3,4-dimethoxy-phenyl)-isoxazol-5-yl]-2-prop-2-ynyloxy-acetamide, ethyl (Z)-3-amino-2-cyano-3-phenyl-prop-2-enoate, tert-butyl N-[6-[[(Z)-[(1-methyltetrazol-5-yl)-phenyl-methylene]amino]oxymethyl]-2-pyridyl]carbamate, pentyl N-[6-[[(Z)-[(1-methyltetrazol-5-yl)-phenyl-methylene]amino]oxymethyl]-2-pyridyl]carbamate, 2-[2-[(7,8-difluoro-2-methyl-3-quinolyl)oxy]-6-fluoro-phenyl]propan-2-ol, 2-[2-fluoro-6-[(8-fluoro-2-methyl-3-quinolyl)oxy]phenyl]propan-2-ol, 3-(5-fluoro-3,3,4,4-tetramethyl-3,4-dihydroisoquinolin-1-yl)quinoline, 3-(4,4-difluoro-3,3-dimethyl-3,4-dihydroisoquinolin-1-yl)quinoline, 3-(4,4,5-trifluoro-3,3-dimethyl-3,4-dihydroisoquinolin-1-yl)quinoline;

L') antifungal biopesticides selected from
*Ampelomyces quisqualis, Aspergillus flavus, Aureobasidium pullulans, Bacillus pumilus, Bacillus subtilis, Bacillus subtilis* var. *amyloliquefaciens, Candida oleophila* I-82, *Candida saitoana,* Chitosan, *Clonostachys rosea* f. *catenulata,* also named *Gliocladium catenulatum, Coniothyrium minitans, Cryphonectria parasitica, Cryptococcus albidus, Fusarium oxysporum, Metschnikowia fructicola, Microdochium dimerum, Phlebiopsis gigantea, Pseudozyma flocculosa, Pythium oligandrum* DV74, *Reynoutria sachlinensis, Talaromyces flavus* V117b, *Trichoderma asperellum* SKT-1, *T. atroviride* LC52, *T. harzianum* T-22, *T. harzianum* TH 35, *T. harzianum* T-39; *T. harzianum* and *T. viride, T. harzianum* ICC012 and *T. viride* ICC080; *T. polysporum* and *T. harzianum; T. stromaticum, T. virens* GL-21, *T. viride, T. viride* TV1, *Ulocladium oudemansii* HRU3;
M') Growth regulators selected from
abscisic acid, amidochlor, ancymidol, 6-benzylaminopurine, brassinolide, butralin, chlormequat (chlormequat chloride), choline chloride, cyclanilide, daminozide, dike-gulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid , trinexapac-ethyl and uniconazole;
N') Herbicides selected from

- acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
- amino acid derivatives: bilanafos, glyphosate, glufosinate, sulfosate;
- aryloxyphenoxypropionates: clodinafop, cyhalofop-butyl, fenoxaprop, fluazifop, haloxyfop, metamifop, propaquizafop, quizalofop, quizalofop-P-tefuryl;
- Bipyridyls: diquat, paraquat;
- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
- cyclohexanediones: butroxydim, clethodim, cycloxydim, profoxydim, sethoxydim, tepraloxydim, tralkoxydim;

- dinitroanilines: benfluralin, ethalfluralin, oryzalin, pendimethalin, prodiamine, trifluralin;
- diphenyl ethers: acifluorfen, aclonifen, bifenox, diclofop, ethoxyfen, fomesafen, lactofen, oxyfluorfen;
- hydroxybenzonitriles: bomoxynil, dichlobenil, ioxynil;
- imidazolinones: imazamethabenz, imazamox, imazapic, imazapyr, imazaquin, imazethapyr;
- phenoxy acetic acids: clomeprop, 2,4-dichlorophenoxyacetic acid (2,4-D), 2,4-DB, dichlorprop, MCPA, MCPA-thioethyl, MCPB, Mecoprop;
- pyrazines: chloridazon, flufenpyr-ethyl, fluthiacet, norflurazon, pyridate;
- pyridines: aminopyralid, clopyralid, diflufenican, dithiopyr, fluridone, fluroxypyr, picloram, picolinafen, thiazopyr;
- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea;
- triazines: ametryn, atrazine, cyanazine, dimethametryn, ethiozin, hexazinone, metamitron, metribuzin, prometryn, simazine, terbuthylazine, terbutryn, triaziflam;
- ureas: chlorotoluron, daimuron, diuron, fluometuron, isoproturon, linuron, methabenzthiazuron,tebuthiuron;
- other acetolactate synthase inhibitors: bispyribac-sodium, cloransulam-methyl, diclosulam, florasulam, flucarbazone, flumetsulam, metosulam, ortho-sulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
- others: amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidonethyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chloro-phenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester;

O') Insecticides selected from

- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
- pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, tau-fluvalinate, tefluthrin, tetramethrin, tralomethrin, transfluthrin, profluthrin, dimefluthrin;
- insect growth regulators: a) chitin synthesis inhibitors: benzoylureas: chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;
- nicotinic receptor agonists/antagonists compounds: clothianidin, dinotefuran, flupyradifurone, imidacloprid, thiamethoxam, nitenpyram, acetamiprid, thiacloprid, 1-2-chloro-thiazol-5-ylmethyl)-2-nitrimino-3,5-dimethyl-[1,3,5]triazinane;

- GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1H-pyrazole-3-carbothioic acid amide;
- macrocyclic lactone insecticides: abamectin, emamectin, milbemectin, lepimectin, spinosad, spinetoram;
- mitochondrial electron transport inhibitor (METI) I acaricides: fenazaquin, pyridaben, tebufenpyrad, tolfenpyrad, flufenerim;
- METI II and III compounds: acequinocyl, fluacyprim, hydramethylnon;
- Uncouplers: chlorfenapyr;
- oxidative phosphorylation inhibitors: cyhexatin, diafenthiuron, fenbutatin oxide, propargite;
- moulting disruptor compounds: cryomazine;
- mixed function oxidase inhibitors: piperonyl butoxide;
- sodium channel blockers: indoxacarb, metaflumizone;
- ryanodine receptor inhibitors: chlorantraniliprole, cyantraniliprole, flubendiamide, N-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; N-[4-chloro-2-[(diethyl-lambda-4-sulfanylidene)carbamoyl]-6-methyl-phenyl]-2-(3-chloro-2-pyridyl)-5-(triflu-oromethyl)pyrazole-3-carboxamide; N-[4-chloro-2-[(di-2-propyl-lambda-4-sulfanylidene)carbamoyl]-6-methyl-phenyl]-2-(3-chloro-2-pyridyl)-5-(trifluoromethyl)pyrazole-3-carboxamide; N-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide; N-[4,6-di-chloro-2-[(diethyl-lambda-4-sulfanylidene)carbamoyl]-phenyl]-2-(3-chloro-2-pyridyl)-5-(difluoromethyl)pyrazole-3-carboxamide; N-[4,6-dibromo-2-[(di-2-propyl-lambda-4-sulfanylidene)carbamoyl]-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-cyano-phenyl]-2-(3-chloro-2-pyridyl)-5-(trifluoromethyl)pyrazole-3-carboxamide; N-[4,6-dibromo-2-[(diethyl-lambda-4-sulfanylidene)carbamoyl]-phenyl]-2-(3-chloro-2-pyridyl)-5-(trifluoromethyl)pyrazole-3-carboxamide;
- others: benclothiaz, bifenazate, cartap, flonicamid, pyridalyl, pymetrozine, sulfur, thiocyclam, cyenopyrafen, flupyrazofos, cyflumetofen, amidoflumet, imicyafos, bistrifluron, pyrifluquinazon and 1,1'-[(3S,4R,4aR,6S,6aS,12R,12aS,12bS)-4-[[(2-cyclopropylacetyl)oxy]methyl]-1,3,4,4a,5,6,6a,12,12a,12b-decahydro-12-hydroxy-4,6a, 12b-trimethyl-11-oxo-9-(3-pyridinyl)-2H,11H-naphtho[2,1-b]pyrano[3,4-e]pyran-3,6-diyl] cyclopropaneacetic acid ester.

Preferably, the components 1) and 2) in these mixtures are present in a synergistically effective amount.

The compounds III, their preparation and their biological activity e.g. against harmful fungi, pests or weed is known (see active compounds and biopestidcides II).

According to one embodiment of the invention, n is 1, 2 or 3 in formula I of component 1 of binary and ternary mixtures.

According to another embodiment, R is halogen, $C_1$-$C_4$-alkyl, $C_1$-$C_4$-haloalkyl, $C_1$-$C_4$-alkoxy, $C_1$-$C_4$-haloalkoxy, $C_1$-$C_4$-alkylsulfanyl, $C_1$-$C_4$-haloalkylsulfanyl or $C_3$-$C_6$-cycloalkyl in formula I of component 1) of binary and ternary mixtures.

According to one embodiment of the invention, compounds of formula I are selected from (Z,2E)-5-[1-(4-chlorophenyl)pyrazol-3-yl]oxy-2-methoxyimino-N,3-dimethyl-pent-3-enamide (I-1), (Z,2E)-5-[1-(2,4-difluorophenyl)pyrazol-3-yl]oxy-2-methoxyimino-N,3-dimethyl-pent-3-enamide (I-2), (Z,2E)-5-[1-(2,4-dichlorophenyl)pyrazol-3-yl]oxy-2-methoxyimino-N,3-dimethyl-pent-3-enamide (I-3), (Z,2E)-5-[1-(2-chloro-4-methyl-phenyl)pyrazol-3-yl]oxy-2-methoxyimino-N,3-dimethyl-pent-3-enamide (I-4), (Z,2E)-2-methoxyimino-N,3-dimethyl-5-[1-(p-tolyl)pyrazol-3-yl]oxy-pent-3-enamide (I-5), (Z,2E)-5-[1-(2-methyl-4-fluoro-phenyl)pyrazol-3-yl]oxy-2-methoxyimino-N,3-dimethyl-pent-3-enamide (I-6), (Z,2E)-2-methoxyimino-N,3-dimethyl-5-[1-[4-(trifluoromethyl)phenyl]pyrazol-3-yl]oxy-pent-3-enamide (I-7), (Z,2E)-5-[1-(3,4-dichlorophenyl)pyrazol-3-yl]oxy-2-methoxyimino-N,3-dimethyl-pent-3-enamide (I-8), (Z,2E)-5-[1-(3,4-dimethylphenyl)pyrazol-3-yl]oxy-2-methoxyimino-N,3-dimethyl-pent-3-enamide (I-9), (Z,2E)-5-[1-(4-fluoro-3-methyl-phenyl)pyrazol-3-yl]oxy-2-methoxyimino-N,3-dimethyl-pent-3-enamide (I-10), (Z,2E)-5-[1-(3-chloro-4-fluoro-phenyl)pyrazol-3-yl]oxy-2-methoxyimino-N,3-dimethyl-pent-3-enamide (I-11), (Z,2E)-5-[1-(3-fluoro-4-chloro-phenyl)pyrazol-3-yl]oxy-2-methoxyimino-N,3-dimethyl-pent-3-enamide (I-12), (Z,2E)-5-[1-(4-chloro-2-fluorophenyl)pyrazol-3-yl]oxy-2-methoxyimino-N,3-dimethyl-pent-3-enamide (I-13), (Z,2E)-5-[1-[4-(difluoromethoxy)phenyl]pyrazol-3-yl]oxy-2-methoxyimino-N,3-dimethyl-pent-3-enamide (I-14), (Z,2E)-5-[1-(3-cyclopropylphenyl)pyrazol-3-yl]oxy-2-methoxyimino-N,3-dimethyl-pent-3-enamide (I-15), (Z,2E)-5-[1-[4-chloro-3-(trifluoromethyl)phenyl]pyrazol-3-yl]oxy-2-methoxyimino-N,3-dimethyl-pent-3-enamide (I-16), (Z,2E)-2-methoxyimino-N,3-dimethyl-5-[1-(3,4,5-trifluorophenyl)pyrazol-3-yl]oxy-pent-3-enamide (I-17) and (Z,2E)-2-methoxyimino-N,3-dimethyl-5-[1-[4-(trifluoromethylsulfanyl)phenyl]pyrazol-3-yl]oxy-pent-3-enamide (I-18); as component 1) of the binary and ternary mixtures.

The invention also relates to a method for controlling phytopathogenic harmful fungi using the abovementioned ternary mixtures and to compositions comprising these ternary mixtures and seed comprising these mixtures or coated

with this this ternary mixture.

It is preferred that the mixtures comprise as compounds III fungicidal compounds that are independently of each other selected from the groups A'), B'), C'), D'), E'), F'), G'), H'), I'), J'), K') and L').

According to another embodiment of the invention, mixtures comprise as compound III a herbicidal compound that is selected from the group N').

According to a further embodiment, mixtures comprise as compound III an insecticidal compound that is selected from the group O').

Preference is also given to mixtures comprise as compound III (component 3) at least one active substance selected from group A') and particularly selected from azoxystrobin, dimoxystrobin, fluoxastrobin, kresoxim-methyl, orysastrobin, picoxystrobin, pyraclostrobin, trifloxystrobin; famoxadone, fenamidone; benzovindiflupyr, bixafen, boscalid, fluopyram, fluxapyroxad, isopyrazam, penflufen, penthiopyrad, sedaxane; ametoctradin, cyazofamid, fluazinam, fentin salts, such as fentin acetate.

Preference is also given to mixtures comprise as compound III (component 3) at least one active substance selected from group B') and particularly selected from cyproconazole, difenoconazole, epoxiconazole, fluquinconazole, flusilazole, flutriafol, metconazole, myclobutanil, penconazole, propiconazole, prothioconazole, triadimefon, triadimenol, tebuconazole, tetraconazole, triticonazole, prochloraz, fenarimol, triforine; dodemorph, fenpropimorph, tridemorph, fenpropidin, spiroxamine; fenhexamid.

Preference is also given to mixtures comprise as compound III (component 3) at least one active substance selected from group C') and particularly selected from metalaxyl, (metalaxyl-M) mefenoxam, ofurace.

Preference is also given to mixtures comprise as compound III (component 3) at least one active substance selected from group D') and particularly selected from benomyl, carbendazim, thiophanate-methyl, ethaboxam, fluopicolide, zoxamide, metrafenone, pyriofenone.

Preference is also given to mixtures comprise as compound III (component 3) at least one active substance selected from group E') and particularly selected from cyprodinil, mepanipyrim, pyrimethanil.

Preference is also given to mixtures comprise as compound III (component 3) at least one active substance selected from group F') and particularly selected from iprodione, fludioxonil, vinclozolin, quinoxyfen.

Preference is also given to mixtures comprise as compound III (component 3) at least one active substance selected from group G') and particularly selected from dimethomorph, flumorph, iprovalicarb, benthiavalicarb, mandipropamid, propamocarb.

Preference is also given to mixtures comprise as compound III (component 3) at least one active substance selected from group H') and particularly selected from copper acetate, copper hydroxide, copper oxychloride, copper sulfate, sulfur, mancozeb, metiram, propineb, thiram, captafol, folpet, chlorothalonil, dichlofluanid, dithianon.

Preference is also given to mixtures comprise as compound III (component 3) at least one active substance selected from group I') and particularly selected from carpropamid and fenoxanil.

Preference is also given to mixtures comprise as compound III (component 3) at least one active substance selected from group J') and particularly selected from acibenzolar-S-methyl, probenazole, tiadinil, fosetyl, fosetyl-aluminium, $H_3PO_3$ and salts thereof.

Preference is also given to mixtures comprise as compound III (component 3) at least one active substance selected from group K') and particularly selected from cymoxanil, proquinazid and *N*-methyl-2-{1-[(5-methyl-3-trifluoromethyl-1H-pyrazol-1-yl)-acetyl]-piperidin-4-yl}-*N*-[(1R)-1,2,3,4-tetrahydronaphthalen-1-yl]-4-thiazolecarboxamide.

Preference is also given to mixtures comprise as compound III (component 3) at least one active substance selected from group L') and particularly selected from *Bacillus subtilis* strain NRRL No. B-21661, *Bacillus pumilus* strain NRRL No. B-30087 and *Ulocladium oudemansii.*

With respect to their use as compenent 3) (Co. 3) in the inventive ternary mixtures, preference is given to the compounds III which are compiled in the Table B below.

Table B: Preferred compounds III for use as component 3) (Co. 3).

| No. | Co. 3 (compound III) | No. | Co. 3 (compound III) |
|---|---|---|---|
| III-1 | Fluxapyroxad | III-10 | Epoxiconazole |
| III-2 | Pyraclostrobin | III-11 | Metconazole |
| III-3 | Bixafen | III-12 | Prothioconazole |
| III-4 | Boscalid | III-13 | Dimethomorph |
| III-5 | Isopyrazam | III-14 | Ametoctradin |
| III-6 | Fluopyram | III-15 | Mancozeb |

(continued)

| No. | Co. 3 (compound III) | | No. | Co. 3 (compound III) |
|---|---|---|---|---|
| III-7 | Penflufen | | III-16 | Metiram |
| III-8 | Sedaxane | | III-17 | Chlorothalonil |
| III-9 | Difenoconazole | | III-18 | Phosphorous acid and its salts |

Accordingly, the present invention furthermore to the mixtures as defined in Tables B1 to B18, where a row corresponds in each case to a fungicidal composition comprising as component 1) one of the compounds I as defined and numbered above (Co. 1), and as component 2) one of the compounds II as defined and numbered above (Co. 2), and as component 3) the respective compound III from groups A) to K) as defined in table B (Co. 3) stated in the row in question. Preferably, the compositions described comprise the active substances in synergistically effective amounts.

Table B1: Ternary mixtures T-1 to T-396 comprising one compound I as defined and numbered above as component 1) (Co. 1) and one compound II as defined and numbered above as component 2) (Co. 2) and one compound III from groups A) to K) as defined and numbered in Table B as component 3) (Co. 3).

| Mixt. | Co. 1 | Co. 2 | Co. 3 |
|---|---|---|---|
| T-1 | I-1 | II-1 | III-1 |
| T-2 | I-1 | II-2 | III-1 |
| T-3 | I-1 | II-2 | III-1 |
| T-4 | I-1 | II-3 | III-1 |
| T-5 | I-1 | II-4 | III-1 |
| T-6 | I-1 | II-5 | III-1 |
| T-7 | I-1 | II-6 | III-1 |
| T-8 | I-1 | II-7 | III-1 |
| T-9 | I-1 | II-8 | III-1 |
| T-10 | I-1 | II-9 | III-1 |
| T-11 | I-1 | II-10 | III-1 |
| T-12 | I-1 | II-11 | III-1 |
| T-13 | I-1 | II-12 | III-1 |
| T-14 | I-1 | II-13 | III-1 |

| Mixt. | Co. 1 | Co. 2 | Co. 3 |
|---|---|---|---|
| T-15 | I-1 | II-14 | III-1 |
| T-16 | I-1 | II-15 | III-1 |
| T-17 | I-1 | II-16 | III-1 |
| T-18 | I-1 | II-17 | III-1 |
| T-19 | I-1 | II-18 | III-1 |
| T-20 | I-1 | II-19 | III-1 |
| T-21 | I-1 | II-20 | III-1 |
| T-22 | I-1 | II-21 | III-1 |
| T-23 | I-1 | II-22 | III-1 |
| T-24 | I-1 | II-23 | III-1 |
| T-25 | I-1 | II-24 | III-1 |
| T-26 | I-1 | II-25 | III-1 |
| T-27 | I-1 | II-26 | III-1 |
| T-28 | I-1 | II-27 | III-1 |

| Mixt. | Co. 1 | Co. 2 | Co. 3 |
|---|---|---|---|
| T-29 | I-1 | II-28 | III-1 |
| T-30 | I-1 | II-29 | III-1 |
| T-31 | I-1 | II-30 | III-1 |
| T-32 | I-1 | II-31 | III-1 |
| T-33 | I-1 | II-32 | III-1 |
| T-34 | I-2 | II-1 | III-1 |
| T-35 | I-2 | II-2 | III-1 |
| T-36 | I-2 | II-2 | III-1 |
| T-37 | I-2 | II-3 | III-1 |
| T-38 | I-2 | II-4 | III-1 |
| T-39 | I-2 | II-5 | III-1 |
| T-40 | I-2 | II-6 | III-1 |
| T-41 | I-2 | II-7 | III-1 |
| T-42 | I-2 | II-8 | III-1 |

| Mixt. | Co. 1 | Co. 2 | Co. 3 |
|---|---|---|---|
| T-43 | I-2 | II-9 | III-1 |
| T-44 | I-2 | II-10 | III-1 |
| T-45 | I-2 | II-11 | III-1 |
| T-46 | I-2 | II-12 | III-1 |
| T-47 | I-2 | II-13 | III-1 |
| T-48 | I-2 | II-14 | III-1 |
| T-49 | I-2 | II-15 | III-1 |
| T-50 | I-2 | II-16 | III-1 |
| T-51 | I-2 | II-17 | III-1 |
| T-52 | I-2 | II-18 | III-1 |
| T-53 | I-2 | II-19 | III-1 |
| T-54 | I-2 | II-20 | III-1 |
| T-55 | I-2 | II-21 | III-1 |
| T-56 | I-2 | II-22 | III-1 |
| T-57 | I-2 | II-23 | III-1 |
| T-58 | I-2 | II-24 | III-1 |
| T-59 | I-2 | II-25 | III-1 |
| T-60 | I-2 | II-26 | III-1 |
| T-61 | I-2 | II-27 | III-1 |
| T-62 | I-2 | II-28 | III-1 |
| T-63 | I-2 | II-29 | III-1 |
| T-64 | I-2 | II-30 | III-1 |
| T-65 | I-2 | II-31 | III-1 |
| T-66 | I-2 | II-32 | III-1 |
| T-67 | I-3 | II-1 | III-1 |
| T-68 | I-3 | II-2 | III-1 |
| T-69 | I-3 | II-2 | III-1 |
| T-70 | I-3 | II-3 | III-1 |
| T-71 | I-3 | II-4 | III-1 |
| T-72 | I-3 | II-5 | III-1 |
| T-73 | I-3 | II-6 | III-1 |
| T-74 | I-3 | II-7 | III-1 |
| T-75 | I-3 | II-8 | III-1 |
| T-76 | I-3 | II-9 | III-1 |
| T-77 | I-3 | II-10 | III-1 |
| T-78 | I-3 | II-11 | III-1 |
| T-79 | I-3 | II-12 | III-1 |
| T-80 | I-3 | II-13 | III-1 |
| T-81 | I-3 | II-14 | III-1 |
| T-82 | I-3 | II-15 | III-1 |
| T-83 | I-3 | II-16 | III-1 |

| Mixt. | Co. 1 | Co. 2 | Co. 3 |
|---|---|---|---|
| T-84 | I-3 | II-17 | III-1 |
| T-85 | I-3 | II-18 | III-1 |
| T-86 | I-3 | II-19 | III-1 |
| T-87 | I-3 | II-20 | III-1 |
| T-88 | I-3 | II-21 | III-1 |
| T-89 | I-3 | II-22 | III-1 |
| T-90 | I-3 | II-23 | III-1 |
| T-91 | I-3 | II-24 | III-1 |
| T-92 | I-3 | II-25 | III-1 |
| T-93 | I-3 | II-26 | III-1 |
| T-94 | I-3 | II-27 | III-1 |
| T-95 | I-3 | II-28 | III-1 |
| T-96 | I-3 | II-29 | III-1 |
| T-97 | I-3 | II-30 | III-1 |
| T-98 | I-3 | II-31 | III-1 |
| T-99 | I-3 | II-32 | III-1 |
| T-100 | I-4 | II-1 | III-1 |
| T-101 | I-4 | II-2 | III-1 |
| T-102 | I-4 | II-2 | III-1 |
| T-103 | I-4 | II-3 | III-1 |
| T-104 | I-4 | II-4 | III-1 |
| T-105 | I-4 | II-5 | III-1 |
| T-106 | I-4 | II-6 | III-1 |
| T-107 | I-4 | II-7 | III-1 |
| T-108 | I-4 | II-8 | III-1 |
| T-109 | I-4 | II-9 | III-1 |
| T-110 | I-4 | II-10 | III-1 |
| T-111 | I-4 | II-11 | III-1 |
| T-112 | I-4 | II-12 | III-1 |
| T-113 | I-4 | II-13 | III-1 |
| T-114 | I-4 | II-14 | III-1 |
| T-115 | I-4 | II-15 | III-1 |
| T-116 | I-4 | II-16 | III-1 |
| T-117 | I-4 | II-17 | III-1 |
| T-118 | I-4 | II-18 | III-1 |
| T-119 | I-4 | II-19 | III-1 |
| T-120 | I-4 | II-20 | III-1 |
| T-121 | I-4 | II-21 | III-1 |
| T-122 | I-4 | II-22 | III-1 |
| T-123 | I-4 | II-23 | III-1 |
| T-124 | I-4 | II-24 | III-1 |

| Mixt. | Co. 1 | Co. 2 | Co. 3 |
|---|---|---|---|
| T-125 | I-4 | II-25 | III-1 |
| T-126 | I-4 | II-26 | III-1 |
| T-127 | I-4 | II-27 | III-1 |
| T-128 | I-4 | II-28 | III-1 |
| T-129 | I-4 | II-29 | III-1 |
| T-130 | I-4 | II-30 | III-1 |
| T-131 | I-4 | II-31 | III-1 |
| T-132 | I-4 | II-32 | III-1 |
| T-133 | I-5 | II-1 | III-1 |
| T-134 | I-5 | II-2 | III-1 |
| T-135 | I-5 | II-2 | III-1 |
| T-136 | I-5 | II-3 | III-1 |
| T-137 | I-5 | II-4 | III-1 |
| T-138 | I-5 | II-5 | III-1 |
| T-139 | I-5 | II-6 | III-1 |
| T-140 | I-5 | II-7 | III-1 |
| T-141 | I-5 | II-8 | III-1 |
| T-142 | I-5 | II-9 | III-1 |
| T-143 | I-5 | II-10 | III-1 |
| T-144 | I-5 | II-11 | III-1 |
| T-145 | I-5 | II-12 | III-1 |
| T-146 | I-5 | II-13 | III-1 |
| T-147 | I-5 | II-14 | III-1 |
| T-148 | I-5 | II-15 | III-1 |
| T-149 | I-5 | II-16 | III-1 |
| T-150 | I-5 | II-17 | III-1 |
| T-151 | I-5 | II-18 | III-1 |
| T-152 | I-5 | II-19 | III-1 |
| T-153 | I-5 | II-20 | III-1 |
| T-154 | I-5 | II-21 | III-1 |
| T-155 | I-5 | II-22 | III-1 |
| T-156 | I-5 | II-23 | III-1 |
| T-157 | I-5 | II-24 | III-1 |
| T-158 | I-5 | II-25 | III-1 |
| T-159 | I-5 | II-26 | III-1 |
| T-160 | I-5 | II-27 | III-1 |
| T-161 | I-5 | II-28 | III-1 |
| T-162 | I-5 | II-29 | III-1 |
| T-163 | I-5 | II-30 | III-1 |
| T-164 | I-5 | II-31 | III-1 |
| T-165 | I-5 | II-32 | III-1 |

| Mixt. | Co. 1 | Co. 2 | Co. 3 |
|---|---|---|---|
| T-166 | I-6 | II-1 | III-1 |
| T-167 | I-6 | II-2 | III-1 |
| T-168 | I-6 | II-2 | III-1 |
| T-169 | I-6 | II-3 | III-1 |
| T-170 | I-6 | II-4 | III-1 |
| T-171 | I-6 | II-5 | III-1 |
| T-172 | I-6 | II-6 | III-1 |
| T-173 | I-6 | II-7 | III-1 |
| T-174 | I-6 | II-8 | III-1 |
| T-175 | I-6 | II-9 | III-1 |
| T-176 | I-6 | II-10 | III-1 |
| T-177 | I-6 | II-11 | III-1 |
| T-178 | I-6 | II-12 | III-1 |
| T-179 | I-6 | II-13 | III-1 |
| T-180 | I-6 | II-14 | III-1 |
| T-181 | I-6 | II-15 | III-1 |
| T-182 | I-6 | II-16 | III-1 |
| T-183 | I-6 | II-17 | III-1 |
| T-184 | I-6 | II-18 | III-1 |
| T-185 | I-6 | II-19 | III-1 |
| T-186 | I-6 | II-20 | III-1 |
| T-187 | I-6 | II-21 | III-1 |
| T-188 | I-6 | II-22 | III-1 |
| T-189 | I-6 | II-23 | III-1 |
| T-190 | I-6 | II-24 | III-1 |
| T-191 | I-6 | II-25 | III-1 |
| T-192 | I-6 | II-26 | III-1 |
| T-193 | I-6 | II-27 | III-1 |
| T-194 | I-6 | II-28 | III-1 |
| T-195 | I-6 | II-29 | III-1 |
| T-196 | I-6 | II-30 | III-1 |
| T-197 | I-6 | II-31 | III-1 |
| T-198 | I-6 | II-32 | III-1 |
| T-199 | I-7 | II-1 | III-1 |
| T-200 | I-7 | II-2 | III-1 |
| T-201 | I-7 | II-2 | III-1 |
| T-202 | I-7 | II-3 | III-1 |
| T-203 | I-7 | II-4 | III-1 |
| T-204 | I-7 | II-5 | III-1 |
| T-205 | I-7 | II-6 | III-1 |
| T-206 | I-7 | II-7 | III-1 |

| Mixt. | Co. 1 | Co. 2 | Co. 3 |
|---|---|---|---|
| T-207 | I-7 | II-8 | III-1 |
| T-208 | I-7 | II-9 | III-1 |
| T-209 | I-7 | II-10 | III-1 |
| T-210 | I-7 | II-11 | III-1 |
| T-211 | I-7 | II-12 | III-1 |
| T-212 | I-7 | II-13 | III-1 |
| T-213 | I-7 | II-14 | III-1 |
| T-214 | I-7 | II-15 | III-1 |
| T-215 | I-7 | II-16 | III-1 |
| T-216 | I-7 | II-17 | III-1 |
| T-217 | I-7 | II-18 | III-1 |
| T-218 | I-7 | II-19 | III-1 |
| T-219 | I-7 | II-20 | III-1 |
| T-220 | I-7 | II-21 | III-1 |
| T-221 | I-7 | II-22 | III-1 |
| T-222 | I-7 | II-23 | III-1 |
| T-223 | I-7 | II-24 | III-1 |
| T-224 | I-7 | II-25 | III-1 |
| T-225 | I-7 | II-26 | III-1 |
| T-226 | I-7 | II-27 | III-1 |
| T-227 | I-7 | II-28 | III-1 |
| T-228 | I-7 | II-29 | III-1 |
| T-229 | I-7 | II-30 | III-1 |
| T-230 | I-7 | II-31 | III-1 |
| T-231 | I-7 | II-32 | III-1 |
| T-232 | I-8 | II-1 | III-1 |
| T-233 | I-8 | II-2 | III-1 |
| T-234 | I-8 | II-2 | III-1 |
| T-235 | I-8 | II-3 | III-1 |
| T-236 | I-8 | II-4 | III-1 |
| T-237 | I-8 | II-5 | III-1 |
| T-238 | I-8 | II-6 | III-1 |
| T-239 | I-8 | II-7 | III-1 |
| T-240 | I-8 | II-8 | III-1 |
| T-241 | I-8 | II-9 | III-1 |
| T-242 | I-8 | II-10 | III-1 |
| T-243 | I-8 | II-11 | III-1 |
| T-244 | I-8 | II-12 | III-1 |
| T-245 | I-8 | II-13 | III-1 |
| T-246 | I-8 | II-14 | III-1 |
| T-247 | I-8 | II-15 | III-1 |

| Mixt. | Co. 1 | Co. 2 | Co. 3 |
|---|---|---|---|
| T-248 | I-8 | II-16 | III-1 |
| T-249 | I-8 | II-17 | III-1 |
| T-250 | I-8 | II-18 | III-1 |
| T-251 | I-8 | II-19 | III-1 |
| T-252 | I-8 | II-20 | III-1 |
| T-253 | I-8 | II-21 | III-1 |
| T-254 | I-8 | II-22 | III-1 |
| T-255 | I-8 | II-23 | III-1 |
| T-256 | I-8 | II-24 | III-1 |
| T-257 | I-8 | II-25 | III-1 |
| T-258 | I-8 | II-26 | III-1 |
| T-259 | I-8 | II-27 | III-1 |
| T-260 | I-8 | II-28 | III-1 |
| T-261 | I-8 | II-29 | III-1 |
| T-262 | I-8 | II-30 | III-1 |
| T-263 | I-8 | II-31 | III-1 |
| T-264 | I-8 | II-32 | III-1 |
| T-265 | I-9 | II-1 | III-1 |
| T-266 | I-9 | II-2 | III-1 |
| T-267 | I-9 | II-2 | III-1 |
| T-268 | I-9 | II-3 | III-1 |
| T-269 | I-9 | II-4 | III-1 |
| T-270 | I-9 | II-5 | III-1 |
| T-271 | I-9 | II-6 | III-1 |
| T-272 | I-9 | II-7 | III-1 |
| T-273 | I-9 | II-8 | III-1 |
| T-274 | I-9 | II-9 | III-1 |
| T-275 | I-9 | II-10 | III-1 |
| T-276 | I-9 | II-11 | III-1 |
| T-277 | I-9 | II-12 | III-1 |
| T-278 | I-9 | II-13 | III-1 |
| T-279 | I-9 | II-14 | III-1 |
| T-280 | I-9 | II-15 | III-1 |
| T-281 | I-9 | II-16 | III-1 |
| T-282 | I-9 | II-17 | III-1 |
| T-283 | I-9 | II-18 | III-1 |
| T-284 | I-9 | II-19 | III-1 |
| T-285 | I-9 | II-20 | III-1 |
| T-286 | I-9 | II-21 | III-1 |
| T-287 | I-9 | II-22 | III-1 |
| T-288 | I-9 | II-23 | III-1 |

| Mixt. | Co. 1 | Co. 2 | Co. 3 |
|---|---|---|---|
| T-289 | I-9 | II-24 | III-1 |
| T-290 | I-9 | II-25 | III-1 |
| T-291 | I-9 | II-26 | III-1 |
| T-292 | I-9 | II-27 | III-1 |
| T-293 | I-9 | II-28 | III-1 |
| T-294 | I-9 | II-29 | III-1 |
| T-295 | I-9 | II-30 | III-1 |
| T-296 | I-9 | II-31 | III-1 |
| T-297 | I-9 | II-32 | III-1 |
| T-298 | I-10 | II-1 | III-1 |
| T-299 | I-10 | II-2 | III-1 |
| T-300 | I-10 | II-2 | III-1 |
| T-301 | I-10 | II-3 | III-1 |
| T-302 | I-10 | II-4 | III-1 |
| T-303 | I-10 | II-5 | III-1 |
| T-304 | I-10 | II-6 | III-1 |
| T-305 | I-10 | II-7 | III-1 |
| T-306 | I-10 | II-8 | III-1 |
| T-307 | I-10 | II-9 | III-1 |
| T-308 | I-10 | II-10 | III-1 |
| T-309 | I-10 | II-11 | III-1 |
| T-310 | I-10 | II-12 | III-1 |
| T-311 | I-10 | II-13 | III-1 |
| T-312 | I-10 | II-14 | III-1 |
| T-313 | I-10 | II-15 | III-1 |
| T-314 | I-10 | II-16 | III-1 |
| T-315 | I-10 | II-17 | III-1 |
| T-316 | I-10 | II-18 | III-1 |
| T-317 | I-10 | II-19 | III-1 |
| T-318 | I-10 | II-20 | III-1 |
| T-319 | I-10 | II-21 | III-1 |
| T-320 | I-10 | II-22 | III-1 |
| T-321 | I-10 | II-23 | III-1 |
| T-322 | I-10 | II-24 | III-1 |
| T-323 | I-10 | II-25 | III-1 |
| T-324 | I-10 | II-26 | III-1 |
| T-325 | I-10 | II-27 | III-1 |
| T-326 | I-10 | II-28 | III-1 |
| T-327 | I-10 | II-29 | III-1 |
| T-328 | I-10 | II-30 | III-1 |
| T-329 | I-10 | II-31 | III-1 |
| T-330 | I-10 | II-32 | III-1 |
| T-331 | I-11 | II-1 | III-1 |
| T-332 | I-11 | II-2 | III-1 |
| T-333 | I-11 | II-2 | III-1 |
| T-334 | I-11 | II-3 | III-1 |
| T-335 | I-11 | II-4 | III-1 |
| T-336 | I-11 | II-5 | III-1 |
| T-337 | I-11 | II-6 | III-1 |
| T-338 | I-11 | II-7 | III-1 |
| T-339 | I-11 | II-8 | III-1 |
| T-340 | I-11 | II-9 | III-1 |
| T-341 | I-11 | II-10 | III-1 |
| T-342 | I-11 | II-11 | III-1 |
| T-343 | I-11 | II-12 | III-1 |
| T-344 | I-11 | II-13 | III-1 |
| T-345 | I-11 | II-14 | III-1 |
| T-346 | I-11 | II-15 | III-1 |
| T-347 | I-11 | II-16 | III-1 |
| T-348 | I-11 | II-17 | III-1 |
| T-349 | I-11 | II-18 | III-1 |
| T-350 | I-11 | II-19 | III-1 |
| T-351 | I-11 | II-20 | III-1 |
| T-352 | I-11 | II-21 | III-1 |
| T-353 | I-11 | II-22 | III-1 |
| T-354 | I-11 | II-23 | III-1 |
| T-355 | I-11 | II-24 | III-1 |
| T-356 | I-11 | II-25 | III-1 |
| T-357 | I-11 | II-26 | III-1 |
| T-358 | I-11 | II-27 | III-1 |
| T-359 | I-11 | II-28 | III-1 |
| T-360 | I-11 | II-29 | III-1 |
| T-361 | I-11 | II-30 | III-1 |
| T-362 | I-11 | II-31 | III-1 |
| T-363 | I-11 | II-32 | III-1 |
| T-364 | I-12 | II-1 | III-1 |
| T-365 | I-12 | II-2 | III-1 |
| T-366 | I-12 | II-2 | III-1 |
| T-367 | I-12 | II-3 | III-1 |
| T-368 | I-12 | II-4 | III-1 |
| T-369 | I-12 | II-5 | III-1 |
| T-370 | I-12 | II-6 | III-1 |
| T-371 | I-12 | II-7 | III-1 |
| T-372 | I-12 | II-8 | III-1 |
| T-373 | I-12 | II-9 | III-1 |
| T-374 | I-12 | II-10 | III-1 |
| T-375 | I-12 | II-11 | III-1 |
| T-376 | I-12 | II-12 | III-1 |
| T-377 | I-12 | II-13 | III-1 |
| T-378 | I-12 | II-14 | III-1 |
| T-379 | I-12 | II-15 | III-1 |
| T-380 | I-12 | II-16 | III-1 |
| T-381 | I-12 | II-17 | III-1 |
| T-382 | I-12 | II-18 | III-1 |
| T-383 | I-12 | II-19 | III-1 |
| T-384 | I-12 | II-20 | III-1 |
| T-385 | I-12 | II-21 | III-1 |
| T-386 | I-12 | II-22 | III-1 |
| T-387 | I-12 | II-23 | III-1 |
| T-388 | I-12 | II-24 | III-1 |
| T-389 | I-12 | II-25 | III-1 |
| T-390 | I-12 | II-26 | III-1 |
| T-391 | I-12 | II-27 | III-1 |
| T-392 | I-12 | II-28 | III-1 |
| T-393 | I-12 | II-29 | III-1 |
| T-394 | I-12 | II-30 | III-1 |
| T-395 | I-12 | II-31 | III-1 |
| T-396 | I-12 | II-32 | III-1 |

Table B2: Mixtures as defined in each row of Table B1 wherein component 3 (Co. 3) is compound III-2 instead of III-1.

Table B3: Mixtures as defined in each row of Table B1 wherein component 3 (Co. 3) is compound III-4 instead of III-1.

Table B4: Mixtures as defined in each row of Table B1 wherein component 3 (Co. 3) is compound III-4 instead of III-1.
Table B5: Mixtures as defined in each row of Table B1 wherein component 3 (Co. 3) is compound III-5 instead of III-1.
Table B6: Mixtures as defined in each row of Table B1 wherein component 3 (Co. 3) is compound III-6 instead of III-1.
Table B7: Mixtures as defined in each row of Table B1 wherein component 3 (Co. 3) is compound III-7 instead of III-1.
Table B8: Mixtures as defined in each row of Table B1 wherein component 3 (Co. 3) is compound III-8 instead of III-1.
Table B9: Mixtures as defined in each row of Table B1 wherein component 3 (Co. 3) is compound III-9 instead of III-1.
Table B10: Mixtures as defined in each row of Table B1 wherein component 3 (Co. 3) is compound III-10 instead of III-1.
Table B11: Mixtures as defined in each row of Table B1 wherein component 3 (Co. 3) is compound III-11 instead of III-1.
Table B12: Mixtures as defined in each row of Table B1 wherein component 3 (Co. 3) is compound III-12 instead of III-1.
Table B13: Mixtures as defined in each row of Table B1 wherein component 3 (Co. 3) is compound III-13 instead of III-1.
Table B14: Mixtures as defined in each row of Table B1 wherein component 3 (Co. 3) is compound III-14 instead of III-1.
Table B15: Mixtures as defined in each row of Table B1 wherein component 3 (Co. 3) is compound III-15 instead of III-1.
Table B16: Mixtures as defined in each row of Table B1 wherein component 3 (Co. 3) is compound III-16 instead of III-1.
Table B17: Mixtures as defined in each row of Table B1 wherein component 3 (Co. 3) is compound 111-17 instead of III-1.
Table B18: Mixtures as defined in each row of Table B1 wherein component 3 (Co. 3) is compound III-18 instead of III-1.

The mixtures and compositions according to the invention are suitable as fungicides. They are distinguished by an outstanding effectiveness against a broad spectrum of phytopathogenic fungi, including soil-borne fungi, which derive especially from the classes of the Plasmodiophoromycetes, Peronosporomycetes (syn. Oomycetes), Chytridiomycetes, Zygomycetes, Ascomycetes, Basidiomycetes and Deuteromycetes (syn. Fungi imperfecti). Some are systemically effective and they can be used in crop protection as foliar fungicides, fungicides for seed dressing and soil fungicides. Moreover, they are suitable for controlling harmful fungi, which inter alia occur in wood or roots of plants.

The mixtures and compositions according to the invention are particularly important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; natural rubber plants or ornamental and forestry plants, such as flowers, shrubs, broad-leaved trees or evergreens, e. g. conifers; and on the plant propagation material, such as seeds, and the crop material of these plants.

Preferably the inventive mixtures and compositions are used for controlling a multitude of fungi on field crops, such as potatoes sugar beets, tobacco, wheat, rye, barley, oats, rice, corn, cotton, soybeans, rape, legumes, sunflowers, coffee or sugar cane; fruits; vines; ornamentals; or vegetables, such as cucumbers, tomatoes, beans or squashes.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring.

Preferably, treatment of plant propagation materials with the inventive combination of compound I and compounds II and compositions thereof, respectively, is used for controlling a multitude of fungi on cereals, such as wheat, rye, barley and oats; rice, corn, cotton and soybeans.

The term "cultivated plants" is to be understood as including plants which have been modified by breeding, mutagenesis or genetic engineering including but not limiting to agricultural biotech products on the market or in development (cf. http://cera-gmc.org/, see GM crop database therein). Genetically modified plants are plants, which genetic material has been so modified by the use of recombinant DNA techniques that under natural circumstances cannot

readily be obtained by cross breeding, mutations or natural recombination. Typically, one or more genes have been integrated into the genetic material of a genetically modified plant in order to improve certain properties of the plant. Such genetic modifications also include but are not limited to targeted post-transtional modification of protein(s), oligo- or polypeptides e. g. by glycosylation or polymer additions such as prenylated, acetylated or farnesylated moieties or PEG moieties.

Plants that have been modified by breeding, mutagenesis or genetic engineering, e. g. have been rendered tolerant to applications of specific classes of herbicides, such as hydroxyphenylpyruvate dioxygenase (HPPD) inhibitors; acetolactate synthase (ALS) inhibitors, such as sulfonyl ureas (see e. g. US 6,222,100, WO 01/82685, WO 00/26390, WO 97/41218, WO 98/02526, WO 98/02527, WO 04/106529, WO 05/20673, WO 03/14357, WO 03/13225, WO 03/14356, WO 04/16073) or imidazolinones (see e. g. US 6,222,100, WO 01/82685, WO 00/026390, WO 97/41218, WO 98/002526, WO 98/02527, WO 04/106529, WO 05/20673, WO 03/014357, WO 03/13225, WO 03/14356, WO 04/16073); enolpyruvylshikimate-3-phosphate synthase (EPSPS) inhibitors, such as glyphosate (see e. g. WO 92/00377); glutamine synthetase (GS) inhibitors, such as glufosinate (see e.g. EP-A 242 236, EP-A 242 246) or oxynil herbicides (see e. g. US 5,559,024) as a result of conventional methods of breeding or genetic engineering. Several cultivated plants have been rendered tolerant to herbicides by conventional methods of breeding (mutagenesis), e. g. Clearfield® summer rape (Canola, BASF SE, Germany) being tolerant to imidazolinones, e. g. imazamox. Genetic engineering methods have been used to render cultivated plants such as soybean, cotton, corn, beets and rape, tolerant to herbicides such as glyphosate and glufosinate, some of which are commercially available under the trade names RoundupReady® (glyphosate-tolerant, Monsanto, U.S.A.) and LibertyLink® (glufosinate-tolerant, Bayer CropScience, Germany).

Furthermore, plants are also covered that are by the use of recombinant DNA techniques capable to synthesize one or more insecticidal proteins, especially those known from the bacterial genus *Bacillus*, particularly from *Bacillus thuringiensis*, such as δ-endotoxins, e. g. CrylA(b), CrylA(c), CrylF, CrylF(a2), CryIIA(b), CryIIIA, CryIIIB(b1) or Cry9c; vegetative insecticidal proteins (VIP), e. g. VIP1, VIP2, VIP3 or VIP3A; insecticidal proteins of bacteria colonizing nematodes, e. g. *Photorhabdus* spp. or *Xenorhabdus* spp.; toxins produced by animals, such as scorpion toxins, arachnid toxins, wasp toxins, or other insect-specific neurotoxins; toxins produced by fungi, such Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxysteroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilben synthase, bibenzyl synthase, chitinases or glucanases. In the context of the present invention these insecticidal proteins or toxins are to be understood expressly also as pre-toxins, hybrid proteins, truncated or otherwise modified proteins. Hybrid proteins are characterized by a new combination of protein domains, (see, e. g. WO 02/015701). Further examples of such toxins or genetically modified plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified plants are generally known to the person skilled in the art and are described, e. g. in the publications mentioned above. These insecticidal proteins contained in the genetically modified plants impart to the plants producing these proteins tolerance to harmful pests from all taxonomic groups of athropods, especially to beetles (Coeloptera), two-winged insects (Diptera), and moths (Lepidoptera) and to nematodes (Nematoda). Genetically modified plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-*N*-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g. Agrisure® CB) and Bt176 from Syngenta Seeds SAS, France, (corn cultivars producing the Cry1Ab toxin and PAT enyzme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the Cry1F toxin and PAT enzyme).

Furthermore, plants are also covered that are by the use of recombinant DNA techniques capable to synthesize one or more proteins to increase the resistance or tolerance of those plants to bacterial, viral or fungal pathogens. Examples of such proteins are the so-called "pathogenesis-related proteins" (PR proteins, see, e. g. EP-A 392 225), plant disease resistance genes (e. g. potato cultivars, which express resistance genes acting against *Phytophthora infestans* derived from the mexican wild potato *Solanum bulbocastanum*) or T4-lysozym (e. g. potato cultivars capable of synthesizing these proteins with increased resistance against bacteria such as *Erwinia amylvora*). The methods for producing such genetically modified plants are generally known to the person skilled in the art and are described, e. g.

in the publications mentioned above.

Furthermore, plants are also covered that are by the use of recombinant DNA techniques capable to synthesize one or more proteins to increase the productivity (e. g. bio mass production, grain yield, starch content, oil content or protein content), tolerance to drought, salinity or other growth-limiting environmental factors or tolerance to pests and fungal, bacterial or viral pathogens of those plants.

Furthermore, plants are also covered that contain by the use of recombinant DNA techniques a modified amount of substances of content or new substances of content, specifically to improve human or animal nutrition, e. g. oil crops that produce health-promoting long-chain omega-3 fatty acids or unsaturated omega-9 fatty acids (e. g. Nexera® rape, DOW Agro Sciences, Canada).

Furthermore, plants are also covered that contain by the use of recombinant DNA techniques a modified amount of substances of content or new substances of content, specifically to improve raw material production, e. g. potatoes that produce increased amounts of amylopectin (e. g. Amflora® potato, BASF SE, Germany).

The inventive mixtures and compositions are particularly suitable for controlling the following plant diseases:

*Albugo* spp. (white rust) on ornamentals, vegetables (e. g. A. *candida*) and sunflowers (e. g. *A. tragopogonis*); *Alternaria* spp. (Alternaria leaf spot) on vegetables, rape (A. *brassicola* or *brassicae*), sugar beets (*A. tenuis*), fruits, rice, soybeans, potatoes (e. g. *A. solani* or *A. alternata*), tomatoes (e. g. *A. solani* or *A. alternata*) and wheat; *Aphanomyces* spp. on sugar beets and vegetables; *Ascochyta* spp. on cereals and vegetables, e. g. *A. tritici* (anthracnose) on wheat and *A. hordei* on barley; *Bipolaris* and *Drechslera* spp. (teleomorph: *Cochliobolus* spp.) on corn (e. g. *D. maydis*), cereals (e. g. *B. sorokiniana*: spot blotch), rice (e. g. *B. oryzae*) and turfs; *Blumeria* (formerly *Erysiphe*) *graminis* (powdery mildew) on cereals (e. g. on wheat or barley); *Botrytis cinerea* (teleomorph: *Botryotinia fuckeliana*: grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce; *Ceratocystis* (syn. *Ophiostoma*) spp. (rot or wilt) on broad-leaved trees and evergreens, e. g. *C. ulmi* (Dutch elm disease) on elms; *Cercospora* spp. (Cercospora leaf spots) on corn, rice, sugar beets (e. g. *C. beticola*), sugar cane, vegetables, coffee, soybeans (e. g. *C. sojina* or *C. kikuchii*) and rice; *Cladosporium* spp. on tomatoes (e. g. *C. fulvum:* leaf mold) and cereals, e. g. *C. herbarum* (black ear) on wheat; *Claviceps purpurea* (ergot) on cereals; *Cochliobolus* (anamorph: *Helminthosporium* of *Bipolaris*) spp. (leaf spots) on corn (*C. carbonum*), cereals (e. g. *C. sativus,* anamorph: *B. sorokiniana*) and rice (e. g. *C. miyabeanus,* anamorph: *H. oryzae*); *Colletotrichum* (teleomorph: *Glomerella*) spp. (anthracnose) on cotton (e. g. *C. gossypii*), corn (e. g. *C. graminicola*), soft fruits, potatoes (e. g. *C. coccodes:* black dot), beans (e. g. *C. lindemuthianum*) and soybeans (e. g. *C. truncatum* or *C. gloeosporioides*); *Corticium* spp., e. g. *C. sasakii* (sheath blight) on rice; *Corynespora cassiicola* (leaf spots) on soybeans and ornamentals; *Cycloconium* spp., e. g. *C. oleaginum* on olive trees; *Cylindrocarpon* spp. (e. g. fruit tree canker or young vine decline, teleomorph: *Nectria* or *Neonectria* spp.) on fruit trees, vines (e. g. *C. liriodendri*, teleomorph: *Neonectria liriodendri*: Black Foot Disease) and ornamentals; *Dematophora* (teleomorph: *Rosellinia*) necatrix (root and stem rot) on soybeans; *Diaporthe* spp., e. g. *D. phaseolorum* (damping off) on soybeans; *Drechslera* (syn. *Helminthosporium,* teleomorph: *Pyrenophora*) spp. on corn, cereals, such as barley (e. g. *D. teres,* net blotch) and wheat (e. g. *D. tritici-repentis:* tan spot), rice and turf; Esca (dieback, apoplexy) on vines, caused by *Formitiporia* (syn. *Phellinus*) *punctata, F. mediterranea, Phaeomoniella chlamydospora* (earlier *Phaeoacremonium chlamydosporum*), *Phaeoacremonium aleophilum* and/or *Botryosphaeria obtusa*; *Elsinoe* spp. on pome fruits (*E. pyri*), soft fruits (*E. veneta*: anthracnose) and vines (*E. ampelina*: anthracnose); *Entyloma oryzae* (leaf smut) on rice; *Epicoccum* spp. (black mold) on wheat; *Erysiphe* spp. (powdery mildew) on sugar beets (*E. betae*), vegetables (e. g. *E. pisi*), such as cucurbits (e. g. *E. cichoracearum*), cabbages, rape (e. g. *E. cruciferarum*); *Eutypa lata* (Eutypa canker or dieback, anamorph: *Cytosporina lata,* syn. *Libertella blepharis*) on fruit trees, vines and ornamental woods; *Exserohilum* (syn. *Helminthosporium*) spp. on corn (e. g. *E. turcicum*); *Fusarium* (teleomorph: *Gibberella*) spp. (wilt, root or stem rot) on various plants, such as *F. graminearum* or *F. culmorum* (root rot, scab or head blight) on cereals (e. g. wheat or barley), *F. oxysporum* on tomatoes, *F. solani* (f. sp. *glycines* now syn. *F. virguliforme*) and *F. tucumaniae* and *F. brasiliense* each causing sudden death syndrome on soybeans, and *F. verticillioides* on corn; *Gaeumannomyces graminis* (take-all) on cereals (e. g. wheat or barley) and corn; *Gibberella* spp. on cereals (e. g. G. zeae) and rice (e. g. *G. fujikuroi*: Bakanae disease); *Glomerella cingulata* on vines, pome fruits and other plants and *G. gossypii* on cotton; Grainstaining complex on rice; *Guignardia bidwellii* (black rot) on vines; *Gymnosporangium* spp. on rosaceous plants and junipers, e. g. *G. sabinae* (rust) on pears; *Helminthosporium* spp. (syn. *Drechslera,* teleomorph: *Cochliobolus*) on corn, cereals and rice; *Hemileia* spp., e. g. *H. vastatrix* (coffee leaf rust) on coffee; *Isariopsis clavispora* (*syn. Cladosporium vitis*) on vines; *Macrophomina phaseolina* (*syn. phaseoli*) (root and stem rot) on soybeans and cotton; *Microdochium* (*syn. Fusarium*) *nivale* (pink snow mold) on cereals (e. g. wheat or barley); *Microsphaera diffusa* (powdery mildew) on soybeans; *Monilinia* spp., e. g. *M. laxa, M. fructicola* and *M. fructigena* (bloom and twig blight, brown rot) on stone fruits and other rosaceous plants; *Mycosphaerella* spp. on cereals, bananas, soft fruits and ground nuts, such as e. g. *M. graminicola* (anamorph: *Septoria tritici,* Septoria blotch) on

wheat or *M. fijiensis* (black Sigatoka disease) on bananas; *Peronospora* spp. (downy mildew) on cabbage (e. g. *P. brassicae*), rape (e. g. *P. parasitica*), onions (e. g. *P. destructor*), tobacco (*P. tabacina*) and soybeans (e. g. *P. manshurica); Phakopsora pachyrhizi* and *P. meibomiae* (soybean rust) on soybeans; *Phialophora* spp. e. g. on vines (e. g. *P. tracheiphila* and *P. tetraspora*) and soybeans (e. g. *P. gregata*: stem rot); *Phoma lingam* (root and stem rot) on rape and cabbage and *P. betae* (root rot, leaf spot and damping-off) on sugar beets; *Phomopsis* spp. on sunflowers, vines (e. g. *P. viticola*: can and leaf spot) and soybeans (e. g. stem rot: *P. phaseoli,* teleomorph: *Diaporthe phaseolorum); Physoderma maydis* (brown spots) on corn; *Phytophthora* spp. (wilt, root, leaf, fruit and stem root) on various plants, such as paprika and cucurbits (e. g. *P. capsici*), soybeans (e. g. *P. megasperma, syn. P. sojae*), potatoes and tomatoes (e. g. *P. infestans*: late blight) and broad-leaved trees (e. g. *P. ramorum:* sudden oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat (*P. graminis*) and sugar beets (*P. betae*) and thereby transmitted viral diseases; *Pseudocercosporella herpotrichoides* (eyespot, teleomorph: *Tapesia yallundae*) on cereals, e. g. wheat or barley; *Pseudoperonospora* (downy mildew) on various plants, e. g. *P. cubensis* on cucurbits or *P. humili* on hop; *Pseudopezicula tracheiphila* (red fire disease or ‚rotbrenner', anamorph: *Phialophora*) on vines; *Puccinia* spp. (rusts) on various plants, e. g. *P. triticina* (brown or leaf rust), *P. striiformis* (stripe or yellow rust), *P. hordei* (dwarf rust), *P. graminis* (stem or black rust) or *P. recondita* (brown or leaf rust) on cereals, such as e. g. wheat, barley or rye, and asparagus (e. g. *P. asparagi*); *Pyrenophora* (anamorph: *Drechslera*) *tritici-repentis* (tan spot) on wheat or *P. teres* (net blotch) on barley; *Pyricularia* spp., e. g. *P. oryzae* (teleomorph: *Magnaporthe grisea,* rice blast) on rice and *P. grisea* on turf and cereals; *Pythium* spp. (damping-off) on turf, rice, corn, wheat, cotton, rape, sunflowers, soybeans, sugar beets, vegetables and various other plants (e. g. *P. ultimum* or *P. aphani-dermatum*); *Ramularia* spp., e. g. *R. collo-cygni* (Ramularia leaf spots, Physiological leaf spots) on barley and *R. beticola* on sugar beets; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or R. *cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and *S. attenuatum* (sheath rot) on rice; *Sclerotinia* spp. (stem rot or white mold) on vegetables and field crops, such as rape, sunflowers (e. g. *S. sclerotiorum*) and soybeans (e. g. *S. rolfsii* or *S. sclerotiorum*); *Septoria* spp. on various plants, e. g. *S. glycines* (brown spot) on soybeans, *S. tritici* (Septoria blotch) on wheat and *S.* (syn. *Stagonospora*) nodorum (Stagonospora blotch) on cereals; *Uncinula* (syn. *Erysiphe*) *necator* (powdery mildew, anamorph: *Oidium tuckeri*) on vines; *Setospaeria* spp. (leaf blight) on corn (e. g. *S. turcicum,* syn. *Helminthosporium turcicum*) and turf; *Sphacelotheca* spp. (smut) on corn, (e. g. *S. reiliana:* head smut), sorghum und sugar cane; *Sphaerotheca fuliginea* (powdery mildew) on cucurbits; *Spongospora subterranea* (powdery scab) on potatoes and thereby transmitted viral diseases; *Stagonospora* spp. on cereals, e. g. *S. nodorum* (Stagonospora blotch, teleomorph: *Leptosphaeria* [syn. *Phaeosphaeria*] *nodorum*) on wheat; *Synchytrium endobioticum* on potatoes (potato wart disease); *Taphrina* spp., e. g. *T. deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans*); *Tilletia* spp. (common bunt or stinking smut) on cereals, such as e. g. *T. tritici* (syn. *T. caries,* wheat bunt) and *T. controversa* (dwarf bunt) on wheat; *Typhula incarnata* (grey snow mold) on barley or wheat; *Urocystis* spp., e. g. *U. occulta* (stem smut) on rye; *Uromyces* spp. (rust) on vegetables, such as beans (e. g. *U. appendiculatus,* syn. *U. phaseoli*) and sugar beets (e. g. *U. betae*); *Ustilago* spp. (loose smut) on cereals (e. g. *U. nuda* and *U. avaenae*), corn (e. g. *U. maydis*: corn smut) and sugar cane; *Venturia* spp. (scab) on apples (e. g. *V. inaequalis*) and pears; and *Verticillium* spp. (wilt) on various plants, such as fruits and ornamentals, vines, soft fruits, vegetables and field crops, e. g. *V. dahliae* on strawberries, rape, potatoes and tomatoes.

The inventive mixtures and compositions are also suitable for controlling harmful fungi in the protection of stored products or harvest and in the protection of materials. The term "protection of materials" is to be understood to denote the protection of technical and non-living materials, such as adhesives, glues, wood, paper and paperboard, textiles, leather, paint dispersions, plastics, colling lubricants, fiber or fabrics, against the infestation and destruction by harmful microorganisms, such as fungi and bacteria. As to the protection of wood and other materials, the particular attention is paid to the following harmful fungi: Ascomycetes such as *Ophiostoma* spp., *Ceratocystis* spp., *Aureobasidium pullulans, Sclerophoma* spp., *Chaetomium* spp., *Humicola* spp., *Petriella* spp., *Trichurus* spp.; Basidiomycetes such as *Coniophora* spp., *Coriolus* spp., *Gloeophyllum* spp., *Lentinus* spp., *Pleurotus* spp., *Poria* spp., *Serpula* spp. and *Tyromyces* spp., Deuteromycetes such as *Aspergillus* spp., *Cladosporium* spp., *Penicillium* spp., *Trichorma* spp., *Alternaria* spp., *Paecilomyces* spp. and Zygomycetes such as *Mucor* spp.*,* and in addition in the protection of stored products and harvest the following yeast fungi are worthy of note: *Candida* spp. and *Saccharomyces cerevisae.*

In particular, the mixtures and compositions of the present invention are effective against plant pathogens in

speciality crops such as vine, fruits, hop, vegetables and tabacco - see the above list.

Plant propagation materials may be treated with the mixtures and compositions of the invention prophylactically either at or before planting or transplanting.

The invention also relates to agrochemical compositions comprising an auxiliary and at least one compound I and at least one compound II according to the invention.

An agrochemical composition comprises a fungicidally effective amount of a compound I and a compound II. The term "effective amount" denotes an amount of the composition or of the compounds I, which is sufficient for controlling harmful fungi on cultivated plants or in the protection of materials and which does not result in a substantial damage to the treated plants. Such an amount can vary in a broad range and is dependent on various factors, such as the fungal species to be controlled, the treated cultivated plant or material, the climatic conditions and the specific compound I used.

The compounds I and II, their N-oxides and salts can be converted into customary types of agrochemical compositions, e. g. solutions, emulsions, suspensions, dusts, powders, pastes, granules, pressings, capsules, and mixtures thereof. Examples for composition types are suspensions (e.g. SC, OD, FS), emulsifiable concentrates (e.g. EC), emulsions (e.g. EW, EO, ES, ME), capsules (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations for the treatment of plant propagation materials such as seeds (e.g. GF). These and further compositions types are defined in the "Catalogue of pesticide formulation types and international coding system", Technical Monograph No. 2, 6$^{th}$ Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Suitable auxiliaries are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.

Suitable solvents and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzylalcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof.

Suitable solid carriers or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharides, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable surfactants are surface-active compounds, such as anionic, cationic, nonionic and amphoteric surfactants, block polymers, polyelectrolytes, and mixtures thereof. Such surfactants can be used as emusifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).

Suitable anionic surfactants are alkali, alkaline earth or ammonium salts of sulfonates, sulfates, phosphates, carboxylates, and mixtures thereof. Examples of sulfonates are alkylarylsulfonates, diphenylsulfonates, alpha-olefin sulfonates, lignine sulfonates, sulfonates of fatty acids and oils, sulfonates of ethoxylated alkylphenols, sulfonates of alkoxylated arylphenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulfates are sulfates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkylphenol ethoxylates.

Suitable nonionic surfactants are alkoxylates, N-subsituted fatty acid amides, amine oxides, esters, sugar-based surfactants, polymeric surfactants, and mixtures thereof. Examples of alkoxylates are compounds such as alcohols, alkylphenols, amines, amides, arylphenols, fatty acids or fatty acid esters which have been alkoxylated with 1 to 50 equivalents. Ethylene oxide and/or propylene oxide may be employed for the alkoxylation, preferably ethylene oxide. Examples of N-subsitituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinylalcohols, or vinylacetate.

Suitable cationic surfactants are quaternary surfactants, for example quaternary ammonium compounds with one or two hydrophobic groups, or salts of long-chain primary amines. Suitable amphoteric surfactants are alkylbetains

and imidazolines. Suitable block polymers are block polymers of the A-B or A-B-A type comprising blocks of polyethylene oxide and polypropylene oxide, or of the A-B-C type comprising alkanol, polyethylene oxide and polypropylene oxide. Suitable polyelectrolytes are polyacids or polybases. Examples of polyacids are alkali salts of polyacrylic acid or polyacid comb polymers. Examples of polybases are polyvinylamines or polyethyleneamines.

Suitable adjuvants are compounds, which have a neglectable or even no pesticidal activity themselves, and which improve the biological performance of the compound I on the target. Examples are surfactants, mineral or vegetable oils, and other auxilaries. Further examples are listed by Knowles, Adjuvants and additives, Agrow Reports DS256, T&F Informa UK, 2006, chapter 5.

Suitable thickeners are polysaccharides (e.g. xanthan gum, carboxymethylcellulose), anorganic clays (organically modified or unmodified), polycarboxylates, and silicates.

Suitable bactericides are bronopol and isothiazolinone derivatives such as alkyliso-thiazolinones and benzisothiazolinones.

Suitable anti-freezing agents are ethylene glycol, propylene glycol, urea and glycerin.

Suitable anti-foaming agents are silicones, long chain alcohols, and salts of fatty acids.

Suitable colorants (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants).

Suitable tackifiers or binders are polyvinylpyrrolidons, polyvinylacetates, polyvinyl alcohols, polyacrylates, biological or synthetic waxes, and cellulose ethers.

Examples for composition types and their preparation are (wherein active substances denote at least one compound I and one compound II):

i) Water-soluble concentrates (SL, LS)

10-60 wt% active substances and 5-15 wt% wetting agent (e.g. alcohol alkoxylates) are dissolved in water and/or in a water-soluble solvent (e.g. alcohols) ad 100 wt%. The active substance dissolves upon dilution with water.

ii) Dispersible concentrates (DC)

5-25 wt% active substances and 1-10 wt% dispersant (e. g. polyvinylpyrrolidone) are dissolved in organic solvent (e.g. cyclohexanone) ad 100 wt%. Dilution with water gives a dispersion.

iii) Emulsifiable concentrates (EC)

15-70 wt% active substances and 5-10 wt% emulsifiers (e.g. calcium dodecylbenzenesulfonate and castor oil ethoxylate) are dissolved in water-insoluble organic solvent (e.g. aromatic hydrocarbon) ad 100 wt%. Dilution with water gives an emulsion.

iv) Emulsions (EW, EO, ES)

5-40 wt% active substances and 1-10 wt% emulsifiers (e.g. calcium dodecylbenzenesulfonate and castor oil ethoxylate) are dissolved in 20-40 wt% water-insoluble organic solvent (e.g. aromatic hydrocarbon). This mixture is introduced into water ad 100 wt% by means of an emulsifying machine and made into a homogeneous emulsion. Dilution with water gives an emulsion.

v) Suspensions (SC, OD, FS)

In an agitated ball mill, 20-60 wt% active substances are comminuted with addition of 2-10 wt% dispersants and wetting agents (e.g. sodium lignosulfonate and alcohol ethoxylate), 0.1-2 wt% thickener (e.g. xanthan gum) and ad water ad 100 wt% to give a fine active substance suspension. Dilution with water gives a stable suspension of the active substance. For FS type composition up to 40 wt% binder (e.g. polyvinylalcohol) is added.

vi) Water-dispersible granules and water-soluble granules (WG, SG)

50-80 wt% active substances are ground finely with addition of dispersants and wetting agents (e.g. sodium lignosulfonate and alcohol ethoxylate) ad 100 wt% and prepared as water-dispersible or water-soluble granules by means of technical appliances (e. g. extrusion, spray tower, fluidized bed). Dilution with water gives a stable dispersion or solution of the active substance.

vii) Water-dispersible powders and water-soluble powders (WP, SP, WS)

50-80 wt% active substances are ground in a rotor-stator mill with addition of 1-5 wt% dispersants (e.g. sodium lignosulfonate), 1-3 wt% wetting agents (e.g. alcohol ethoxylate) and solid carrier (e.g. silica gel) ad 100 wt%. Dilution with water gives a stable dispersion or solution of the active substance.

viii) Gel (GW, GF)

In an agitated ball mill, 5-25 wt% active substances are comminuted with addition of 3-10 wt% dispersants (e.g. sodium lignosulfonate), 1-5 wt% thickener (e.g. carboxymethylcellulose) and water ad 100 wt% to give a fine suspension of the active substance. Dilution with water gives a stable suspension of the active substance.

iv) Microemulsion (ME)

5-20 wt% active substances are added to 5-30 wt% organic solvent blend (e.g. fatty acid dimethylamide and cyclohexanone), 10-25 wt% surfactant blend (e.g. alcohol ethoxylate and arylphenol ethoxylate), and water ad 100

wt%. This mixture is stirred for 1 h to produce spontaneously a thermodynamically stable microemulsion.

iv) Microcapsules (CS)

An oil phase comprising 5-50 wt% active substances, 0-40 wt% water insoluble organic solvent (e.g. aromatic hydrocarbon), 2-15 wt% acrylic monomers (e.g. methylmethacrylate, methacrylic acid and a di- or triacrylate) are dispersed into an aqueous solution of a protective colloid (e.g. polyvinyl alcohol). Radical polymerization initiated by a radical initiator results in the formation of poly(meth)acrylate microcapsules. Alternatively, an oil phase comprising 5-50 wt% of a compound I according to the invention, 0-40 wt% water insoluble organic solvent (e.g. aromatic hydrocarbon), and an isocyanate monomer (e.g. diphenylmethene-4,4'-diisocyanatae) are dispersed into an aqueous solution of a protective colloid (e.g. polyvinyl alcohol). The addition of a polyamine (e.g. hexamethylenediamine) results in the formation of polyurea microcapsules. The monomers amount to 1-10 wt%. The wt% relate to the total CS composition.

ix) Dustable powders (DP, DS)

1-10 wt% active substances are ground finely and mixed intimately with solid carrier (e.g. finely divided kaolin) ad 100 wt%.

x) Granules (GR, FG)

0.5-30 wt% active substances are ground finely and associated with solid carrier (e.g. silicate) ad 100 wt%. Granulation is achieved by extrusion, spray-drying or fluidized bed.

xi) Ultra-low volume liquids (UL)

1-50 wt% active substances are dissolved in organic solvent (e.g. aromatic hydrocarbon) ad 100 wt%.

The compositions types i) to xi) may optionally comprise further auxiliaries, such as 0.1-1 wt% bactericides, 5-15 wt% anti-freezing agents, 0.1-1 wt% anti-foaming agents, and 0.1-1 wt% colorants.

The agrochemical compositions generally comprise between 0.01 and 95%, preferably between 0.1 and 90%, and in particular between 0.5 and 75%, by weight of active substances. The active substances are employed in a purity of from 90% to 100%, preferably from 95% to 100% (according to NMR spectrum).

Solutions for seed treatmenr (LS), Suspoemulsions (SE), flowable concentrates (FS), powders for dry treatment (DS), water-dispersible powders for slurry treatment (WS), water-soluble powders (SS), emulsions (ES), emulsifiable concentrates (EC) and gels (GF) are usually employed for the purposes of treatment of plant propagation materials, particularly seeds. The compositions in question give, after two-to-tenfold dilution, active substance concentrations of from 0.01 to 60% by weight, preferably from 0.1 to 40%, in the ready-to-use preparations. Application can be carried out before or during sowing. Methods for applying or treating compound I and compound II and compositions thereof, respectively, on to plant propagation material, especially seeds include dressing, coating, pelleting, dusting, soaking and in-furrow application methods of the propagation material. Preferably, compound I and compound II or the compositions thereof, respectively, are applied on to the plant propagation material by a method such that germination is not induced, e. g. by seed dressing, pelleting, coating and dusting.

When employed in plant protection, the amounts of active substances applied are, depending on the kind of effect desired, from 0.001 to 2 kg per ha, preferably from 0.005 to 2 kg per ha, more preferably from 0.05 to 0.9 kg per ha, in particular from 0.1 to 0.75 kg per ha.

In treatment of plant propagation materials such as seeds, e. g. by dusting, coating or drenching seed, amounts of active substance of from 0.1 to 1000 g, preferably from 1 to 1000 g, more preferably from 1 to 100 g and most preferably from 5 to 100 g, per 100 kilogram of plant propagation material (preferably seed) are generally required.

When used in the protection of materials or stored products, the amount of active substance applied depends on the kind of application area and on the desired effect. Amounts customarily applied in the protection of materials are 0.001 g to 2 kg, preferably 0.005 g to 1 kg, of active substance per cubic meter of treated material.

Various types of oils, wetters, adjuvants, fertilizer, or micronutrients, and further pesticides (e.g. herbicides, insecticides, fungicides, growth regulators, safeners) may be added to the active substances or the compositions comprising them as premix or, if appropriate not until immediately prior to use (tank mix). These agents can be admixed with the compositions according to the invention in a weight ratio of 1:100 to 100:1, preferably 1:10 to 10:1.

The user applies the composition according to the invention usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

According to one embodiment, individual components of the composition according to the invention such as parts of a kit or parts of a binary or ternary mixture may be mixed by the user himself in a spray tank and further auxiliaries may be added, if appropriate.

In the binary mixtures and compositions according to the invention, the weight ratio of compound I and compound II generally depends from the properties of the active substances used, it is in the range of from 1:20 to 20:1, more

preferably in the range of from 1:10 to 10:1, even more preferably in the range of from 1:4 to 4:1 and in particular in the range of from 1:2 to 2:1.

According to further embodiments of the binary mixtures and compositions according to the invention, the weight ratio of compound I versus compound II usually is in the range of from of from 20:1 to 1:1, more preferably in the range of from 10:1 to 1:1, even more preferably in the range of from 4:1 to 1:1 and in particular in the range of from 2:1 to 1:1.

According to further embodiments of the binary mixtures and compositions according to the invention, the weight ratio of compound I versus compound II is in the range of from 1:1 to 1:20, more preferably in the range of from 1:1 to 1:10, even more preferably in the range of from 1:1 to 1:4 and in particular in the range of from 1:1 to 1:2.

In the ternary mixtures, i.e. compositions according to the invention comprising one compound I (component 1) and a compound II (component 2) and a compound III (component 3), the weight ratio of component 1) and component 2) depends from the properties of the active substances used, usually it is in the range of from 1:100 to 100:1, regularly in the range of from 1:50 to 50:1, preferably in the range of from 1:20 to 20:1, more preferably in the range of from 1:10 to 10:1 1 and in particular in the range of from 1:4 to 4:1, and the weight ratio of component 1) and component 3) usually it is in the range of from 1:100 to 100:1, regularly in the range of from 1:50 to 50:1, preferably in the range of from 1:20 to 20:1, more preferably in the range of from 1:10 to 10:1 and in particular in the range of from 1:4 to 4:1.

Any further active components are, if desired, added in a ratio of from 20:1 to 1:20 to the compound I.

In the mixtures and compositions, the compound ratios (e. g. compound I/compound II/compound III ratio) are advantageously chosen so as to produce a synergistic effect.

The term "synergstic effect" is understood to refer in particular to that defined by Colby's formula (Colby, S. R., "Calculating synergistic and antagonistic responses of herbicide combinations", Weeds, 15, pp. 20-22, 1967).

The term "synergistic effect" is also understood to refer to that defined by application of the Tammes method, (Tammes, P. M. L., "Isoboles, a graphic representation of synergism in pesticides", Netherl. J. Plant Pathol. 70, 1964).

The components can be used individually or already partially or completely mixed with one another to prepare the composition according to the invention. It is also possible for them to be packaged and used as combination such as a kit of parts.

According to the invention, the solid material (dry matter) of the biopesticides II and/or III are considered as active components (e.g. to be obtained after drying or evaporation of the extraction medium or the suspension medium in case of liquid formulations of the microbial pesticides).

In accordance with the present invention, the weight ratios and percentages used herein for biological extracts such as Quillay extract are based on the total weight of the dry content (solid material) of the respective extract(s).

For microbial pesticides II or III from groups H) and H'), weight ratios and/or percentages refer to the total weight of a preparation of the respective biopesticide II with at least 1 x $10^6$ CFU/g ("colony forming units per gram total weight"), preferably with at least 1 x $10^8$ CFU/g, even more preferably from 1 x $10^8$ to 1 x $10^{12}$ CFU/g dry matter. Colony forming unit is measure of viable microbial cells, in particular fungal and bacterial cells.

Herein, microbial pesticides II or selected from groups H or H') may be supplied in any physiological state such as active or dormant. Such dormant active component may be supplied for example frozen, dried, or lyophilized or partly desiccated (procedures to produce these partly desiccated organisms are given in WO2008/002371) or in form of spores.

Microbial pesticides II selected from groups H) used as organism in an active state can be delivered in a growth medium without any additional additives or materials or in combination with suitable nutrient mixtures. According to one embodiment, the compositions comprise between 0.01 and 90% (w/w) of component 1) and from 1 x $10^5$ CFU to 1 x $10^{12}$ CFU of component 2) per gram total weight of the composition. According to another embodiment, the compositions comprise between 5 and 70% (w/w) of component 1) and from 1 x $10^6$ CFU to 1 x $10^{10}$ CFU of component 2) per gram total weight of the composition. According to another embodiment, the compositions comprise between 25 and 70% (w/w) of component 1) and from 1 x $10^7$ CFU to 1 x $10^9$ CFU of component 2) per gram total weight of the composition.

In the ternary mixtures, i.e. compositions according to the invention comprising the component 1) and component 2) and a compound III (component 3), the weight ratio of component 1) and component 2) depends from the properties of the active substances used, usually it is in the range of from 1:100 to 100:1, regularly in the range of from 1:50 to 50:1, preferably in the range of from 1:20 to 20:1, more preferably in the range of from 1:10 to 10:1 and in particular in the range of from 1:4 to 4:1, and the weight ratio of component 1) and component 3) usually it is in the range of from 1:100 to 100:1, regularly in the range of from 1:50 to 50:1, preferably in the range of from 1:20 to 20:1, more preferably in the range of from 1:10 to 10:1 and in particular in the range of from 1:4 to 4:1.

Any further active components are, if desired, added in a ratio of from 20:1 to 1:20 to the component 1).

In the mixtures and compositions, the compound ratios are advantageously chosen so as to produce a synergistic effect.

The total weight ratios of compositions wherein component 2) is selected from groups H) can be determined based on the weight of component 1) and using the amount of CFU of component 2) to calclulate the total weight of component 2) with the following equation that 1 x $10^9$ CFU equals one gram of total weight of component 2).

Microbial pesticides III selected from groups H') used as organism in an active state can be delivered in a

growth medium without any additional additives or materials or in combination with suitable nutrient mixtures. According to one embodiment, the compositions comprise between 0.01 and 90% (w/w) of component 1) and from 1 x $10^5$ CFU to 1 x $10^{12}$ CFU of component 3) per gram total weight of the composition. According to another embodiment, the compositions comprise between 5 and 70% (w/w) of component 1) and from 1 x $10^6$ CFU to 1 x $10^{10}$ CFU of component 3) per gram total weight of the composition. According to another embodiment, the compositions comprise between 25 and 70% (w/w) of component 1) and from 1 x $10^7$ CFU to 1 x $10^9$ CFU of component 3) per gram total weight of the composition.

The agrochemical compositions generally are characterized in that they contain an effective quantity of the active components as defined above. Generally, they contain between 0.01 and 95%, preferably between 0.1 and 90%, and in particular between 0.5 and 75%, by weight of active components.

The fungicidal action of the compositions according to the invention can be shown by the tests described below.

The active compounds, separately or jointly, are prepared as a stock solution comprising 25 mg of active compound which is made up to 10 ml using a mixture of acetone and/or DMSO and the emulsifier Uniperol® EL (wetting agent having an emulsifying and dispersing action based on ethoxylated alkylphenols) in a ratio by volume of solvent/emulsifier of 99:1. The mixture is then made up to 100 ml with water. This stock solution is diluted with the solvent/emulsifier/water mixture described to give the concentration of active compound stated below.

The visually determined percentages of infected leaf areas are converted into efficacies in % of the untreated control.

The efficacy (E) is calculated as follows using Abbot's formula:

$$E = (1 - \alpha/\beta) \cdot 100$$

$\alpha$ corresponds to the fungicidal infection of the treated plants in % and
$\beta$ corresponds to the fungicidal infection of the untreated (control) plants in %

An efficacy of 0 means that the infection level of the treated plants corresponds to that of the untreated control plants; an efficacy of 100 means that the treated plants were not infected.

The expected efficacies of active compound combinations were determined using Colby's formula (Colby, S.R. "Calculating synergistic and antagonistic responses of herbicide combinations", Weeds, 15, pp. 20-22, 1967) and compared with the observed efficacies. Colby's formula:

$$E = x + y - x \cdot y/100$$

E expected efficacy, expressed in % of the untreated control, when using the mixture of the active compounds A and B at the concentrations a and b
x efficacy, expressed in % of the untreated control, when using the active compound A at the concentration a
y efficacy, expressed in % of the untreated control, when using the active compound B at the concentration b.

Microtests

The active compounds were formulated separately as a stock solution having a concentration of 10000 ppm in dimethyl sulfoxide.

The product orysastrobin was used as commercial finished formulation and diluted with water to the stated concentration of the active compound.

The stock solutions were mixed according to the ratio, pipetted onto a micro titer plate (MTP) and diluted with water to the stated concentrations. A spore suspension of the respective pathogen in the respective nutrient medium was then added. The plates were placed in a water vapor-saturated chamber at a temperature of 18°C. Using an absorption photometer, the MTPs were measured at 405 nm 7 days after the inoculation.

The measured parameters were compared to the growth of the active compound-free control variant (100%) and the fungus-free and active compound-free blank value to determine the relative growth in % of the pathogens in the respective active compounds. These percentages were converted into efficacies.

The expected efficacies of active compound mixtures were determined using Colby's formula [R.S. Colby, "Calculating synergistic and antagonistic responses of herbicide combinations", Weeds 15, 20-22 (1967)] and compared with the observed efficacies.

Use example 1. Activity against the late blight pathogen *Phytophthora infestans*

A spore suspension of Phytophtora infestans containing a pea juice-based aqueous nutrient medium was used.

## Claims

**1.** A mixture, comprising as active components

1) at least one compound of formula I

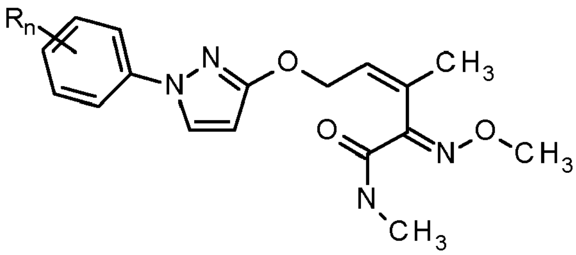

I,

wherein
n is an integer and is 0, 1, 2, 3, 4 or 5; and
R , which may be the same or different to any other R, is halogen, hydroxyl, carboxyl, $C_1$-$C_4$-alkyl, $C_2$-$C_4$-alkenyl, $C_2$-$C_8$-alkynyl, $C_1$-$C_4$-haloalkyl, $C_1$-$C_4$-alkoxy, $C_1$-$C_4$-haloalkoxy, $C_1$-$C_4$-alkylsulfanyl, $C_1$-$C_4$-haloalkylsulfanyl, $C_1$-$C_6$-alkoxyimino-$C_1$-$C_4$-alkyl, $C_2$-$C_6$-alkenyloxyimino-$C_1$-$C_4$-alkyl, $C_2$-$C_6$-alkynyloxyimino-$C_1$-$C_4$-alkyl, $C_1$-$C_4$-alkoxyimino-$C_1$-$C_4$-alkyl, $C_1$-$C_6$-alkoxy-imino-, $C_2$-$C_6$-alkenyloxyimino-, $C_2$-$C_6$-alkynyloxyimino-, $C_2$-$C_6$-haloalkenyloxyimino-, $C_3$-$C_6$-cycloalkyl, $C_3$-$C_6$-cycloalkenyl, phenyl or a 5-membered saturated, partially unsaturated or aromatic heterocyclyl which, in addition to carbon atoms, contains one to three heteroatoms from the group consisting of N, O and S as ring members; wherein the aforementioned cyclic groups R are attached via a direct bond, an oxygen or sulfur atom and where the aliphatic or cyclic groups $R^c$ for their part may carry 1, 2, 3 or up to the maximum possible number of identical or different groups $R^a$:

$R^a$ , which may be the same or different to any other $R^a$, is halogen, $C_1$-$C_4$-alkyl or $C_1$-$C_4$-haloalkyl;

and
2) at least one active compound or biopesticide II selected from groups A) to O):

A) Respiration inhibitors selected from

- Inhibitors of complex III at $Q_o$ site: azoxystrobin (II-1), coumethoxystrobin, coumoxystrobin, dimoxystrobin (II-2), enestroburin, fenaminstrobin, fenoxy-strobin/flufenoxystrobin, fluoxastrobin (II-3), kresoxim-methyl (II-4), meto-minostrobin, orysastrobin (II-5), picoxystrobin (II-6), pyraclostrobin (II-7), pyrametostrobin, pyraoxystrobin, trifloxystrobin (II-8), 2-[2-(2,5-dimethyl-phenoxymethyl)-phenyl]-3-methoxy-acrylic acid methyl ester and 2-(2-(3-(2,6-dichlorophenyl)-1-methyl-allylideneaminooxymethyl)-phenyl)-2-methoxyimino-N-methyl-acetamide, pyribencarb, triclopyricarb/chlorodincarb, famoxadone, fenamidone;
- inhibitors of complex III at $Q_i$ site: cyazofamid, amisulbrom, [(3S,6S,7R,8R)-8-benzyl-3-[(3-acetoxy-4-methoxy-pyridine-2-carbonyl)amino]-6-methyl-4,9-dioxo-1,5-dioxonan-7-yl]2-methylpropanoate, [(3S,6S,7R,8R)-8-benzyl-3-[[3-(acet-oxymethoxy)-4-methoxy-pyridine-2-carbonyl]amino]-6-methyl-4,9-dioxo-1,5-dioxonan-7-yl] 2-methylpropanoate, [(3S,6S,7R,8R)-8-benzyl-3-[(3-isobut-oxycarbonyloxy-4-methoxy-pyridine-2-carbonyl)amino]-6-methyl-4,9-dioxo-1,5-dioxonan-7-yl]2-methylpropanoate, [(3S,6S,7R,8R)-8-benzyl-3-[[3-(1,3-ben-zodioxol-5-ylmethoxy)-4-methoxy-pyridine-2-carbonyl]amino]-6-methyl-4,9-dioxo-1,5-dioxonan-7-yl]2-methylpropanoate; (3S,6S,7R,8R)-3-[[(3-hydroxy-4-methoxy-2-pyridinyl)carbonyl]amino]-6-methyl-4,9-dioxo-8-(phenylmethyl)-1,5-dioxonan-7-yl 2-methylpropanoate;
- inhibitors of complex II: benodanil, benzovindiflupyr (II-9), bixafen (II-10), boscalid (II-11), carboxin, fenfuram, fluopyram (II-12), flutolanil, fluxapyroxad (II-13), furametpyr, isofetamid, isopyrazam (II-14),

mepronil, oxycarboxin, penflufen (II-15), penthiopyrad (II-16), sedaxane (II-17), tecloftalam, thifluzamide, N-(4'-trifluoromethylthiobiphenyl-2-yl)-3-difluoromethyl-1-methyl-1H-pyrazole-4-carboxamide, N-(2-(1,3,3-trimethyl-butyl)-phenyl)-1,3-dimethyl-5-fluoro-1H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)-pyrazole-4-carboxamide, 1,3,5-trimethyl-N-(1,1,3-trimethylindan-4-yl)pyrazole-4-carboxamide, N-(7-fluoro-1,1,3-trimethyl-indan-4-yl)-1,3-dimethyl-pyrazole-4-carboxamide, N-[2-(2,4-dichlorophenyl)-2-methoxy-1-methyl-ethyl]-3-(difluoro-methyl)-1-methyl-pyrazole-4-carboxamide;

- other respiration inhibitors: diflumetorim, (5,8-difluoroquinazolin-4-yl)-{2-[2-fluoro-4-(4-trifluoromethylpyridin-2-yloxy)-phenyl]-ethyl}-amine; binapacryl, dinobuton, dinocap, fluazinam (I-18); ferimzone; fentin salts such as fentin-acetate, fentin chloride or fentin hydroxide; ametoctradin (I-19); and silthiofam;

B) Sterol biosynthesis inhibitors (SBI fungicides) selected from

- C14 demethylase inhibitors (DMI fungicides): azaconazole, bitertanol, bromu-conazole, cyproconazole (I-20), difenoconazole (I-21), diniconazole, diniconazole-M, epoxiconazole (I-22), fenbuconazole, fluquinconazole (I-23), flusilazole, flutriafol, hexaconazole, imibenconazole, ipconazole, metconazole (I-24), myclobutanil, oxpoconazole, paclobutrazole, penconazole, propiconazole (I-25), prothioconazole (I-26), simeconazole, tebuconazole (I-27), tetraconazole, triad-imefon, triadimenol, triticonazole, uniconazole, 1-[*rel*-(2*S*;3*R*)-3-(2-chlorophenyl)-2-(2,4-difluorophenyl)-oxiranylmethyl]-5-thiocyanato-1H-[1,2,4]triazolo (I-28), 2-[*rel*-(2*S*;3*R*)-3-(2-chlorophenyl)-2-(2,4-difluorophenyl)-oxiranylmethyl]-2H-[1,2,4]triazole-3-thiol (I-29), 2-[2-chloro-4-(4-chlorophenoxy)phenyl]-1-(1,2,4-triazol-1-yl)pentan-2-ol, 1-[4-(4-chlorophenoxy)-2-(trifluoromethyl)phenyl]-1-cyclopropyl-2-(1,2,4-triazol-1-yl)ethanol (I-30), 2-[4-(4-chlorophenoxy)-2-(tri-fluoromethyl)phenyl]-1-(1,2,4-triazol-1-yl)butan-2-ol (I-31), 2-[2-chloro-4-(4-chlo-rophenoxy)phenyl]-1-(1,2,4-triazol-1-yl)butan-2-ol (I-32), 2-[4-(4-chlorophenoxy)-2-(trifluoromethyl)phenyl]-3-methyl-1-(1,2,4-triazol-1-yl)butan-2-ol (I-33), 2-[4-(4-chlorophenoxy)-2-(trifluoromethyl)phenyl]-1-(1,2,4-triazol-1-yl)propan-2-ol (I-34), 2-[2-chloro-4-(4-chlorophenoxy)phenyl]-3-methyl-1-(1,2,4-triazol-1-yl)butan-2-ol (I-35), 2-[4-(4-chlorophenoxy)-2-(trifluoromethyl)phenyl]-1-(1,2,4-triazol-1-yl)pentan-2-ol (I-36), 2-[4-(4-fluorophenoxy)-2-(trifluoromethyl)phenyl]-1-(1,2,4-triazol-1-yl)propan-2-ol (I-37); imazalil, pefurazoate, prochloraz, triflumizol; fenarimol, nuarimol, pyrifenox, triforine, [3-(4-chloro-2-fluoro-phenyl)-5-(2,4-difluorophenyl)isoxazol-4-yl]-(3-pyridyl)methanol;

- Delta14-reductase inhibitors: aldimorph, dodemorph, dodemorph-acetate, fenpropimorph, tridemorph, fenpropidin, piperalin, spiroxamine;

- Inhibitors of 3-keto reductase: fenhexamid;

C) Nucleic acid synthesis inhibitors selected from

- phenylamides or acyl amino acid fungicides: benalaxyl, benalaxyl-M, kiralaxyl, metalaxyl, metalaxyl-M (mefenoxam) (I-38), ofurace, oxadixyl;

- others: hymexazole, octhilinone, oxolinic acid, bupirimate, 5-fluorocytosine, 5-fluoro-2-(p-tolylmethoxy)pyrimidin-4-amine, 5-fluoro-2-(4-fluorophenyl-methoxy)pyrimidin-4-amine;

D) Inhibitors of cell division and cytoskeleton selected from

- tubulin inhibitors: benomyl, carbendazim, fuberidazole, thiabendazole, thiophanate-methyl (I-39); 5-chloro-7-(4-methylpiperidin-1-yl)-6-(2,4,6-trifluorophenyl)-[1,2,4]triazolo[1,5-a]pyrimidine

- other cell division inhibitors: diethofencarb, ethaboxam, pencycuron, fluopicolide, zoxamide, metrafenone (I-40), pyriofenone;

E) Inhibitors of amino acid and protein synthesis selected from

- methionine synthesis inhibitors (anilino-pyrimidines): cyprodinil, mepanipyrim, Pyrimethanil (I-41);

- protein synthesis inhibitors: blasticidin-S, kasugamycin, kasugamycin hydrochloride-hydrate, mildiomycin, streptomycin, oxytetracyclin, polyoxine, validamycin A;

F) Signal transduction inhibitors selected from

- MAP / histidine kinase inhibitors: fluoroimid, iprodione, procymidone, vinclozolin, fenpiclonil, fludioxonil;
- G protein inhibitors: quinoxyfen;

G) Lipid and membrane synthesis inhibitors selected from

- Phospholipid biosynthesis inhibitors: edifenphos, iprobenfos, pyrazophos, isoprothiolane;
- lipid peroxidation: dicloran, quintozene, tecnazene, tolclofos-methyl, biphenyl, chloroneb, etridiazole;
- phospholipid biosynthesis and cell wall deposition: dimethomorph (I-42), flumorph, mandipropamid (I-43), pyrimorph, benthiavalicarb, iprovalicarb, valifenalate, N-(1-(1-(4-cyano-phenyl)ethanesulfonyl)-but-2-yl) carbamic acid-(4-fluorophenyl) ester;
- compounds affecting cell membrane permeability and fatty acides: propamocarb, propamocarb-hydrochlorid;
- fatty acid amide hydrolase inhibitors: oxathiapiprolin;

H) Inhibitors with Multi Site Action selected from

- inorganic active substances: Bordeaux mixture, copper acetate, copper hydroxide, copper oxychloride (I-44), basic copper sulfate, sulfur;
- thio- and dithiocarbamates: ferbam, mancozeb (I-45), maneb, metam, metiram (I-46), propineb, thiram, zineb, ziram;
- organochlorine compounds: anilazine, Chlorothalonil (I-47), captafol, captan, folpet, dichlofluanid, dichlorophen, hexachlorobenzene, pentachlorophenole and its salts, phthalide, tolylfluanid, N-(4-chloro-2-nitro-phenyl)-N-ethyl-4-methyl-benzenesulfonamide;
- guanidines and others: guanidine, dodine, dodine free base, guazatine, guazatine-acetate, iminoctadine, iminoctadine-triacetate, iminoctadine-tris(albe-silate), dithianon, 2,6-dimethyl-1H,5H-[1,4]dithiino[2,3-c:5,6-c']dipyrrole-1,3,5,7(2H,6H)-tetraone (I-48);

I) Cell wall synthesis inhibitors selected from

- inhibitors of glucan synthesis: validamycin, polyoxin B;
- melanin synthesis inhibitors: pyroquilon, tricyclazole, carpropamid, dicyclomet, fenoxanil;

J) Plant defence inducers selected from

- acibenzolar-S-methyl, probenazole, isotianil, tiadinil, prohexadione-calcium; fosetyl, fosetyl-aluminum, phosphorous acid and its salts (I-49);

K) Unknown mode of action selected from
bronopol, chinomethionat, cyflufenamid, cymoxanil, dazomet, debacarb, diclomezine, difenzoquat, difenzoquat-methylsulfate, diphenylamin, fenpyrazamine, flumetover, flusulfamide, flutianil, methasulfocarb, nitrapyrin, nitrothal-isopropyl, oxathiapiprolin, tolprocarb, 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, oxin-copper, proquinazid, tebufloquin, tecloftalam, triazoxide, 2-butoxy-6-iodo-3-propylchromen-4-one, N-(cyclopropylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, methoxy-acetic acid 6-tert-butyl-8-fluoro-2,3-dimethyl-quinolin-4-yl ester, 3-[5-(4-methylphenyl)-2,3-dimethyl-isoxazolidin-3-yl]-pyridine, 3-[5-(4-chloro-phenyl)-2,3-dimethyl-isoxazolidin-3-yl]-pyridine (pyrisoxazole), N-(6-methoxy-pyridin-3-yl) cyclopropanecarboxylic acid amide, 5-chloro-1-(4,6-dimethoxy-pyrimidin-2-yl)-2-methyl-1H-benzoimidazole, 2-(4-chloro-phenyl)-N-[4-(3,4-dimethoxy-phenyl)-isoxazol-5-yl]-2-prop-2-ynyloxy-acetamide, ethyl (Z)-3-amino-2-cyano-3-phenyl-prop-2-enoate, tert-butyl N-[6-[[(Z)-[(1-methyltetrazol-5-yl)-phenyl-methylene]amino]oxymethyl]-2-pyridyl]carbamate, pentyl N-[6-[[(Z)-[(1-methyltetrazol-5-yl)-phenyl-methylene]amino]oxymethyl]-2-pyridyl]carbamate, 2-[2-[(7,8-difluoro-2-methyl-3-quinolyl)oxy]-6-fluoro-phenyl]propan-2-ol, 2-[2-fluoro-6-[(8-fluoro-2-methyl-3-quinolyl)oxy]phenyl]propan-2-ol, 3-(5-fluoro-3,3,4,4-tetramethyl-3,4-dihydroisoquinolin-1-yl)quinoline, 3-(4,4-difluoro-3,3-dimethyl-3,4-dihydroisoquinolin-1-yl)quinoline, 3-(4,4,5-trifluoro-3,3-dimethyl-3,4-dihydroisoquinolin-1-yl)quinoline;

L) antifungal biopesticides selected from

*Ampelomyces quisqualis, Aspergillus flavus, Aureobasidium pullulans, Bacillus pumilus* (I-50), *Bacillus subtilis* (I-51), *Bacillus subtilis* var. *amyloliquefaciens* (I-*52), Candida oleophila* I-82, *Candida saitoana,* Chitosan, *Clonostachys rosea* f. *catenulata,* also named *Gliocladium catenulatum, Coniothyrium minitans, Cryphonectria parasitica, Cryptococcus albidus, Fusarium oxysporum* (I-53), *Metschnikowia fructicola, Microdochium dimerum, Phlebiopsis gigantea, Pseudozyma flocculosa, Pythium oligandrum* DV74, *Reynoutria sachlinensis, Talaromyces flavus* V117b, *Trichoderma asperellum* SKT-1, *T. atroviride* LC52, *T. harzianum* T-22, *T. harzianum* TH 35, *T. harzianum* T-39; *T. harzianum* and *T. viride, T. harzianum* ICC012 and *T. viride* ICC080; *T. polysporum* and *T. harzianum; T. stromaticum, T. virens* GL-21, *T. viride, T. viride* TV1, *Ulocladium oudemansii* HRU3;

M) Growth regulators selected from

abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (mepiquat chloride) (I-54), naphthaleneacetic acid, N-6-benzyladenine, paclobutrazol, prohexadione (prohexadione-calcium, I-55), prohydrojasmon, thidiazuron, triapenthenol, tributyl phosphorotrithioate, 2,3,5-tri-iodobenzoic acid , trinexapac-ethyl and uniconazole;

N) Herbicides selected from

- acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
- amino acid derivatives: bilanafos, glyphosate, glufosinate, sulfosate;
- aryloxyphenoxypropionates: clodinafop, cyhalofop-butyl, fenoxaprop, fluazifop, haloxyfop, metamifop, propaquizafop, quizalofop, quizalofop-P-tefuryl;
- Bipyridyls: diquat, paraquat;
- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
- cyclohexanediones: butroxydim, clethodim, cycloxydim, profoxydim, sethoxydim, tepraloxydim, tralkoxydim;
- dinitroanilines: benfluralin, ethalfluralin, oryzalin, pendimethalin, prodiamine, trifluralin;
- diphenyl ethers: acifluorfen, aclonifen, bifenox, diclofop, ethoxyfen, fomesafen, lactofen, oxyfluorfen;
- hydroxybenzonitriles: bomoxynil, dichlobenil, ioxynil;
- imidazolinones: imazamethabenz, imazamox, imazapic, imazapyr, imazaquin, imazethapyr;
- phenoxy acetic acids: clomeprop, 2,4-dichlorophenoxyacetic acid (2,4-D), 2,4-DB, dichlorprop, MCPA, MCPA-thioethyl, MCPB, Mecoprop;
- pyrazines: chloridazon, flufenpyr-ethyl, fluthiacet, norflurazon, pyridate;
- pyridines: aminopyralid, clopyralid, diflufenican, dithiopyr, fluridone, fluroxypyr, picloram, picolinafen, thiazopyr;
- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6dimethoxy-pyrimidin-2-yl)urea;
- triazines: ametryn, atrazine, cyanazine, dimethametryn, ethiozin, hexazinone, metamitron, metribuzin, prometryn, simazine, terbuthylazine, terbutryn, triaziflam;
- ureas: chlorotoluron, daimuron, diuron, fluometuron, isoproturon, linuron, methabenzthiazuron,tebuthiuron;
- other acetolactate synthase inhibitors: bispyribac-sodium, cloransulam-methyl, diclosulam, florasulam, flucarbazone, flumetsulam, metosulam, orthosulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
- others: amicarbazone, aminotriazole, anilofos, beflubutamid, benazolin, bencarbazone,benfluresate,

benzofenap, bentazone, benzobicyclon, bicyclopyrone, bromacil, bromobutide, butafenacil, butamifos, cafenstrole, carfentrazone, cinidon-ethyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chlorophenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester;

O) Insecticides selected from

- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
- pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambdacyhalothrin, permethrin, prallethrin, pyrethrin I and II, resmethrin, silafluofen, taufluvalinate, tefluthrin, tetramethrin, tralomethrin, transfluthrin, profluthrin, dimefluthrin;
- insect growth regulators: a) chitin synthesis inhibitors: benzoylureas:

  chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;

- nicotinic receptor agonists/antagonists compounds: clothianidin, dinotefuran, flupyradifurone, imidacloprid, thiamethoxam, nitenpyram, acetamiprid, thiacloprid, 1-2-chloro-thiazol-5-ylmethyl)-2-nitrimino-3,5-dimethyl-[1,3,5]triazinane;
- GABA antagonist compounds: endosulfan, ethiprole, fipronil, vaniliprole, pyrafluprole, pyriprole, 5-amino-1-(2,6-dichloro-4-methyl-phenyl)-4-sulfinamoyl1 H-pyrazole-3-carbothioic acid amide;
- macrocyclic lactone insecticides: abamectin, emamectin, milbemectin, lepimectin, spinosad, spinetoram;
- mitochondrial electron transport inhibitor (METI) I acaricides: fenazaquin, pyridaben, tebufenpyrad, tolfenpyrad, flufenerim;
- METI II and III compounds: acequinocyl, fluacyprim, hydramethylnon;
- Uncouplers: chlorfenapyr;
- oxidative phosphorylation inhibitors: cyhexatin, diafenthiuron, fenbutatin oxide, propargite;
- moulting disruptor compounds: cryomazine;
- mixed function oxidase inhibitors: piperonyl butoxide;
- sodium channel blockers: indoxacarb, metaflumizone;
- ryanodine receptor inhibitors: chlorantraniliprole, cyantraniliprole, flubendiamide, N-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; N-[4-chloro-2-[(diethyl-lambda-4-sulfanylidene)carbamoyl]-6-methyl-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-methyl-phenyl]-2-(3-chloro-2-pyridyl)-5-(trifluoromethyl)pyrazole-3-carboxamide; N-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide; N-[4,6-dichloro-2-[(diethyl-lambda-4-sulfanylidene)carbamoyl]-phenyl]-2-(3-chloro-2-pyridyl)-5-(difluoromethyl)pyrazole-3-carboxamide; N-[4,6-dibromo-2-[(di-2-propyl-lambda-4-sulfanylidene)carbamoyl]-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-cyano-phenyl]-2-(3-chloro-2-pyridyl)-5-(trifluoromethyl)pyrazole-3-carboxamide; N-[4,6-dibromo-2-[(diethyl-lambda-4-sulfanylidene)carbamoyl]-phenyl]-2-(3-chloro-2-pyridyl)-5-(trifluoromethyl)pyrazole-3-carboxamide;

- others: benclothiaz, bifenazate, cartap, flonicamid, pyridalyl, pymetrozine, sulfur, thiocyclam, cyenopyrafen, flupyrazofos, cyflumetofen, amidoflumet, imicyafos, bistrifluron, pyrifluquinazon and 1,1'-[(3S,4R,4aR,6S,6aS,12R,12aS,12bS)-4-[[(2-cyclopropylacetyl)oxy]methyl]-1,3,4,4a,5,6,6a,12,12a,12b-decahydro-12-hydroxy-4,6a,12b-trimethyl-11-oxo-9-(3-pyridinyl)-2H,11H-naphtho[2,1-b]pyrano[3,4-e]pyran-3,6-diyl] cyclopropaneacetic acid ester;

in a weight ratio of from 20:1 to 1:20.

**2.** A mixture, comprising as active components

1) at least one compound of formula I

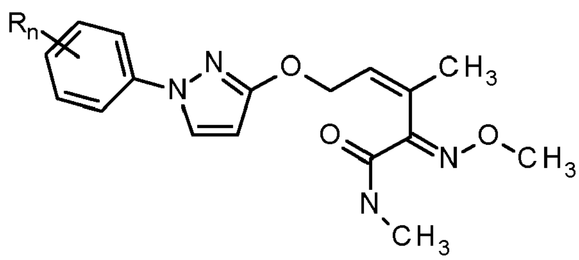

I,

wherein
n is an integer and is 0, 1, 2, 3, 4 or 5; and
R , which may be the same or different to any other R, is halogen, hydroxyl, carboxyl, $C_1$-$C_4$-alkyl, $C_2$-$C_4$-alkenyl, $C_2$-$C_8$-alkynyl, $C_1$-$C_4$-haloalkyl, $C_1$-$C_4$-alkoxy, $C_1$-$C_4$-haloalkoxy, $C_1$-$C_4$-alkylsulfanyl, $C_1$-$C_4$-haloalkylsulfanyl, $C_1$-$C_6$-alkoxyimino-$C_1$-$C_4$-alkyl, $C_2$-$C_6$-alkenyloxyimino-$C_1$-$C_4$-alkyl , $C_2$-$C_6$-alkynyloxyimino-$C_1$-$C_4$-alkyl, $C_1$-$C_4$-alkoxyimino-$C_1$-$C_4$-alkyl, $C_1$-$C_6$-alkoxy-imino-, $C_2$-$C_6$-alkenyloxyimino-, $C_2$-$C_6$-alkynyloxyimino-, $C_2$-$C_6$-haloalkenyloxyimino-, $C_3$-$C_6$-cycloalkyl, $C_3$-$C_6$-cycloalkenyl, phenyl or a 5-membered saturated, partially unsaturated or aromatic heterocyclyl which, in addition to carbon atoms, contains one to three heteroatoms from the group consisting of N, O and S as ring members; wherein the aforementioned cyclic groups R are attached via a direct bond, an oxygen or sulfur atom and where the aliphatic or cyclic groups $R^c$ for their part may carry 1, 2, 3 or up to the maximum possible number of identical or different groups $R^a$:

$R^a$ , which may be the same or different to any other $R^a$, is halogen, $C_1$-$C_4$-alkyl or $C_1$-$C_4$-haloalkyl; and

2) at least one active compound or biopesticide II selected from groups A) to O):

A) Respiration inhibitors selected from

- Inhibitors of complex III at $Q_o$ site: azoxystrobin (II-1), coumethoxystrobin, coumoxystrobin, dimoxystrobin (II-2), enestroburin, fenaminstrobin, fenoxystrobin/flufenoxystrobin, fluoxastrobin (II-3), kresoxim-methyl (II-4), metominostrobin, orysastrobin (II-5), picoxystrobin (II-6), pyraclostrobin (II-7), pyrametostrobin, pyraoxystrobin, trifloxystrobin (II-8), 2-[2-(2,5-dimethyl-phenoxymethyl)-phenyl]-3-methoxy-acrylic acid methyl ester and 2-(2-(3-(2,6-dichlorophenyl)-1-methyl-allylideneaminooxymethyl)-phenyl)-2-methoxyimino-N-methyl-acetamide, pyribencarb, triclopyricarb/chlorodincarb, famoxadone, fenamidone;

- inhibitors of complex III at $Q_i$ site: cyazofamid, amisulbrom, [(3S,6S,7R,8R)-8-benzyl-3-[(3-acetoxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(acetoxymethoxy)-4-methoxy-pyridine-2-carbonyl]amino]-6-methyl-4,9-dioxo-1,5-dioxonan-7-yl] 2-methylpropanoate, [(3S,6S,7R,8R)-8-benzyl-3-[(3-isobutoxycarbonyloxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(1,3-benzodioxol-5-ylmethoxy)-4-methoxy-pyridine-2-carbonyl]amino]-6-methyl-4,9-dioxo-1,5-dioxonan-7-yl] 2-methylpropanoate; (3S,6S,7R,8R)-3-[[(3-hydroxy-4-methoxy-2-pyridinyl)carbonyl]amino]-6-methyl-4,9-dioxo-8-(phenylmethyl)-1,5-dioxonan-7-yl 2-methylpropanoate;

- inhibitors of complex II: benodanil, benzovindiflupyr (II-9), bixafen (II-10), boscalid (II-11), carboxin, fenfuram, fluopyram (II-12), flutolanil, fluxapyroxad (II-13), furametpyr, isofetamid, isopyrazam (II-14), mepronil, oxycarboxin, penflufen (II-15), penthiopyrad (II-16), sedaxane (II-17), tecloftalam, thifluzamide, N-(4'-trifluoromethylthiobiphenyl-2-yl)-3-difluoromethyl-1-methyl-1H-pyrazole-4-carboxamide, N-(2-(1,3,3-trimethyl-butyl)-phenyl)-1,3-dimethyl-5-fluoro-1 H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)-pyrazole-4-carboxamide, 1,3,5-trimethyl-N-(1,1,3-trimethylindan-4-yl)pyrazole-4-carboxamide, N-(7-fluoro-1,1,3-trimethyl-indan-4-yl)-1,3-dimethyl-pyrazole-4-carboxamide, N-[2-(2,4-dichlorophenyl)-2-methoxy-1-methyl-ethyl]-3-(difluoromethyl)-1-methyl-pyrazole-4-carboxamide;
- other respiration inhibitors: diflumetorim, (5,8-difluoroquinazolin-4-yl)-{2-[2-fluoro-4-(4-trifluoromethylpyridin-2-yloxy)-phenyl]-ethyl}-amine; binapacryl, dinobuton, dinocap, fluazinam (I-18); ferimzone; fentin salts such as fentin-acetate, fentin chloride or fentin hydroxide; ametoctradin (I-19); and silthiofam;

B) Sterol biosynthesis inhibitors (SBI fungicides) selected from

- C14 demethylase inhibitors (DMI fungicides): azaconazole, bitertanol, bromuconazole, cyproconazole (I-20), difenoconazole (I-21), diniconazole, diniconazole-M, epoxiconazole (I-22), fenbuconazole, fluquinconazole I-23), flusilazole, flutriafol, hexaconazole, imibenconazole, ipconazole, metconazole (I-24), myclobutanil, oxpoconazole, paclobutrazole, penconazole, propiconazole (I-25), prothioconazole (I-26), simeconazole, tebuconazole (I-27), tetraconazole, triadimefon, triadimenol, triticonazole, uniconazole, 1-[*rel*-(2S;3*R*)-3-(2-chlorophenyl)-2-(2,4-difluorophenyl)-oxiranylmethyl]-5-thiocyanato-1H-[1,2,4]triazolo (I-28), 2-[*rel*-(2*S*;3*R*)-3-(2-chlorophenyl)-2-(2,4-difluorophenyl)-oxiranylmethyl]-2H-[1,2,4]triazole-3-thiol (I-29), 2-[2-chloro-4-(4-chlorophenoxy)phenyl]-1-(1,2,4-triazol-1-yl)pentan-2-ol, 1-[4-(4-chlorophenoxy)-2-(trifluoromethyl)phenyl]-1-cyclopropyl-2-(1,2,4-triazol-1-yl)ethanol (I-30), 2-[4-(4-chlorophenoxy)-2-(trifluoromethyl)phenyl]-1-(1,2,4-triazol-1-yl)butan-2-ol (I-31), 2-[2-chloro-4-(4-chlorophenoxy)phenyl]-1-(1,2,4-triazol-1-yl)butan-2-ol (I-32), 2-[4-(4-chlorophenoxy)-2-(trifluoromethyl)phenyl]-3-methyl-1-(1,2,4-triazol-1-yl)butan-2-ol (I-33), 2-[4-(4-chlorophenoxy)-2-(trifluoromethyl)phenyl]-1-(1,2,4-triazol-1-yl)propan-2-ol (I-34), 2-[2-chloro-4-(4-chlorophenoxy)phenyl]-3-methyl-1-(1,2,4-triazol-1-yl)butan-2-ol (I-35), 2-[4-(4-chlorophenoxy)-2-(trifluoromethyl)phenyl]-1-(1,2,4-triazol-1-yl)pentan-2-ol (I-36), 2-[4-(4-fluorophenoxy)-2-(trifluoromethyl)phenyl]-1-(1,2,4-triazol-1-yl)propan-2-ol (I-37); imazalil, pefurazoate, prochloraz, triflumizol; fenarimol, nuarimol, pyrifenox, triforine, [3-(4-chloro-2-fluoro-phenyl)-5-(2,4-difluorophenyl)isoxazol-4-yl]-(3-pyridyl)methanol;
- Delta14-reductase inhibitors: aldimorph, dodemorph, dodemorph-acetate, fenpropimorph, tridemorph, fenpropidin, piperalin, spiroxamine;
- Inhibitors of 3-keto reductase: fenhexamid;

C) Nucleic acid synthesis inhibitors selected from

- phenylamides or acyl amino acid fungicides: benalaxyl, benalaxyl-M, kiralaxyl, metalaxyl, metalaxyl-M (mefenoxam) (I-38), ofurace, oxadixyl;
- others: hymexazole, octhilinone, oxolinic acid, bupirimate, 5-fluorocytosine, 5-fluoro-2-(p-tolylmethoxy)pyrimidin-4-amine, 5-fluoro-2-(4-fluorophenylmethoxy)pyrimidin-4-amine;

D) Inhibitors of cell division and cytoskeleton selected from

- tubulin inhibitors: benomyl, carbendazim, fuberidazole, thiabendazole, thiophanate-methyl (I-39); 5-chloro-7-(4-methylpiperidin-1-yl)-6-(2,4,6-trifluorophenyl)-[1,2,4]triazolo[1,5-a]pyrimidine
- other cell division inhibitors: diethofencarb, ethaboxam, pencycuron, fluopicolide, zoxamide, metrafenone (I-40), pyriofenone;

E) Inhibitors of amino acid and protein synthesis selected from

- methionine synthesis inhibitors (anilino-pyrimidines): cyprodinil, mepanipyrim, Pyrimethanil (I-41);
- protein synthesis inhibitors: blasticidin-S, kasugamycin, kasugamycin hydrochloride-hydrate, mildiomycin, streptomycin, oxytetracyclin, polyoxine, validamycin A;

F) Signal transduction inhibitors selected from

- MAP / histidine kinase inhibitors: fluoroimid, iprodione, procymidone, vinclozolin, fenpiclonil, fludioxonil;
- G protein inhibitors: quinoxyfen;

G) Lipid and membrane synthesis inhibitors selected from

- Phospholipid biosynthesis inhibitors: edifenphos, iprobenfos, pyrazophos, isoprothiolane;
- lipid peroxidation: dicloran, quintozene, tecnazene, tolclofos-methyl, biphenyl, chloroneb, etridiazole;
- phospholipid biosynthesis and cell wall deposition: dimethomorph (I-42), flumorph, mandipropamid (I-43), pyrimorph, benthiavalicarb, iprovalicarb, valifenalate, N-(1-(1-(4-cyano-phenyl)ethanesulfonyl)-but-2-yl) carbamic acid-(4-fluorophenyl) ester;
- compounds affecting cell membrane permeability and fatty acides: propamocarb, propamocarb-hydrochlorid;
- fatty acid amide hydrolase inhibitors: oxathiapiprolin;

H) Inhibitors with Multi Site Action selected from

- inorganic active substances: Bordeaux mixture, copper acetate, copper hydroxide, copper oxychloride (I-44), basic copper sulfate, sulfur;
- thio- and dithiocarbamates: ferbam, mancozeb (I-45), maneb, metam, metiram (I-46), propineb, thiram, zineb, ziram;
- organochlorine compounds: anilazine, Chlorothalonil (I-47), captafol, captan, folpet, dichlofluanid, dichlorophen, hexachlorobenzene, pentachlorophenole and its salts, phthalide, tolylfluanid, N-(4-chloro-2-nitro-phenyl)-N-ethyl-4-methyl-benzenesulfonamide;
- guanidines and others: guanidine, dodine, dodine free base, guazatine, guazatine-acetate, iminoctadine, iminoctadine-triacetate, iminoctadine-tris(albesilate), dithianon, 2,6-dimethyl-1H,5H-[1,4]dithiino[2,3-c:5,6-c']dipyrrole-1,3,5,7(2H,6H)-tetraone (I-48);

I) Cell wall synthesis inhibitors selected from

- inhibitors of glucan synthesis: validamycin, polyoxin B;
- melanin synthesis inhibitors: pyroquilon, tricyclazole, carpropamid, dicyclomet, fenoxanil;

J) Plant defence inducers selected from

- acibenzolar-S-methyl, probenazole, isotianil, tiadinil, prohexadione-calcium; fosetyl, fosetyl-aluminum, phosphorous acid and its salts (I-49);

K) Unknown mode of action selected from
bronopol, chinomethionat, cyflufenamid, cymoxanil, dazomet, debacarb, diclomezine, difenzoquat, difenzoquat-methylsulfate, diphenylamin, fenpyrazamine, flumetover, flusulfamide, flutianil, methasulfocarb, nitrapyrin, nitrothal-isopropyl, oxathiapiprolin, tolprocarb, 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, oxin-copper, proquinazid, tebufloquin, tecloftalam, triazoxide, 2-butoxy-6-iodo-3-propylchromen-4-one, N-(cyclopropylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine,

N'-(2-methyl-5-trifluoromethyl-4-(3-trimethylsilanyl-propoxy)-phenyl)-N-ethyl-N-methyl formamidine, N'-(5-difluoromethyl-2-methyl-4-(3-trimethylsilanyl-propoxy)-phenyl)-N-ethyl-N-methyl formamidine, methoxy-acetic acid 6-tert-butyl-8-fluoro-2,3-dimethyl-quinolin-4-yl ester,
3-[5-(4-methylphenyl)-2,3-dimethyl-isoxazolidin-3-yl]-pyridine,
3-[5-(4-chloro-phenyl)-2,3-dimethyl-isoxazolidin-3-yl]-pyridine (pyrisoxazole), N-(6-methoxy-pyridin-3-yl) cyclopropanecarboxylic acid amide,
5-chloro-1-(4,6-dimethoxy-pyrimidin-2-yl)-2-methyl-1H-benzoimidazole, 2-(4-chloro-phenyl)-N-[4-(3,4-dimethoxy-phenyl)-isoxazol-5-yl]-2-prop-2-ynyloxy-acetamide, ethyl (Z)-3-amino-2-cyano-3-phenyl-prop-2-enoate, tert-butyl N-[6-[[(Z)-[(1-methyltetrazol-5-yl)-phenyl-methylene]amino]oxymethyl]-2-pyridyl]carbamate, pentyl N-[6-[[(Z)-[(1-methyltetrazol-5-yl)-phenyl-methylene]amino]oxymethyl]-2-pyridyl]carbamate,
2-[2-[(7,8-difluoro-2-methyl-3-quinolyl)oxy]-6-fluoro-phenyl]propan-2-ol, 2-[2-fluoro-6-[(8-fluoro-2-methyl-3-quinolyl)oxy]phenyl]propan-2-ol, 3-(5-fluoro-3,3,4,4-tetramethyl-3,4-dihydroisoquinolin-1-yl)quinoline, 3-(4,4-difluoro-3,3-dimethyl-3,4-dihydroisoquinolin-1-yl)quinoline, 3-(4,4,5-trifluoro-3,3-dimethyl-3,4-dihydroisoquinolin-1-yl)quinoline;
L) antifungal biopesticides selected from
*Ampelomyces quisqualis, Aspergillus flavus, Aureobasidium pullulans, Bacillus pumilus* (I-50), *Bacillus subtilis* (I-51), *Bacillus subtilis* var. *amyloliquefaciens* (I-*52), Candida oleophila* I-82, *Candida saitoana,* Chitosan, *Clonostachys rosea* f. *catenulata,* also named *Gliocladium catenulatum, Coniothyrium minitans, Cryphonectria parasitica, Cryptococcus albidus, Fusarium oxysporum* (I-53), *Metschnikowia fructicola, Microdochium dimerum, Phlebiopsis gigantea, Pseudozyma flocculosa, Pythium oligandrum* DV74, *Reynoutria sachlinensis, Talaromyces flavus* V117b, *Trichoderma asperellum* SKT-1, T. *atroviride* LC52, *T. harzianum* T-22, *T. harzianum* TH 35, *T. harzianum* T-39; *T. harzianum* and *T. viride, T. harzianum* ICC012 and *T. viride* ICC080; *T. polysporum* and *T. harzianum; T. stromaticum, T. virens* GL-21, *T. viride, T. viride* TV1, *Ulocladium oudemansii* HRU3;
M) Growth regulators selected from
abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (mepiquat chloride) (I-54), naphthaleneacetic acid, N-6-benzyladenine, paclobutrazol, prohexadione (prohexadione-calcium, I-55), prohydrojasmon, thidiazuron, triapenthenol, tributyl phosphorotrithioate, 2,3,5-tri-iodobenzoic acid , trinexapac-ethyl and uniconazole;
N) Herbicides selected from

- acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
- amino acid derivatives: bilanafos, glyphosate, glufosinate, sulfosate;
- aryloxyphenoxypropionates: clodinafop, cyhalofop-butyl, fenoxaprop, fluazifop, haloxyfop, metamifop, propaquizafop, quizalofop, quizalofop-P-tefuryl;
- Bipyridyls: diquat, paraquat;
- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
- cyclohexanediones: butroxydim, clethodim, cycloxydim, profoxydim, sethoxydim, tepraloxydim, tralkoxydim;
- dinitroanilines: benfluralin, ethalfluralin, oryzalin, pendimethalin, prodiamine, trifluralin;
- diphenyl ethers: acifluorfen, aclonifen, bifenox, diclofop, ethoxyfen, fomesafen, lactofen, oxyfluorfen;
- hydroxybenzonitriles: bomoxynil, dichlobenil, ioxynil;
- imidazolinones: imazamethabenz, imazamox, imazapic, imazapyr, imazaquin, imazethapyr;
- phenoxy acetic acids: clomeprop, 2,4-dichlorophenoxyacetic acid (2,4-D), 2,4-DB, dichlorprop, MCPA, MCPA-thioethyl, MCPB, Mecoprop;
- pyrazines: chloridazon, flufenpyr-ethyl, fluthiacet, norflurazon, pyridate;
- pyridines: aminopyralid, clopyralid, diflufenican, dithiopyr, fluridone, fluroxypyr, picloram, picolinafen, thiazopyr;
- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea;
- triazines: ametryn, atrazine, cyanazine, dimethametryn, ethiozin, hexazinone, metamitron, metribuzin, prometryn, simazine, terbuthylazine, terbutryn, triaziflam;
- ureas: chlorotoluron, daimuron, diuron, fluometuron, isoproturon, linuron, methabenzthiazuron,tebuthiuron;
- other acetolactate synthase inhibitors: bispyribac-sodium, cloransulam-methyl, diclosulam, florasulam, flucarbazone, flumetsulam, metosulam, orthosulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
- others: amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidon-ethyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chlorophenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester;

O) Insecticides selected from

- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
- pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, taufluvalinate, tefluthrin, tetramethrin, tralomethrin, transfluthrin, profluthrin, dimefluthrin;
- insect growth regulators: a) chitin synthesis inhibitors: benzoylureas:

chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;

- nicotinic receptor agonists/antagonists compounds: clothianidin, dinotefuran, flupyradifurone, imidacloprid, thiamethoxam, nitenpyram, acetamiprid, thiacloprid, 1-2-chloro-thiazol-5-ylmethyl)-2-nitrimino-3,5-dimethyl-[1,3,5]triazinane;
- GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1 H-pyrazole-3-carbothioic acid amide;
- macrocyclic lactone insecticides: abamectin, emamectin, milbemectin, lepimectin, spinosad, spinetoram;
- mitochondrial electron transport inhibitor (METI) I acaricides: fenazaquin, pyridaben, tebufenpyrad, tolfenpyrad, flufenerim;
- METI II and III compounds: acequinocyl, fluacyprim, hydramethylnon;
- Uncouplers: chlorfenapyr;

- oxidative phosphorylation inhibitors: cyhexatin, diafenthiuron, fenbutatin oxide, propargite;
- moulting disruptor compounds: cryomazine;
- mixed function oxidase inhibitors: piperonyl butoxide;
- sodium channel blockers: indoxacarb, metaflumizone;
- ryanodine receptor inhibitors: chlorantraniliprole, cyantraniliprole, flubendiamide, N-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; N-[4-chloro-2-[(diethyl-lambda-4-sulfanylidene)carbamoyl]-6-methyl-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-methyl-phenyl]-2-(3-chloro-2-pyridyl)-5-(trifluoromethyl)pyrazole-3-carboxamide; N-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide; N-[4,6-dichloro-2-[(diethyl-lambda-4-sulfanylidene)carbamoyl]-phenyl]-2-(3-chloro-2-pyridyl)-5-(difluoromethyl)pyrazole-3-carboxamide; N-[4,6-dibromo-2-[(di-2-propyl-lambda-4-sulfanylidene)carbamoyl]-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-cyano-phenyl]-2-(3-chloro-2-pyridyl)-5-(trifluoromethyl)pyrazole-3-carboxamide; N-[4,6-dibromo-2-[(diethyl-lambda-4-sulfanylidene)carbamoyl]-phenyl]-2-(3-chloro-2-pyridyl)-5-(trifluoromethyl)pyrazole-3-carboxamide;
- others: benclothiaz, bifenazate, cartap, flonicamid, pyridalyl, pymetrozine, sulfur, thiocyclam, cyenopyrafen, flupyrazofos, cyflumetofen, amidoflumet, imicyafos, bistrifluron, pyrifluquinazon and 1,1'-[(3S,4R,4aR,6S,6aS,12R,12aS,12bS)-4-[[(2-cyclopropylacetyl)oxy]methyl]-1,3,4,4a,5,6,6a,12,12a,12b-decahydro-12-hydroxy-4,6a,12b-trimethyl-11-oxo-9-(3-pyridinyl)-2H,11H-naphtho[2,1-b]pyrano[3,4-e]pyran-3,6-diyl] cyclopropaneacetic acid ester;

and

3) at least one further active compound or biopesticide III selected from groups A') to O'):

A') Respiration inhibitors selected from

- Inhibitors of complex III at $Q_o$ site: azoxystrobin, coumethoxystrobin, coumoxystrobin, dimoxystrobin, enestroburin, fenaminstrobin, fenoxystrobin/flufenoxystrobin, fluoxastrobin, kresoxim-methyl, metominostrobin, orysastrobin, picoxystrobin, pyraclostrobin, pyrametostrobin, pyraoxystrobin, trifloxystrobin, 2-[2-(2,5-dimethyl-phenoxymethyl)-phenyl]-3-methoxy-acrylic acid methyl ester, 2-(2-(3-(2,6-dichlorophenyl)-1-methyl-allylideneaminooxymethyl)-phenyl)-2-methoxyimino-N-methyl-acetamide, pyribencarb, triclopyricarb/chlorodincarb, famoxadone, fenamidone;
- inhibitors of complex III at $Q_i$ site: cyazofamid, amisulbrom, [(3S,6S,7R,8R)-8-benzyl-3-[(3-acetoxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(acetoxymethoxy)-4-methoxy-pyridine-2-carbonyl]amino]-6-methyl-4,9-dioxo-1,5-dioxonan-7-yl] 2-methylpropanoate, [(3S,6S,7R,8R)-8-benzyl-3-[(3-isobut-oxycarbonyloxy-4-methoxy-pyridine-2-carbonyl)amino]-6-methyl-4,9-dioxo-1,5-dioxonan-7-yl] 2-methylpropanoate, [(3S,6S,7R,8R)-8-benzyl-3-[[3-(1,3-benzodioxol-5-ylmethoxy)-4-methoxy-pyridine-2-carbonyl]amino]-6-methyl-4,9-dioxo-1,5-dioxonan-7-yl] 2-methylpropanoate; (3S,6S,7R,8R)-3-[[(3-hydroxy-4-methoxy-2-pyridinyl)carbonyl]amino]-6-methyl-4,9-dioxo-8-(phenylmethyl)-1,5-dioxonan-7-yl 2-methylpropanoate
- inhibitors of complex II: benodanil, benzovindiflupyr, bixafen, boscalid, carboxin, fenfuram, fluopyram, flutolanil, fluxapyroxad, furametpyr, isofetamid, isopyrazam, mepronil, oxycarboxin, penflufen, penthiopyrad, sedaxane, tecloftalam, thifluzamide, N-(4'-trifluoromethylthiobiphenyl-2-yl)-3-difluoromethyl-1-methyl-1 H-pyrazole-4-carboxamide, N-(2-(1,3,3-trimethyl-butyl)-phenyl)-1,3-dimethyl-5-fluoro-1H-pyrazole-4-carboxamide, 3-(difluoromethyl)-1-methyl-N-(1,1,3-trimethylindan-4-yl)pyrazole-4-carboxamide, 3-(trifluoromethyl)-1-methyl-N-(1,1,3-trimethylindan-4-yl)pyrazole-4-carboxamide, 1,3-dimethyl-N-(1,1,3-trimethylindan-4-yl)pyrazole-4-carboxamide, 3-(trifluoromethyl)-1,5-dimethyl-N-(1,1,3-trimethylindan-4-yl)pyrazole-4-carboxamide, 1,3,5-trimethyl-N-(1,1,3-trimethylindan-4-yl)pyrazole-4-carboxamide, N-(7-fluoro-1,1,3-trimethyl-indan-4-yl)-1,3-dimethyl-pyrazole-4-carboxamide, N-[2-(2,4-dichlorophenyl)-2-methoxy-1-methyl-ethyl]-3-(difluoromethyl)-1-methyl-pyrazole-4-carboxamide;
- other respiration inhibitors: diflumetorim, (5,8-difluoroquinazolin-4-yl)-{2-[2-fluoro-4-(4-trifluoromethylpyridin-2-yloxy)-phenyl]-ethyl}-amine; binapacryl, dinobuton, dinocap, fluazinam; ferimzone; fentin salts such as fentin-acetate, fentin chloride or fentin hydroxide; ametoctradin; and silthiofam;

B') Sterol biosynthesis inhibitors (SBI fungicides) selected from

- C14 demethylase inhibitors (DMI fungicides): azaconazole, bitertanol, bromuconazole, cyproconazole, difenoconazole, diniconazole, diniconazole-M, epoxiconazole, fenbuconazole, fluquinconazole, flusilazole, flutriafol, hexaconazole, imibenconazole, ipconazole, metconazole, myclobutanil, oxpoconazole, paclobutrazole, penconazole, propiconazole, prothioconazole, simeconazole, tebuconazole, tetraconazole, triadimefon, triadimenol, triticonazole, uniconazole, 1-[re/- (2S;3R)-3-(2-chlorophenyl)-2-(2,4-difluorophenyl)-oxiranylmethyl]-5-thiocyanato-1 H-[1,2,4]triazole, 2-[*rel*-(2*S*;3*R*)-3-(2-chlorophenyl)-2-(2,4-difluorophenyl)-oxiranylmethyl]-2H-[1,2,4]triazole-3-thiol, 2-[2-chloro-4-(4-chlorophenoxy)phenyl]-1-(1,2,4-triazol-1-yl)pentan-2-ol, 1-[4-(4-chlorophenoxy)-2-(trifluoromethyl)phenyl]-1-cyclopropyl-2-(1,2,4-triazol-1-yl)ethanol, 2-[4-(4-chlorophenoxy)-2-(trifluoromethyl)phenyl]-1-(1,2,4-triazol-1-yl)butan-2-ol, 2-[2-chloro-4-(4-chlorophenoxy)phenyl]-1-(1,2,4-triazol-1-yl)butan-2-ol, 2-[4-(4-chlorophenoxy)-2-(trifluoromethyl)phenyl]-3-methyl-1-(1,2,4-triazol-1-yl)butan-2-ol, 2-[4-(4-chlorophenoxy)-2-(trifluoromethyl)phenyl]-1-(1,2,4-triazol-1-yl)propan-2-ol, 2-[2-chloro-4-(4-chlorophenoxy)phenyl]-3-methyl-1-(1,2,4-triazol-1-yl)butan-2-ol, 2-[4-(4-chlorophenoxy)-2-(trifluoromethyl)phenyl]-1-(1,2,4-triazol-1-yl)pentan-2-ol, 2-[4-(4-fluorophenoxy)-2-(trifluoromethyl)phenyl]-1-(1,2,4-triazol-1-yl)propan-2-ol; imazalil, pefurazoate, prochloraz, triflumizol; fenarimol, nuarimol, pyrifenox, triforine, [3-(4-chloro-2-fluoro-phenyl)-5-(2,4-difluorophenyl)isoxazol-4-yl]-(3-pyridyl)methanol;
- Delta14-reductase inhibitors: aldimorph, dodemorph, dodemorph-acetate, fenpropimorph, tridemorph, fenpropidin, piperalin, spiroxamine;
- Inhibitors of 3-keto reductase: fenhexamid;

C') Nucleic acid synthesis inhibitors selected from

- phenylamides or acyl amino acid fungicides: benalaxyl, benalaxyl-M, kiralaxyl, metalaxyl, metalaxyl-M (mefenoxam), ofurace, oxadixyl;
- others: hymexazole, octhilinone, oxolinic acid, bupirimate, 5-fluorocytosine, 5-fluoro-2-(p-tolylmethoxy)pyrimidin-4-amine, 5-fluoro-2-(4-fluoro-phenylmethoxy)pyrimidin-4-amine;

D') Inhibitors of cell division and cytoskeleton

- tubulin inhibitors: benomyl, carbendazim, fuberidazole, thiabendazole, thiophanate-methyl; 5-chloro-7-(4-methylpiperidin-1-yl)-6-(2,4,6-trifluorophenyl)-[1,2,4]triazolo[1,5-a]pyrimidine;
- other cell division inhibitors: diethofencarb, ethaboxam, pencycuron, fluopicolide, zoxamide, metrafenone, pyriofenone;

E') Inhibitors of amino acid and protein synthesis selected from

- methionine synthesis inhibitors (anilino-pyrimidines): cyprodinil, mepanipyrim, pyrimethanil;
- protein synthesis inhibitors: blasticidin-S, kasugamycin, kasugamycin hydrochloride-hydrate, mildiomycin, streptomycin, oxytetracyclin, polyoxine, validamycin A;

F') Signal transduction inhibitors selected from

- MAP / histidine kinase inhibitors: fluoroimid, iprodione, procymidone, vinclozolin, fenpiclonil, fludioxonil;
- G protein inhibitors: quinoxyfen;

G') Lipid and membrane synthesis inhibitors selected from

- Phospholipid biosynthesis inhibitors: edifenphos, iprobenfos, pyrazophos, isoprothiolane;
- lipid peroxidation: dicloran, quintozene, tecnazene, tolclofos-methyl, biphenyl, chloroneb, etridiazole;
- phospholipid biosynthesis and cell wall deposition: dimethomorph, flumorph, mandipropamid, pyrimorph, benthiavalicarb, iprovalicarb, valifenalate, N-(1 -(1 -(4-cyano-phenyl)ethanesulfonyl)-but-2-yl) carbamic acid-(4-fluorophenyl) ester;
- compounds affecting cell membrane permeability and fatty acides: propamocarb, propamocarb-hydrochlorid;
- fatty acid amide hydrolase inhibitors: oxathiapiprolin;

H') Inhibitors with Multi Site Action selected from

- inorganic active substances: Bordeaux mixture, copper acetate, copper hydroxide, copper oxychloride, basic copper sulfate, sulfur;
- thio- and dithiocarbamates: ferbam, mancozeb, maneb, metam, metiram, propineb, thiram, zineb, ziram;
- organochlorine compounds: anilazine, chlorothalonil, captafol, captan, folpet, dichlofluanid, dichlorophen, hexachlorobenzene, pentachlorphenole and its salts, phthalide, tolylfluanid, N-(4-chloro-2-nitro-phenyl)-N-ethyl-4-methyl-benzenesulfonamide;
- guanidines and others: guanidine, dodine, dodine free base, guazatine, guazatine-acetate, iminoctadine, iminoctadine-triacetate, iminoctadine-tris(albesilate), dithianon, 2,6-dimethyl-1H,5H-[1,4]dithiino[2,3-c:5,6-c']dipyrrole-1,3,5,7(2H,6H)-tetraone;

I') Cell wall synthesis inhibitors selected from

- inhibitors of glucan synthesis: validamycin, polyoxin B; melanin synthesis inhibitors: pyroquilon, tricyclazole, carpropamid, dicyclomet, fenoxanil;

J') Plant defence inducers selected from

- acibenzolar-S-methyl, probenazole, isotianil, tiadinil, prohexadione-calcium; phosphonates: fosetyl, fosetyl-aluminum, phosphorous acid and its salts;

K') Unknown mode of action selected from

- bronopol, chinomethionat, cyflufenamid, cymoxanil, dazomet, debacarb, diclomezine, difenzoquat, difenzoquat-methylsulfate, diphenylamin, fenpyrazamine, flumetover, flusulfamide, flutianil, methasulfocarb, nitrapyrin, nitrothal-isopropyl, oxathiapiprolin, tolprocarb, 2-[3,5-bis(difluoromethyl)-1H-pyrazol-1-yl]-1-[4-(4-{5-[2-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-fluoro-6-(prop-2-yn-1-yloxy)phenyl]-4,5-dihydro-1,2-oxazol-3-yl}-1,3-thiazol-2-yl)piperidin-1-yl]ethanone, 2-[3,5-bis(difluoromethyl)-1H-pyrazol-1-yl]-1-[4-(4-{5-[2-chloro-6-(prop-2-yn-1-yloxy)phenyl]-4,5-dihydro-1,2-oxazol-3-yl}-1,3-thiazol-2-yl)piperidin-1-yl]ethanone, oxin-copper, proquinazid, tebufloquin, tecloftalam, triazoxide, 2-butoxy-6-iodo-3-propylchromen-4-one, N-(cyclopropylmethoxyimino-(6-difluoro-methoxy-2,3-difluoro-phenyl)-methyl)-2-phenyl acetamide, N'-(4-(4-chloro-3-trifluoromethyl-phenoxy)-2,5-dimethyl-phenyl)-N-ethyl-N-methyl formamidine, N'-(4-(4-fluoro-3-trifluoromethyl-phenoxy)-2,5-dimethyl-phenyl)-N-ethyl-N-methyl formamidine, N'-(2-methyl-5-trifluoromethyl-4-(3-trimethylsilanyl-propoxy)-phenyl)-N-ethyl-N-methyl formamidine, N'-(5-di-fluoromethyl-2-methyl-4-(3-trimethylsilanyl-propoxy)-phenyl)-N-ethyl-N-methyl formamidine, methoxy-acetic acid 6-tert-butyl-8-fluoro-2,3-dimethyl-quinolin-4-yl ester, 3-[5-(4-methylphenyl)-2,3-dimethyl-isoxazolidin-3-yl]-pyridine, 3-[5-(4-chloro-phenyl)-2,3-dimethyl-isoxazolidin-3-yl]-pyridine (pyrisoxazole), N-(6-methoxy-pyridin-3-yl) cyclopropanecarboxylic acid amide, 5-chloro-1-(4,6-dimethoxy-pyrimidin-2-yl)-2-methyl-1 H-benzoimidazole, 2-(4-chloro-phenyl)-N-[4-(3,4-dimethoxy-phenyl)-isoxazol-5-yl]-2-prop-2-ynyloxy-acetamide, ethyl (Z)-3-amino-2-cyano-3-phenyl-prop-2-enoate, tert-butyl N-[6-[[(Z)-[(1-methyltetrazol-5-yl)-phenyl-methylene]amino]oxymethyl]-2-pyridyl]carbamate, pentyl N-[6-[[(Z)-[(1-methyltetrazol-5-yl)-phenyl-methylene]amino]oxymethyl]-2-pyridyl]carbamate, 2-[2-[(7,8-difluoro-2-methyl-3-quinolyl)oxy]-6-fluorophenyl]propan-2-ol, 2-[2-fluoro-6-[(8-fluoro-2-methyl-3-quinolyl)oxy]-phenyl]propan-2-ol, 3-(5-fluoro-3,3,4,4-tetramethyl-3,4-dihydroisoquinolin-1-yl)quinoline, 3-(4,4-difluoro-3,3-dimethyl-3,4-dihydroisoquinolin-1-yl)quinoline, 3-(4,4,5-trifluoro-3,3-dimethyl-3,4-dihydroisoquinolin-1-yl)quinoline;

L') antifungal biopesticides selected from
*Ampelomyces quisqualis, Aspergillus flavus, Aureobasidium pullulans, Bacillus pumilus, Bacillus subtilis, Bacillus subtilis* var. *amyloliquefaciens, Candida oleophila* I-82, *Candida saitoana,* Chitosan, *Clonostachys rosea f. catenulata,* also named *Gliocladium catenulatum, Coniothyrium minitans,Cryphonectria parasitica, Cryptococcus albidus, Fusarium oxysporum, Metschnikowia fructicola, Microdochium dimerum, Phlebiopsis gigantea, Pseudozyma flocculosa, Pythium oligandrum* DV74, *Reynoutria sachlinensis, Talaromyces flavus* V117b, *Trichoderma asperellum* SKT-1, *T. atroviride* LC52, *T. harzianum* T-22, *T. harzianum* TH 35, *T. harzianum* T-39; *T. harzianum* and *T. viride, T. harzianum* ICC012 and T. *viride* ICC080; *T. polysporum* and *T. harzianum; T. stromaticum, T. virens* GL-21, *T. viride, T. virideTV1, Ulocladium oudemansii* HRU3;
M') Growth regulators selected from

abscisic acid, amidochlor, ancymidol, 6-benzylaminopurine, brassinolide, butralin, chlormequat (chlormequat chloride), choline chloride, cyclanilide, daminozide, dikegulac, dimethipin, 2,6-dimethylpuridine, ethephon, flumetralin, flurprimidol, fluthiacet, forchlorfenuron, gibberellic acid, inabenfide, indole-3-acetic acid , maleic hydrazide, mefluidide, mepiquat (mepiquat chloride), naphthaleneacetic acid, N-6-benzyladenine, paclobutrazol, prohexadione (prohexadione-calcium), prohydrojasmon, thidiazuron, triapenthenol, tributyl phosphorotrithioate, 2,3,5-tri-iodobenzoic acid , trinexapac-ethyl and uniconazole;

N') Herbicides selected from

- acetamides: acetochlor, alachlor, butachlor, dimethachlor, dimethenamid, flufenacet, mefenacet, metolachlor, metazachlor, napropamide, naproanilide, pethoxamid, pretilachlor, propachlor, thenylchlor;
- amino acid derivatives: bilanafos, glyphosate, glufosinate, sulfosate;
- aryloxyphenoxypropionates: clodinafop, cyhalofop-butyl, fenoxaprop, fluazifop, haloxyfop, metamifop, propaquizafop, quizalofop, quizalofop-P-tefuryl;
- Bipyridyls: diquat, paraquat;
- (thio)carbamates: asulam, butylate, carbetamide, desmedipham, dimepiperate, eptam (EPTC), esprocarb, molinate, orbencarb, phenmedipham, prosulfocarb, pyributicarb, thiobencarb, triallate;
- cyclohexanediones: butroxydim, clethodim, cycloxydim, profoxydim, sethoxydim, tepraloxydim, tralkoxydim;
- dinitroanilines: benfluralin, ethalfluralin, oryzalin, pendimethalin, prodiamine, trifluralin;
- diphenyl ethers: acifluorfen, aclonifen, bifenox, diclofop, ethoxyfen, fomesafen, lactofen, oxyfluorfen;
- hydroxybenzonitriles: bomoxynil, dichlobenil, ioxynil;
- imidazolinones: imazamethabenz, imazamox, imazapic, imazapyr, imazaquin, imazethapyr;
- phenoxy acetic acids: clomeprop, 2,4-dichlorophenoxyacetic acid (2,4-D), 2,4-DB, dichlorprop, MCPA, MCPA-thioethyl, MCPB, Mecoprop;
- pyrazines: chloridazon, flufenpyr-ethyl, fluthiacet, norflurazon, pyridate;
- pyridines: aminopyralid, clopyralid, diflufenican, dithiopyr, fluridone, fluroxypyr, picloram, picolinafen, thiazopyr;
- sulfonyl ureas: amidosulfuron, azimsulfuron, bensulfuron, chlorimuron-ethyl, chlorsulfuron, cinosulfuron, cyclosulfamuron, ethoxysulfuron, flazasulfuron, flucetosulfuron, flupyrsulfuron, foramsulfuron, halosulfuron, imazosulfuron, iodosulfuron, mesosulfuron, metazosulfuron, metsulfuron-methyl, nicosulfuron, oxasulfuron, primisulfuron, prosulfuron, pyrazosulfuron, rimsulfuron, sulfometuron, sulfosulfuron, thifensulfuron, triasulfuron, tribenuron, trifloxysulfuron, triflusulfuron, tritosulfuron, 1-((2-chloro-6-propyl-imidazo[1,2-b]pyridazin-3-yl)sulfonyl)-3-(4,6-dimethoxy-pyrimidin-2-yl)urea;
- triazines: ametryn, atrazine, cyanazine, dimethametryn, ethiozin, hexazinone, metamitron, metribuzin, prometryn, simazine, terbuthylazine, terbutryn, triaziflam;
- ureas: chlorotoluron, daimuron, diuron, fluometuron, isoproturon, linuron, methabenzthiazuron,tebuthiuron;
- other acetolactate synthase inhibitors: bispyribac-sodium, cloransulam-methyl, diclosulam, florasulam, flucarbazone, flumetsulam, metosulam, orthosulfamuron, penoxsulam, propoxycarbazone, pyribambenz-propyl, pyribenzoxim, pyriftalid, pyriminobac-methyl, pyrimisulfan, pyrithiobac, pyroxasulfone, pyroxsulam;
- others: amicarbazone, aminotriazole, anilofos, beflubutamid, benazolin, bencarbazone,benfluresate, benzofenap, bentazone, benzobicyclon, bicyclopyrone, bromacil, bromobutide, butafenacil, butamifos, cafenstrole, carfentrazone, cinidon-ethyl, chlorthal, cinmethylin, clomazone, cumyluron, cyprosulfamide, dicamba, difenzoquat, diflufenzopyr, *Drechslera monoceras,* endothal, ethofumesate, etobenzanid, fenoxasulfone, fentrazamide, flumiclorac-pentyl, flumioxazin, flupoxam, flurochloridone, flurtamone, indanofan, isoxaben, isoxaflutole, lenacil, propanil, propyzamide, quinclorac, quinmerac, mesotrione, methyl arsonic acid, naptalam, oxadiargyl, oxadiazon, oxaziclomefone, pentoxazone, pinoxaden, pyraclonil, pyraflufen-ethyl, pyrasulfotole, pyrazoxyfen, pyrazolynate, quinoclamine, saflufenacil, sulcotrione, sulfentrazone, terbacil, tefuryltrione, tembotrione, thiencarbazone, topramezone, (3-[2-chloro-4-fluoro-5-(3-methyl-2,6-dioxo-4-trifluoromethyl-3,6-dihydro-2H-pyrimidin-1-yl)-phenoxy]-pyridin-2-yloxy)-acetic acid ethyl ester, 6-amino-5-chloro-2-cyclopropyl-pyrimidine-4-carboxylic acid methyl ester, 6-chloro-3-(2-cyclopropyl-6-methyl-phenoxy)-pyridazin-4-ol, 4-amino-3-chloro-6-(4-chlorophenyl)-5-fluoro-pyridine-2-carboxylic acid, 4-amino-3-chloro-6-(4-chloro-2-fluoro-3-methoxy-phenyl)-pyridine-2-carboxylic acid methyl ester, and 4-amino-3-chloro-6-(4-chloro-3-dimethylamino-2-fluoro-phenyl)-pyridine-2-carboxylic acid methyl ester;

O') Insecticides selected from

- organo(thio)phosphates: acephate, azamethiphos, azinphos-methyl, chlorpyrifos, chlorpyrifos-methyl, chlorfenvinphos, diazinon, dichlorvos, dicrotophos, dimethoate, disulfoton, ethion, fenitrothion, fenthion, isoxathion, malathion, methamidophos, methidathion, methyl-parathion, mevinphos, monocrotophos, oxydemeton-methyl, paraoxon, parathion, phenthoate, phosalone, phosmet, phosphamidon, phorate, phoxim, pirimiphos-methyl, profenofos, prothiofos, sulprophos, tetrachlorvinphos, terbufos, triazophos, trichlorfon;
- carbamates: alanycarb, aldicarb, bendiocarb, benfuracarb, carbaryl, carbofuran, carbosulfan, fenoxycarb, furathiocarb, methiocarb, methomyl, oxamyl, pirimicarb, propoxur, thiodicarb, triazamate;
- pyrethroids: allethrin, bifenthrin, cyfluthrin, cyhalothrin, cyphenothrin, cypermethrin, alpha-cypermethrin, beta-cypermethrin, zeta-cypermethrin, deltamethrin, esfenvalerate, etofenprox, fenpropathrin, fenvalerate, imiprothrin, lambda-cyhalothrin, permethrin, prallethrin, pyrethrin I and II, resmethrin, silafluofen, taufluvalinate, tefluthrin, tetramethrin, tralomethrin, transfluthrin, profluthrin, dimefluthrin;
- insect growth regulators: a) chitin synthesis inhibitors: benzoylureas:

chlorfluazuron, cyramazin, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: halofenozide, methoxyfenozide, tebufenozide, azadirachtin; c) juvenoids: pyriproxyfen, methoprene, fenoxycarb; d) lipid biosynthesis inhibitors: spirodiclofen, spiromesifen, spirotetramat;

- nicotinic receptor agonists/antagonists compounds: clothianidin, dinotefuran, flupyradifurone, imidacloprid, thiamethoxam, nitenpyram, acetamiprid, thiacloprid, 1-2-chloro-thiazol-5-ylmethyl)-2-nitrimino-3,5-dimethyl-[1,3,5]triazinane;
- GABA antagonist compounds: endosulfan, ethiprole, fipronil, vaniliprole, pyrafluprole, pyriprole, 5-amino-1-(2,6-dichloro-4-methyl-phenyl)-4-sulfinamoyl-1 H-pyrazole-3-carbothioic acid amide;
- macrocyclic lactone insecticides: abamectin, emamectin, milbemectin, lepimectin, spinosad, spinetoram;
- mitochondrial electron transport inhibitor (METI) I acaricides: fenazaquin, pyridaben, tebufenpyrad, tolfenpyrad, flufenerim;
- METI II and III compounds: acequinocyl, fluacyprim, hydramethylnon;
- Uncouplers: chlorfenapyr;
- oxidative phosphorylation inhibitors: cyhexatin, diafenthiuron, fenbutatin oxide, propargite;
- moulting disruptor compounds: cryomazine;
- mixed function oxidase inhibitors: piperonyl butoxide;
- sodium channel blockers: indoxacarb, metaflumizone;
- ryanodine receptor inhibitors: chlorantraniliprole, cyantraniliprole, flubendiamide, N-[4,6-dichloro-2-[(diethyl-lambda-4-sulfanylidene)carbamoyl]-phenyl]-2-(3-chloro-2-pyridyl)-5-(trifluoromethyl)pyrazole-3-carboxamide; N-[4-chloro-2-[(diethyl-lambda-4-sulfanylidene)carbamoyl]-6-methyl-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-methyl-phenyl]-2-(3-chloro-2-pyridyl)-5-(trifluoromethyl)pyrazole-3-carboxamide; N-[4,6-dichloro-2-[(di-2-propyl-lambda-4-sulfanylidene)carbamoyl]-phenyl]-2-(3-chloro-2-pyridyl)-5-(trifluoromethyl)pyrazole-3-carboxamide; N-[4,6-dichloro-2-[(diethyl-lambda-4-sulfanylidene)carbamoyl]-phenyl]-2-(3-chloro-2-pyridyl)-5-(difluoromethyl)pyrazole-3-carboxamide; N-[4,6-dibromo-2-[(di-2-propyl-lambda-4-sulfanylidene)carbamoyl]-phenyl]-2-(3-chloro-2-pyridyl)-5-(trifluoromethyl)pyrazole-3-carboxamide; N-[4-chloro-2-[(di-2-propyl-lambda-4-sulfanylidene)carbamoyl]-6-cyano-phenyl]-2-(3-chloro-2-pyridyl)-5-(trifluoromethyl)pyrazole-3-carboxamide; N-[4,6-dibromo-2-[(diethyl-lambda-4-sulfanylidene)carbamoyl]-phenyl]-2-(3-chloro-2-pyridyl)-5-(trifluoromethyl)pyrazole-3-carboxamide;
- others: benclothiaz, bifenazate, cartap, flonicamid, pyridalyl, pymetrozine, sulfur, thiocyclam, cyenopyrafen, flupyrazofos, cyflumetofen, amidoflumet, imicyafos, bistrifluron, pyrifluquinazon and 1,1'-[(3S,4R,4aR,6S,6aS,12R,12aS,12bS)-4-[[(2-cyclopropylacetyl)oxy]methyl]-1,3,4,4a,5,6,6a,12,12a,12b-decahydro-12-hydroxy-4,6a,12b-trimethyl-11-oxo-9-(3-pyridinyl)-2H,11H-naphtho[2,1-b]pyrano[3,4-e]pyran-3,6-diyl] cyclopropaneacetic acid ester.

**3.** The mixture according to claim 2, comprising a compound I and a compound or biopesticide II and a further active compound or biopesticide III in a in a synergistically effective amount.

**4.** The mixture according to any of claims 2 to 3, comprising a compound I and a compound II in a weight ratio of from

100:1 to 1:100, and a compound I and compound III in a weight ratio of from 100:1 1 to 1:100.

**5.** The mixture according to claim 4, wherein the total weight of component 2) and component 3) is based on the amount of the solid material (dry matter) of component 2) and 3), respectively.

**6.** The mixture according to claim 4, wherein the compent 2) and or 3) is a microbial pesticide selected from group H) and/or from H'), wherein the total weight of said microbial pesticide component 2) and/or said microbial pesticide component 3) is calculated on the basis of the amount of CFU of component 2) and/or 3), wherein 1 x $10^9$ CFU equals one gram of total weight of component 2) and/or 3).

**7.** The mixture according to any of the claims 1 to 6, wherein n in formula I is 1, 2 or 3.

**8.** The mixture according to any of the claims 1 to 7, wherein R in formula I is halogen, $C_1$-$C_4$-alkyl, $C_1$-$C_4$-haloalkyl, $C_1$-$C_4$-alkoxy, $C_1$-$C_4$-haloalkoxy, $C_1$-$C_4$-alkylsulfanyl, $C_1$-$C_4$-halo-alkylsulfanyl or $C_3$-$C_6$-cycloalkyl.

**9.** The mixture according to any of the claims 1 to 8, wherein the at least one compound of formula I is selected from (Z,2E)-5-[1-(4-chlorophenyl)pyrazol-3-yl]oxy-2-methoxyimino-N,3-dimethyl-pent-3-enamide (I-1), (Z,2E)-5-[1-(2,4-difluorophenyl)pyrazol-3-yl]oxy-2-methoxyimino-N,3-dimethyl-pent-3-enamide (I-2), (Z,2E)-5-[1-(2,4-dichlorophenyl)pyrazol-3-yl]oxy-2-methoxyimino-N,3-dimethyl-pent-3-enamide (I-3), (Z,2E)-5-[1-(2-chloro-4-methyl-phenyl)pyrazol-3-yl]oxy-2-methoxyimino-N,3-dimethyl-pent-3-enamide (I-4), (Z,2E)-2-methoxyimino-N,3-dimethyl-5-[1-(p-tolyl)pyrazol-3-yl]oxy-pent-3-enamide (I-5), (Z,2E)-5-[1-(2-methyl-4-fluoro-phenyl)pyrazol-3-yl]oxy-2-methoxyimino-N,3-dimethyl-pent-3-enamide (I-6), (Z,2E)-2-methoxyimino-N,3-dimethyl-5-[1-[4-(trifluoromethyl)-phenyl]pyrazol-3-yl]oxy-pent-3-enamide (I-7), (Z,2E)-5-[1-(3,4-dichlorophenyl)pyrazol-3-yl]oxy-2-methoxyimino-N,3-dimethyl-pent-3-enamide (I-8), (Z,2E)-5-[1-(3,4-dimethylphenyl)pyrazol-3-yl]oxy-2-methoxyimino-N,3-dimethyl-pent-3-enamide (I-9), (Z,2E)-5-[1-(4-fluoro-3-methyl-phenyl)pyrazol-3-yl]oxy-2-methoxyimino-N,3-dimethyl-pent-3-enamide (I-10), (Z,2E)-5-[1-(3-chloro-4-fluoro-phenyl)pyrazol-3-yl]oxy-2-methoxyimino-N,3-dimethyl-pent-3-enamide (I-11), (Z,2E)-5-[1-(3-fluoro-4-chloro-phenyl)pyrazol-3-yl]oxy-2-methoxyimino-N,3-dimethyl-pent-3-enamide (I-12), (Z,2E)-5-[1-(4-chloro-2-fluoro-phenyl)pyrazol-3-yl]oxy-2-methoxyimino-N,3-dimethyl-pent-3-enamide (I-13), (Z,2E)-5-[1-[4-(difluoromethoxy)phenyl]pyrazol-3-yl]oxy-2-methoxyimino-N,3-dimethyl-pent-3-enamide (I-14), (Z,2E)-5-[1-(3-cyclopropylphenyl)pyrazol-3-yl]oxy-2-methoxyimino-N,3-dimethyl-pent-3-enamide (I-15), (Z,2E)-5-[1-[4-chloro-3-(trifluoromethyl)phenyl]pyrazol-3-yl]oxy-2-methoxyimino-N,3-dimethyl-pent-3-enamide (I-16), (Z,2E)-2-methoxyimino-N,3-dimethyl-5-[1-(3,4,5-trifluorophenyl)pyrazol-3-yl]oxy-pent-3-enamide (I-17) and (Z,2E)-2-methoxyimino-N,3-dimethyl-5-[1-[4-(trifluoromethylsulfanyl)phenyl]pyrazol-3-yl]oxy-pent-3-enamide (I-18).

**10.** An agrochemical composition, comprising a solvent or solid carrier and a mixture according to any of claims 1 to 9.

**11.** The composition according to claim 10 further comprising seed in an amount of from 1 g to 1000 g active components per 100 kg of seed.

**12.** Use of the mixture as defined in any of the claims 1 to 9 or of the composition as defined in claim 10 for controlling phytopathogenic harmful fungi.

**13.** A method for controlling phytopathogenic harmful fungi, comprising treating the fungi, their habitat or the seed, the soil or the plants to be protected against fungal attack with an effective amount of the compound I and the compound II and the compound III as defined in any one of claims 1 to 9 or of the composition as defined in claim 10.

**14.** Plant propagation material, coated with the mixture as defined in any of the claims 1 to 9 or with the composition as defined in claim 10.

Europäisches Patentamt
European Patent Office
Office européen des brevets

# EUROPEAN SEARCH REPORT

Application Number
EP 13 17 2462

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 2 462 807 A1 (BASF SE [DE]) 13 June 2012 (2012-06-13) * claim 1 * ----- | 1-14 | INV. A01N37/50 A01N43/56 A01P3/00 |
| A | EP 0 900 021 A1 (BASF AG [DE]) 10 March 1999 (1999-03-10) * examples 25-28 * ----- | 1-14 | |
| A | EP 2 105 049 A1 (BAYER CROPSCIENCE AG [DE]) 30 September 2009 (2009-09-30) * claim 11 * ----- | 1-14 | |
| T | WO 2013/092224 A1 (BASF SE [DE]; RHEINHEIMER JOACHIM [DE]; TERTERYAN VIOLETA [DE]; REDLIC) 27 June 2013 (2013-06-27) * figure 1 * ----- | | |

TECHNICAL FIELDS SEARCHED (IPC)

A01N

The present search report has been drawn up for all claims

1

| Place of search | Date of completion of the search | Examiner |
|---|---|---|
| Munich | 11 October 2013 | Habermann, Jörg |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 17 2462

This annex lists the patent family members relating to the patent documents cited in the above-mentioned European search report. The members are as contained in the European Patent Office EDP file on
The European Patent Office is in no way liable for these particulars which are merely given for the purpose of information.

11-10-2013

| Patent document cited in search report | Publication date | Patent family member(s) | Publication date |
|---|---|---|---|
| EP 2462807 A1 | 13-06-2012 | NONE | |
| EP 0900021 A1 | 10-03-1999 | AT 219328 T | 15-07-2002 |
| | | AU 732260 B2 | 12-04-2001 |
| | | AU 2768397 A | 19-11-1997 |
| | | BR 9708873 A | 03-08-1999 |
| | | CA 2252677 A1 | 06-11-1997 |
| | | CN 1216443 A | 12-05-1999 |
| | | CZ 9803291 A3 | 14-04-1999 |
| | | DK 900021 T3 | 15-07-2002 |
| | | EP 0900021 A1 | 10-03-1999 |
| | | ES 2179330 T3 | 16-01-2003 |
| | | HU 9903657 A2 | 28-02-2000 |
| | | IL 126231 A | 06-12-2000 |
| | | JP 4127853 B2 | 30-07-2008 |
| | | JP 2000509061 A | 18-07-2000 |
| | | KR 20000065015 A | 06-11-2000 |
| | | MX 206103 B | 23-01-2002 |
| | | NZ 332076 A | 28-02-2000 |
| | | PL 329521 A1 | 29-03-1999 |
| | | PT 900021 E | 29-11-2002 |
| | | SK 144298 A3 | 13-04-1999 |
| | | US 6180638 B1 | 30-01-2001 |
| | | US 6245792 B1 | 12-06-2001 |
| | | WO 9740688 A1 | 06-11-1997 |
| EP 2105049 A1 | 30-09-2009 | AU 2009228635 A1 | 01-10-2009 |
| | | CA 2719734 A1 | 01-10-2009 |
| | | CN 101980606 A | 23-02-2011 |
| | | EA 201001376 A1 | 30-06-2011 |
| | | EP 2105049 A1 | 30-09-2009 |
| | | EP 2268145 A1 | 05-01-2011 |
| | | JP 2011519352 A | 07-07-2011 |
| | | KR 20100134069 A | 22-12-2010 |
| | | US 2011105331 A1 | 05-05-2011 |
| | | WO 2009118161 A1 | 01-10-2009 |
| WO 2013092224 A1 | 27-06-2013 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2012074586 W
- EP 141317 A
- EP 152031 A
- EP 226917 A
- EP 243970 A
- EP 256503 A
- EP 428941 A
- EP 532022 A
- EP 1028125 A
- EP 1035122 A
- EP 1201648 A
- EP 1122244 A
- JP 2002316902 B
- DE 19650197
- DE 10021412
- DE 102005009458
- US 3296272 A
- US 3325503 A
- WO 9846608 A
- WO 9914187 A
- WO 9924413 A
- WO 9927783 A
- WO 0029404 A
- WO 0046148 A
- WO 0065913 A
- WO 0154501 A
- WO 0156358 A
- WO 0222583 A
- WO 0240431 A
- WO 0310149 A
- WO 0311853 A
- WO 0314103 A
- WO 0316286 A
- WO 0353145 A
- WO 0361388 A
- WO 0366609 A
- WO 0374491 A
- WO 0449804 A
- WO 0483193 A
- WO 05120234 A
- WO 05123689 A
- WO 05123690 A
- WO 0563721 A
- WO 0587772 A
- WO 0587773 A
- WO 0615866 A
- WO 0687325 A
- WO 0687343 A
- WO 0782098 A
- WO 0790624 A
- WO 11028657 A
- WO 2012168188 A
- WO 2007006670 A
- WO 1177514 A
- WO 13047749 A
- WO 10069882 A
- WO 13047441 A
- WO 0316303 A
- WO 0990181 A
- WO 13007767 A
- WO 13010862 A
- WO 13024009 A
- WO 13024010 A
- US 20120149571 A
- US 200020031495 A
- US 7262151 B
- WO 2011022809 A
- WO 2008002371 A
- US 6222100 B
- WO 0182685 A
- WO 0026390 A
- WO 9741218 A
- WO 9802526 A
- WO 9802527 A
- WO 04106529 A
- WO 0520673 A
- WO 0314357 A
- WO 0313225 A
- WO 0314356 A
- WO 0416073 A
- WO 00026390 A
- WO 98002526 A
- WO 03014357 A
- WO 9200377 A
- EP 242236 A
- EP 242246 A
- US 5559024 A
- WO 02015701 A
- EP 374753 A
- WO 93007278 A
- WO 9534656 A
- EP 427529 A
- EP 451878 A
- WO 0318810 A
- WO 0352073 A
- WO 03018810 A
- EP 392225 A

**Non-patent literature cited in the description**


- *Can. J. Plant Sci.,* 1968, vol. 48 (6), 587-94
- *System Appl. Microbiol,* 2004, vol. 27, 372-379
- *Plant Physiol.,* 2008, vol. 148, 1547-1556
- **MOLLET ; GRUBEMANN.** Formulation technology. Wiley VCH, 2001
- New developments in crop protection product formulation. **KNOWLES.** Agrow Reports DS243. T&F Informa, 2005
- McCutcheon's, Vol.1: Emulsifiers & Detergents. McCutcheon's Directories, 2008, vol. 1
- Adjuvants and additives. **KNOWLES.** Agrow Reports DS256. T&F Informa UK, 2006
- **TAMMES, P. M. L.** Isoboles, a graphic representation of synergism in pesticides. *Netherl. J. Plant Pathol.,* 1964, 70
- **COLBY, S.R.** Calculating synergistic and antagonistic responses of herbicide combinations. *Weeds,* 1967, vol. 15, 20-22
- **R.S. COLBY.** Calculating synergistic and antagonistic responses of herbicide combinations. *Weeds,* 1967, vol. 15, 20-22